# EUROPÄISCHE PATENTSCHRIFT

(11) **EP 2 877 299 B1**
(45) Veröffentlichungstag und Bekanntmachung des Hinweises auf die Patenterteilung: **26.06.2019**
(21) Anmeldenummer: 13741798.6
(22) Anmeldetag: 29.07.2013
(51) Int. Cl.: B21D 39/02

(54) **BÖRDELPRESSE**
HEMMING PRESS
PRESSE À BORDER

(30) Priorität: 27.07.2012 EP 12178365; 25.03.2013 DE 202013002810 U
(43) Veröffentlichungstag der Anmeldung: 03.06.2015
(73) Patentinhaber: FFT Produktionssysteme GmbH & Co. KG, 36041 Fulda (DE)
(72) Erfinder: SCHAAFHAUSEN, Wilfried, 88045 Friedrichshafen (DE); GROHMANN, Jürgen, 88719 Stetten (DE); MOTZKAU, Günter, 88045 Friedrichshafen (DE); ZIEGLER, Felix, 88048 Friedrichshafen (DE)
(74) Vertreter: SSM Sandmair
(86) Internationale Anmeldenummer: PCT/EP2013/065932
(87) Internationale Veröffentlichungsnummer: WO 2014/016437

(56) Entgegenhaltungen:
- EP-A1- 1 297 913
- US-A- 3 376 808
- US-B1- 6 487 888

## Beschreibung

Die Erfindung betrifft eine Bördelpresse zum Umlegen eines Flansches eines Bauteils, vorzugsweise eines Fahrzeugteils wie etwa einer Fahrzeugtür. Insbesondere kann es sich um eine Bördelpresse zur Herstellung einer Falzverbindung handeln. Die Bördelpresse ist in solchen Verwendungen eine Falzpresse. Grundsätzlich kann sie jedoch auch dazu verwendet werden, einen Flansch nur ganz oder teilweise umzulegen ohne einen Fügeprozess auszuführen. Sie kommt vorzugsweise in der Serienproduktion von Fahrzeugteilen zum Einsatz.

Aus der DE 10 2009 059 676 A1 ist eine stationär angeordnete Bördelpresse bekannt, mit der Bleche durch Falzen fest miteinander verbunden werden. Die Bördelpresse weist eine stationäre Basisstruktur mit einem Bördelbett und eine Bördelformeinheit zum Umlegen eines Bauteilflansches auf. An der Bördelformeinheit ist eine Bördelform, die beim Bördeln gegen den Flansch drückt, parallel zu einer beim Bördeln auszuübenden Presskraft beweglich angeordnet. Die Bördelformeinheit ist mit der Bördelform gemeinsam quer zur Pressrichtung beweglich auf der Basisstruktur gelagert. Bestandteil der Bördelpresse ist ferner ein Niederhalter, der das Bauteil beim Bördeln niederhält und dadurch am Bördelbett fixiert. Gebördelt wird in mehreren Schritten, beispielsweise einem Vor- und einem Fertigbördelschritt. Zwischen den Bördelschritten wird der Niederhalter vom Bauteil abgehoben und für den nächsten Schritt wieder abgesenkt.

Derartige Bördel- bzw. Falzpressen benötigen große Aufstellflächen, die in Produktionsanlagen aufgrund beengter Platzverhältnisse oftmals nicht oder nur an produktionstechnisch suboptimalen Orten zur Verfügung stehen.

Um die Aufstellfläche zu verringern, schlagen die US 2004/0107559 A1 und US 2011/0048094 A1 vor, die Bördelpresse vertikal stehend aufzustellen, so dass die Pressrichtung horizontal ist. Um die Presskraft zu erzeugen, werden hydraulische oder elektrische Pressantriebe verwendet. Die motorische Kraft wird über Getriebe auf das Bördelbett oder die Bördelformeinheit übertragen.

Aus der EP 1 297 913 A1 ist eine Bördelpresse nach dem Präambel des Anspruchs 1 bekannt.

Es ist eine Aufgabe der Erfindung, eine Bördelpresse zu schaffen, die für eine Anordnung in Produktionsanlagen mit beengten Platzverhältnissen, insbesondere hinsichtlich der verfügbaren Stellflächen, sowohl in stehender als auch in liegender Anordnung des Bördelbetts besser geeignet ist. Die Erfindung geht von einer stationär angeordneten Bördelpresse zum Umlegen eines Flansches eines Bauteils aus, die eine Basisstruktur mit einem Bördelbett und eine Bördelformeinheit mit einer Bördelform, vorzugsweise mehreren Bördelformen, zum Umlegen des Flansches aufweist. Beim Umlegen des Flansches wird das Bauteil in eine Pressrichtung in das Bördelbett gepresst. Das Bördelbett weist entsprechend eine gegen die Pressrichtung gewandte Auflage für das Bauteil auf. Die Bördelpresse umfasst ferner einen Pressantrieb zur Erzeugung einer zum Umlegen des Flansches erforderlichen Presskraft. Bördelbett und Bördelform sind mittels des Pressantriebs relativ zueinander in Pressrichtung beweglich, um die Presskraft ausüben zu können. Es sind Ausführungen realisierbar, in denen sowohl die Bördelform als auch das Bördelbett relativ zur Umgebung der Bördelpresse in Pressrichtung beweglich sind, um die für das Umlegen des Flansches erforderliche Relativbeweglichkeit zu erhalten. Es sind auch Ausführungen realisierbar, in denen nur das Bördelbett relativ zur Umgebung beweglich ist. In anderen Ausführungen ist die Bördelform und bei mehreren Bördelformen sind diese mehreren Bördelformen relativ zur Umgebung und damit relativ zum Bördelbett beweglich, um den Flansch umlegen zu können, während das Bördelbett unbeweglich ist.

Nach der Erfindung ist der Pressantrieb ein fluidischer Pressantrieb, der einen mit Druckfluid, vorzugsweise Druckgas, beaufschlagbaren Balg umfasst, der bei Druckbeaufschlagung in Pressrichtung auf die Bördelformeinheit oder das Bördelbett wirkt und dadurch die Presskraft erzeugt. Der Balg kann an einer vom Bördelbett abgewandten Rückseite der Bördelformeinheit oder an einer von der Bördelform abgewandten Rückseite des Bördelbetts angeordnet sein. Er kann sich über die Länge des Bördelbetts erstrecken, so dass der Fluiddruck im Inneren des Balgs auf eine große Balgfläche wirkt. Daher kann auch ein mit Druckgas, vorzugsweise Druckluft, betriebener Druckbalg eine ausreichend große Presskraft rein fluidisch erzeugen, so dass er wie bevorzugt direkt auf das Bördelbett oder die Bördelform wirken, insbesondere unmittelbar an einer Rückseite des Bördelbetts oder der Bördelformeinheit angeordnet sein kann und es keiner Untersetzung durch ein Getriebe bedarf. Ein Druckbalg, der mit Druckluft betrieben werden kann, kann sehr einfach an eine von Hause aus in Produktionsanlagen vorhandene Druckluftversorgung angeschlossen werden. Übliche Druckluftversorgungen liefern typischerweise einen Druck von beispielsweise 6 oder 12 bar. Es muss kein Aggregat eigens für den Pressantrieb bereitgestellt werden.

Durch die Verwendung eines Druckbalgs vereinfacht sich der Pressantrieb im Vergleich zu herkömmlichen Pressantrieben erheblich. Für den Antrieb werden weniger relativ zueinander bewegliche Teile benötigt. Expandiert der Druckbalg bei Druckbeaufschlagung in Pressrichtung, kann er wie vorstehend erwähnt auch unmittelbar in Pressrichtung auf das Bördelbett oder die Bördelformeinheit wirkend angeordnet sein. Es muss lediglich eine flexible Balgwand an ihren Stirnseiten abgestützt werden, so dass sie über ihre eine Stirnseite bei Druckbeaufschlagung in Pressrichtung auf entweder das Bördelbett oder die Bördelformeinheit wirkt. Der Druckbalg kann zentral in Bezug auf die Pressachse angeordnet sein. Er kann im druckentlasteten Zustand in Pressrichtung gemessen sehr flach, etwa scheiben- oder plattenförmig sein. Führt er lediglich den zum Umlegen des Flansches erforderlichen Presshub aus, weist er auch im druckbeaufschlagten Zustand nur eine Dicke von einigen Zentimetern auf, die vorzugsweise höchstens 20 cm beträgt. Ein wesentlicher Vorteil ist auch, dass ein Druckbalg im Querschnitt nach Größe oder Form an den Verlauf des umzulegenden Flansches angepasst werden kann. Auf diese Weise kann die Presskraft in Pressrichtung direkter, mit geringerem Querversatz und entsprechend geringen Biegemomenten, in den umzulegenden Flansch eingeleitet werden.

Der Kraftfluss kann vom Druckbalg bis zur Auflage, die das Bördelbett dem Bauteil bietet, axial direkter, sozusagen gerader, als bei bekannten Pressantrieben verlaufen. Ein etwaiger Querversatz im Kraftfluss und damit einhergehende Hebelarme und Biegemomente kann/können verringert werden.

Im Idealfall weist der Druckbalg eine wirksame Balgfläche auf, deren Außenumfang an den Verlauf des Bördelbetts und dementsprechend an den Verlauf des umzulegenden Flansches angepasst ist. Die wirksame Balgfläche ist die Querschnittsfläche des Druckbalgs, auf die der im Inneren des Druckbalgs herrschende Druck wirkt. Der Idealfall, nämlich eine exakte Überlappung des Außenumfangs der wirksamen Balgfläche und der axialen Projektion der Auflage des Bördelbetts auf die wirksame Balgfläche wird in der Praxis allerdings wegen der damit verbundenen höheren Herstellkosten des Druckbalgs der Ausnahmefall sein. Die wirksame Balgfläche wird vielmehr eine einfache Querschnittsform aufweisen, beispielsweise ein Kreis, eine Ellipse mit ungleichen Hauptachsen oder ein anderes, vom Kreis abweichendes Oval, oder ein Rechteckt, ein Quadrat oder anderes Polygon sein. Ein Druckbalg mit einer wirksamen Balgfläche in Form eines Kreises ist nicht zuletzt der einfachen Herstellbarkeit wegen ein bevorzugtes Ausführungsbeispiel.

Folgt der äußere Umfang der wirksamen Balgfläche dem Verlauf der Auflage des Bördelbetts und somit dem Verlauf des umzulegenden Flansches nicht, wie dies in den meisten Anwendungen der Fall sein wird, ist es vorteilhaft, wenn der umzulegende Flansch, ersatzweise das Bördelbett, nur in einem geringen Maße außerhalb der wirksamen Balgfläche verläuft. Entsprechend ist von Vorteil, wenn das Verhältnis von überlappter zu nicht überlappter Bördelbettfläche gering ist. Als die Bördelbettfläche wird in diesem Zusammenhang die auf die wirksame Balgfläche axial projizierte Fläche des Bördelbetts verstanden, die vom äußeren Umfang der das Bauteil stützenden Auflage des Bördelbetts begrenzt wird. Die Auflage ist eine Stirnfläche des Bördelbetts, auf die das Bauteil beim Bördeln gedrückt wird. Der äußere Umfang der Auflage wird in den meisten Ausführungen auch der äußere Umfang der Stirnfläche des Bördelbetts sein, auf oder an der das Bauteil beim Bördeln liegt. Steht dieser äußere Umfang jedoch beim Bördeln über den Rand des Bauteils vor, wird der äußere Umfang zur Ermittlung des Verhältnisses an den äußeren Rand des Bauteils zurückverlegt. Läuft der Flansch am Rand eines Bauteils nicht vollständig um, wie etwa im Fensterbereich einer Fahrzeugtür, werden die freien Flanschenden zur Ermittlung der Bördelbettfläche durch eine gerade Linie miteinander verbunden, die dann die Bördelbettfläche im betreffenden Bereich begrenzt. Läuft die Auflage des Bördelbetts nicht vollständig um, in sich zurück, werden entsprechend die Endpunkte der in diesem Fall um die Presseachse nur teilweise umlaufenden Auflagefläche für den Vergleich durch eine gerade Linie verbunden. Das Verhältnis von überlappter zu nicht überlappter Bördelbettfläche beträgt in bevorzugten Ausführungen wenigstens 0.5, bevorzugt ist es größer als 0.5.

Der Pressantrieb kann einen einzigen Druckbalg oder mehrere Druckbälge der erläuterten oder beanspruchten Art umfassen, was auch den Fall einschließt, dass der Pressantrieb aus nur einem einzigen Druckbalg oder aus mehreren Druckbälgen dieser Art besteht. Sind mehrere Druckbälge vorgesehen, beispielsweise zwei Druckbälge, können diese entweder in einander entgegengesetzte Pressrichtungen oder in die gleiche Pressrichtung wirkend angeordnet sein. In entgegengesetzte Pressrichtungen wirkende Druckbälge sind vorzugsweise an einem gemeinsamen Gestell in einer Anordnung Rücken-an-Rücken angeordnet. In die gleiche Pressrichtung wirkende Druckbälge können in Pressrichtung nebeneinander oder übereinander, vorzugsweise unmittelbar nebeneinander oder übereinander, angeordnet sein. Die mehreren Druckbälge, können in beiden Ausführungen, nämlich in die gleiche Richtung oder in einander entgegengesetzte Richtungen wirkend, vorzugsweise unabhängig voneinander mit einem Druckfluid beaufschlagt oder unabhängig voneinander im Druck entlastet werden. Auch in die gleiche Richtung wirkende Druckbälge können dazu eingerichtet sein, gleichzeitig oder nacheinander mit dem Druckfluid beaufschlagt oder im Druck entlastet zu werden.

Die Basisstruktur und die Bördelformeinheit können in Ausführungen zumindest im Wesentlichen vertikal stehend aufgestellt oder in einem Gestell aufstellbar gelagert sein. In der zumindest im Wesentlichen vertikalen Ausrichtung von Basisstruktur und Bördelformeinheit weist das Bördelbett gegen die entsprechend zumindest im Wesentlichen horizontale Pressrichtung. Bei Bördelpressen weisen die Basisstruktur und die Bördelformeinheit im geschlossenen Zustand der Presse üblicherweise zusammen eine in Pressrichtung gemessene maximale Dicke auf, die deutlich kleiner als ihre quer zur Pressrichtung gemessene maximale Breite ist. Dieser Umstand kann zur Verringerung der zur Aufstellung der Bördelpresse erforderlichen Stellfläche genutzt werden, indem das Bördelbett nicht wie üblich liegend nach oben weisend, sondern zumindest im Wesentlichen vertikal stehend zur Seite weisend angeordnet ist oder durch eine bewegliche Lagerung in einem Gestell in diese Ausrichtung bewegt werden kann. In einer Draufsicht auf die Bördelpresse wird dadurch die Grundfläche eines die Bördelpresse umhüllenden Zylinders und in diesem Sinne die für die Aufstellung der Presse erforderliche Stellfläche verringert. Da die Bauteile nicht hängend, sondern jeweils in vertikaler Ausrichtung in die Bördelpresse eingelegt werden können, vereinfacht sich auch die Handhabung mit einem Roboter oder anderen Aktor. Bei stehend ausgerichteter Bördelpresse können Arbeiten am Bördelbett oder der Bördelform leichter, insbesondere ergonomisch günstiger durchgeführt werden.

Die Erfindung begünstigt eine kompakte Bauweise der Presse aber auch bei liegender Anordnung, also bei vertikaler Pressrichtung. Der Erfindung kommt diesbezüglich zu Gute, dass der Druckbalg die Presskraft ohne Zwischenschaltung eines Übertragungs- oder Synchronisiergetriebes oder dergleichen und über eine im Vergleich zum Stand der Technik große wirksame Fläche, die wirksame Balgfläche, einleiten kann. So kann das Bördelbett oder die Bördelformeinheit über dem Druckbalg angeordnet sein und auf dem Druckbalg ruhen, so dass der Druckbalg bei Druckbeaufschlagung die betreffende Struktur, entweder das Bördelbett oder die Bördelformeinheit, relativ zur anderen Struktur anhebt, um einen Presshub auszuführen. Bevorzugt ist das Bördelbett über dem Druckbalg angeordnet, so dass dessen Auflagefläche nach oben weist und das jeweils zu Bördelnde Bauteil von oben auf das Bördelbett gelegt werden kann. In Modifikationen kann das Bördelbett auch schräg gestellt sein, so dass die Pressrichtung unter einem Winkel größer als 0° zur Horizontalen weist. Die in derartigen Ausrichtungen auftretenden Kräfte quer zur Pressrichtung werden vorzugsweise durch eine Stütz- oder Führungseinrichtung abgefangen, um die flexible Balgwand von Querkräften zu entlasten.

Die Bördelpresse ist vorzugsweise dafür eingerichtet, flache Bauteile zu bördeln, also Bauteile, die eine in Pressrichtung gemessene maximale Tiefe aufweisen, die kleiner als ihre quer zur Pressrichtung gemessene Länge oder Breite ist. Typische Beispiele sind Fahrzeugteile, insbesondere Fahrzeuganbauteile wie etwa Fahrzeugtüren, Schiebedächer, Motorhauben und Heckklappen, aber auch Karosserieteile wie etwa eine Fahrzeugseitenwand, ein Schweller oder ein Kotflügel.

Die Bördelform ist an der Bördelformeinheit angeordnet. Die Bördelformeinheit kann zwar grundsätzlich die Bördelform in einem Stück mit bilden, bevorzugter umfasst die Bördelformeinheit jedoch eine Trägerstruktur, und die Bördelform ist separat gefertigt und an der Trägerstruktur montiert. Die Bördelform kann aus mehreren zu einer Einheit gefügten Teilen bestehen, zweckmäßigerweise handelt es sich jedoch um eine einstückig geformte Struktur. Die Bördelform ist in bevorzugten Ausführungen dem Verlauf des Flansches angepasst geformt. Sie kann daher beispielsweise einen zumindest abschnittsweise gekrümmten Verlauf aufweisen. Sie kann hierbei nur in einer Dimension oder auch zweidimensional gekrümmt sein. Für das Bördelbett gilt sinngemäß das Gleiche.

Um die zum Umlegen des Flansches erforderliche Relativbewegung von Bördelform und Bördelbett in Pressrichtung zu bewirken, kann die Bördelform zwar grundsätzlich in Pressrichtung beweglich an der Bördelformeinheit abgestützt sein, bevorzugt findet die Relativbewegung in Pressrichtung jedoch zwischen dem Bördelbett und der Bördelformeinheit statt. In derartigen Ausführungen sind das Bördelbett und die Bördelformeinheit mittels des Pressantriebs relativ zueinander in Pressrichtung beweglich, um die Presskraft auszuüben. Obgleich zum Erhalt der Relativbeweglichkeit von Bördelformeinheit und Bördelbett die Bördelformeinheit unabhängig von der Basisstruktur in oder an einem eigenen Gestell oder das Bördelbett unabhängig von der Bördelformeinheit in oder an einem Gestell der Basisstruktur relativ zur Umgebung beweglich gelagert sein kann oder jeweils sein können, wird Ausführungen der Vorzug gegeben, in denen die Bördelformeinheit an der Basisstruktur oder das Bördelbett an einer Stützstruktur in Pressrichtung beweglich gelagert ist. Das Wort "oder" wird hier wie stets von der Erfindung im üblichen logischen Sinne eines "inklusiv oder" verstanden, umfasst also sowohl die Bedeutung von "entweder ... oder" als auch die Bedeutung von "und", soweit sich aus dem jeweils konkreten Zusammenhang nicht ausschließlich nur eine dieser beiden Bedeutungen ergeben kann. In Bezug auf beispielsweise die bevorzugte Relativbeweglichkeit von Bördelbett und Bördelformeinheit bedeutet dies, dass in einer ersten Variante die Bördelformeinheit an der Basisstruktur in Pressrichtung beweglich gelagert und das Bördelbett relativ zur Umgebung unbeweglich ist, während in einer zweiten Variante das Bördelbett an der Stützstruktur relativ zur Bördelformeinheit beweglich gelagert und die Bördelformeinheit relativ zur Umgebung unbeweglich ist. In einer dritten Variante können die Bördelformeinheit an der Basisstruktur und das Bördelbett an einer Stützstruktur relativ zueinander und jeweils relativ zur Umgebung beweglich gelagert sein.

Zweckmäßig ist, wenn die Bördelformeinheit eine Trägerstruktur umfasst und die Bördelform relativ zur Trägerstruktur quer zur Pressrichtung beweglich ist. Die Bördelpresse umfasst in derartigen Ausführungen einen Bördelformantrieb, der mit der Bördelform gekoppelt ist, um die Bördelform relativ zur Trägerstruktur der Bördelformeinheit quer zur Pressrichtung zu bewegen. Dies ermöglicht Zu- und Abstellbewegungen der Bördelform, um das Bauteil einlegen oder den Flansch in beispielsweise zwei oder mehr Bördelschritten sequentiell um jeweils einen bestimmten Winkel umlegen zu können. Der Bördelformantrieb kann insbesondere an der Trägerstruktur der Bördelformeinheit angeordnet sein.

Die Bördelform macht in allen genannten Varianten die Relativbewegung der Bördelformeinheit, den Presshub und den Rückhub, mit. Die Bördelform kann daher an der Bördelformeinheit in Pressrichtung unbeweglich abgestützt sein, beispielsweise in einem Anschlagkontakt. Da die im Vergleich zur Bördelform größere und massivere Bördelformeinheit den Presshub ausführt und für Querhübe der Bördelform im Vergleich zur Presskraft nur geringe Kräfte aufzubringen sind, wird eine einfache, robuste Bördelformeinheit geschaffen.

Umfasst die Bördelpresse wie bevorzugt mehrere Bördelformen, sind diese jeweils Bestandteil der Bördelformeinheit. Wird mit der Bördelformeinheit nur ein einziger Bördelschritt ausgeführt, können die Bördelformen an der Bördelformeinheit unbeweglich angeordnet sein. Bevorzugter umfasst die Bördelformeinheit wie bereits erwähnt eine Trägerstruktur, an der die Bördelformen jeweils beweglich abgestützt sind. Zu der wenigstens einen Bördelform gemachte Ausführungen gelten vorzugsweise gleichermaßen für jede optionale weitere Bördelform der Bördelformeinheit. Der Bördelformantrieb umfasst vorteilhafterweise mehrere fluidisch, bevorzugt pneumatisch, oder elektrisch betriebene Antriebseinheiten, nämlich für die beweglichen Bördelformen jeweils eine eigene Antriebseinheit, die nur mit der zugeordneten Bördelform gekoppelt ist. Die Verwendung mehrerer Bördelformen ist insbesondere dann von Vorteil, wenn der umzulegende Flansch in einer in Pressrichtung gesehenen Draufsicht auf das Bauteil nicht einfach gerade ist, sondern wenigstens zwei Flanschabschnitte aufweist, die nicht auf einer gemeinsamen geraden Linie liegen. So kann der Flansch in der Draufsicht gesehen einen gekrümmten oder polygonalen Verlauf aufweisen, oder es muss an unterschiedlichen Seiten eines Bauteilrands gebördelt werden. Dies ist bei den bereits genannten Bauteilbeispielen wie etwa einer Fahrzeugtür oder Heckklappe typischerweise der Fall. Der Flansch kann beispielsweise in der Draufsicht gesehen um einen zentralen Bereich des Bauteils umlaufen, vollständig oder teilweise, gegebenenfalls auch abschnittsweise unterbrochen sein. Um einen derartigen Flansch in mehreren Bördelschritten um jeweils einen bestimmten Winkel mit der gleichen Bördelformeinheit umlegen zu können, umfasst die Bördelformeinheit wie gesagt in bevorzugten Ausführungen mehrere relativ zu einer Trägerstruktur der Bördelformeinheit und auch relativ zueinander quer zur Pressrichtung bewegliche Bördelformen, die an der Trägerstruktur dem Verlauf des umzulegenden Flansches folgend angeordnet sind.

Für die Relativbeweglichkeit von Bördelformeinheit und Bördelbett ist vorteilhaft, wenn an der Basisstruktur ein in Pressrichtung erstrecktes Führungselement und an der Bördelformeinheit ein in Pressrichtung erstrecktes Führungsgegenelement vorgesehen ist und die Basisstruktur und die Bördelformeinheit mittels eines Führungseingriffs von Führungs- und Führungsgegenelement beim Presshub und Rückhub in Pressrichtung relativ zueinander geführt werden. Die Relativbewegung kann insbesondere eine Linearbewegung sein. Das Führungselement und das Führungsgegenelement können sich entsprechend jeweils in Pressrichtung gerade erstrecken. Ist die Bördelformeinheit im Führungseingriff von Führungselement und Führungsgegenelement an der Basisstruktur gelagert, wird ihr Gewicht zumindest zu einem überwiegenden Teil im Führungseingriff vom Führungselement aufgenommen. Führt das Bördelbett eine Pressbewegung aus, kann das Bördelbett im Führungseingriff von Führungs- und Führungsgegenelement am Führungsgegenelement der Bördelformeinheit oder einem Führungsgegenelement der genannten Stützstruktur gelagert sein, so dass zumindest ein Teil des Gewichts des Bördelbetts an der Bördelformeinheit oder der Stützstruktur abgestützt wird. Bevorzugt sind in der erläuterten Weise mehrere Führungselemente und Führungsgegenelemente um das Bördelbett verteilt angeordnet, die jeweils paarweise miteinander in einem Führungseingriff sind, um die Bördelformeinheit oder das Bördelbett bei der Pressbewegung in Pressrichtung zu führen.

Um das Bauteil beim Bördeln im Bördelbett nieder zu halten, kann ein Niederhalter vorgesehen sein, der wie üblich nur die Funktion des Niederhaltens ausübt. Vorteilhafter ist allerdings ein Niederhalter, der nicht nur diese Funktion ausüben kann, sondern eine Befestigungseinrichtung für die Befestigung an einem im Raum beweglichen Aktor, wie etwa ein Roboterarm eines Industrieroboters, und eine Halteeinrichtung zum Halten des Bauteils aufweist, beispielsweise einen pneumatischen Sauger oder mechanischen Greifer. Das Bauteil kann mittels solch eines Niederhalters zur Bördelpresse bewegt, in das Bördelbett gelegt und beim Bördeln im Bördelbett nieder gehalten werden. Vorteilhafterweise kann es auch mittels des Niederhalters wieder aus dem Bördelbett genommen werden. Der Niederhalter kann in derartigen Anführungen nacheinander mehrere Bauteile aufnehmen, halten, im Bördelbett positionieren, niederhalten und optional auch wieder aus dem Bördelbett nehmen und ablegen, um anschließend das nächste Bauteil aufnehmen zu können. Er kann während dieser Tätigkeiten am Aktor verbleiben. Der Niederhalter ist somit auch Einlegewerkzeug, bevorzugt auch noch Aufnahme- oder Greifwerkzeug, indem er ein zu bördelndes Bauteil aufnehmen kann. Er kann auch noch Ablagewerkzeug sein, indem er das gebördelte Bauteil aus der Bördelpresse nimmt und in einer Bauteilablage für gegebenenfalls eine weitere Bearbeitung oder eine Montage ablegt.

Ein derartiger Niederhalter, insbesondere die Halteeinrichtung, kann dafür eingerichtet sein, geschachtelte Teile eines zu fügenden Bauteils, wie etwa ein Außenteil und ein Innenteil einer Fahrzeugtür oder Heckklappe oder eines Schiebedachs, aufzunehmen und im geschachtelten Zustand in das Bördelbett einzulegen. Der Niederhalter, insbesondere die Halteeinrichtung, kann auch dafür eingerichtet sein, die zu schachtelnden Teile solch eines Bauteils einzeln aufzunehmen und nacheinander in das Bördelbett bzw. die Bördelpresse einzulegen und erst in der Bördelpresse zu schachteln. Dies ist beispielsweise vorteilhaft, wenn im Bereich der Bördelpresse keine Schachtelstation vorhanden ist, möglicherweise aus Platzgründen gar nicht angeordnet werden kann. Schließlich kann der Niederhalter, insbesondere die Halteeinrichtung, auch dafür eingerichtet sein, wahlweise entweder die Teile derartiger Bauteile einzeln aufzunehmen und in der Presse zu schachteln oder aber die Teile im bereits geschachtelten Zustand gemeinsam aufzunehmen und einzulegen. Für beide Verfahrensweisen ist von Vorteil, wenn die Halteeinrichtung einen oder mehrere Sauger oder einen oder mehrere mechanische Greifer aufweist, mit dem oder denen eines der Einzelteile eines Schachtelverbunds mittels Zugkraft gegen ein anderes Einzelteil des Schachtelverbunds gezogen und dadurch an dieses andere Einzelteil angelegt werden kann. Dieses andere Einzelteil kann dabei beispielsweise an einem Niederhalterand des Niederhalters abgestützt oder mit einem oder mehreren anderen Greifern, beispielsweise einem oder mehreren Saugern oder einem oder mehreren mechanischen Greifern, gehalten werden.

In bevorzugten Ausführungen wird ein zum Einlegen verwendbarer Niederhalter beim Einlegen relativ zum Bördelbett geführt. Dies kann zwar grundsätzlich der Aktor besorgen, bevorzugter wird der Aktor jedoch von dieser Aufgabe entlastet und der Niederhalter direkt geführt. So kann die Bördelformeinheit oder die Basisstruktur ein Führungselement und der Niederhalter ein Führungsgegenelement aufweisen, um den Niederhalter beim Einlegen des Bauteils in einem Führungseingriff dieses Führungselements und des Führungsgegenelements des Niederhalters relativ zum Bördelbett zu führen, bis das Bauteil im Bördelbett liegt. Bevorzugt wird der Niederhalter in Pressrichtung geführt. Die Führung kann eine Linearführung sein. Das Führungselement für den Niederhalter kann insbesondere das bereits erläuterte Führungselement für die Bördelformeinheit sein, das dann in doppelter Führungsfunktion zum einen die Bördelformeinheit beim Presshub und zum anderen den Niederhalter beim Einlegen führt. Ein Führungselement für den Niederhalter kann aber auch zusätzlich zu einem Führungselement für die Bördelformeinheit vorgesehen sein. Bevorzugt weist der Niederhalter mehrere Führungsgegenelemente auf, mit denen er beim Einlegen des Bauteils jeweils in einem Führungseingriff mit einem zugeordneten Führungselement der Basisstruktur oder der Bördelformeinheit ist.

Die Basisstruktur oder die Bördelformeinheit kann ein Spannelement und der Niederhalter ein Spanngegenelement aufweisen, die miteinander in einen Spanneingriff bringbar sind, um den Niederhalter zum Niederhalten des Bauteils im Spanneingriff relativ zum Bördelbett in Pressrichtung zu spannen. Hierdurch wird der Aktor, vorzugsweise ein Arm eines Roboters wie etwa eines üblichen Industrieroboters, entlastet. Dies kann soweit gehen, dass der Aktor vom Niederhalter gelöst werden kann, also für das Niederhalten nicht benötigt wird und zur Erfüllung einer anderen Funktion zur Verfügung steht. Bevorzugt weist die Basisstruktur oder die Bördelformeinheit ein oder mehrere erste Spannelemente und der Niederhalter ein oder mehrere zweite Spannelemente, also Spanngegenelemente, auf, die jeweils paarweise in einen Spanneingriff gebracht werden können, um im jeweiligen Spanneingriff den Niederhalter relativ zum Bördelbett in Pressrichtung zu spannen. Vorzugsweise sind mehrere erste Spannelemente längs des Bördelbetts oder der einen oder mehreren Bördelformen verteilt angeordnet, um durch den Spanneingriff eine längs des Bördelbetts gleichmäßige Niederhaltekraft zu erzeugen. Das oder die ersten Spannelemente kann oder können vorteilhafterweise an dem wenigstens einen oder an den mehreren Führungselementen angeordnet, grundsätzlich aber auch separat davon vorgesehen sein. Zweckmäßig ist eine Anordnung in einem Bereich des jeweiligen Führungselements vom Bördelbett aus gesehen hinter der Bördelform.

Erstes Spannelement und zweites Spannelement können insbesondere so geformt sein, dass eine in Pressrichtung wirkende Spannkraft und somit die Niederhaltekraft des Niederhalters im Spanneingriff durch Keilwirkung erzeugt wird. So kann der Spanneingriff beispielsweise in der Art eines Schraubeingriffs gebildet sein, indem das oder die ersten Spannelemente mit dem oder den zweiten Spannelementen jeweils wie Schraube und Mutter zusammenwirken, wobei eines aus erstem Spannelement und zweitem Spannelement um eine Drehachse gegen die Pressrichtung der Bördelform(en) ansteigt, vergleichbar einem Gewindegang, und das andere aus erstem Spannelement und zweitem Spannelement auf der ansteigenden Fläche oder Linie gleitet, wenn das erste Spannelement und das zugeordnete zweite Spannelement relativ zueinander um diese Drehachse verdreht werden.

In ebenfalls bevorzugten Ausführungen ist eine Spannkupplung vorgesehen, mittels welcher der Niederhalter relativ zum Bördelbett ohne Drehbewegung gespannt werden kann. Die Spannkupplung weist eine erste Kupplungsstruktur und eine mit der ersten Kupplungsstruktur verbindbare und von dieser wieder lösbare zweite Kupplungsstruktur auf. Das erste Spannelement ist Bestandteil der ersten Kupplungsstruktur, und das zweite Spannelement ist Bestandteil der zweiten Kupplungsstruktur. Vorzugsweise weist eine der Kupplungsstrukturen eine Aufnahme auf, in welche die andere Kupplungsstruktur in oder gegen die Pressrichtung einfahren kann. Eine der Kupplungsstrukturen, vorzugsweise diejenige mit der Aufnahme, lagert eines oder mehrere der ersten Spannelemente quer zur Pressrichtung beweglich und stützt das jeweilige erste Spannelement in Bezug auf die Pressrichtung. Die andere der Kupplungsstrukturen weist eine oder mehrere Vertiefungen oder Ausnehmungen auf, welche das oder jeweils ein zweites Spannelement bildet oder bilden. Ist die eine der Kupplungsstrukturen in die Aufnahme der anderen Kupplungsstruktur eingefahren, kann oder können sich das oder die querbeweglichen Spannelemente in Querrichtung in die eine oder mehreren Vertiefungen oder Ausnehmungen bewegen und dadurch den Niederhalter relativ zum Bördelbett lösbar fixieren. Die Spannelemente sind vorteilhafterweise so geformt, dass sie im Zusammenwirken eine Keilwirkung mit einer resultierenden axialen Kraft erzeugen und dadurch den Niederhalter in Richtung auf das Bördelbett spannen.

Das oder die querbeweglichen Spannelemente kann oder können mittels einer oder mehreren mechanischen Federn in die Vertiefung oder Ausnehmung oder die jeweils zugeordnete Vertiefung gedrückt werden. In einer Weiterentwicklung ist die Spannkupplung fluidisch, vorzugsweise pneumatisch, betätigbar. In der Weiterentwicklung ist die Kupplungsstruktur, die das oder die querbeweglichen Spannelemente lagert, mit einem Druckfluid, vorzugsweise Druckluft, beaufschlagbar, um das oder die querbeweglichen Spannelemente mittels des Druckfluids in die eine oder mehreren zugeordneten Vertiefungen der anderen Kupplungsstruktur zu drücken. Das oder die querbeweglichen Spannelemente kann oder können von einer oder mehreren mechanischen Federn mit einer rückstellenden Federkraft beaufschlagt werden, derart, dass das oder die querbeweglichen Spannelemente mittels Druckfluid in den Spanneingriff und bei Druckentlastung durch Federkraft wieder aus dem Spanneingriff bewegt werden.

Ist die Bördelpresse dafür eingerichtet, den Flansch in zwei oder mehr Bördelschritten umzulegen, kann zusätzlich zur Bördelform eine weitere Bördelform so vorgesehen sein, dass eine dieser zwei Bördelformen einen der Bördelschritte und die andere Bördelform einen anderen der Bördelschritte ausführt. Die eine Bördelform kann eine Vorbördelform zum Vorbördeln und die andere eine Fertigbördelform zum Fertigbördeln sein. Die Bördelflächen der Bördelformen können in Pressrichtung übereinander angeordnet sein. Die mehreren Bördelformen können insbesondere an einem gemeinsamen Bördelformträger angeordnet sein. Die Bördelformeinheit und die Bördelform können alternativ jedoch auch dafür eingerichtet sein, mehrere Bördelschritte nacheinander auszuführen. Die Bördelform weist zu diesem Zweck eine erste Bördelfläche zum Umlegen des Flansches um einen ersten Winkel und eine weitere, zweite Bördelfläche zum Umlegen des Flansches um einen weiteren Winkel auf. Die erste Bördelfläche kann quer zur Pressrichtung und zum Flansch über die zweite Bördelfläche hinaus ragen, in Querrichtung also neben der zweiten Bördelfläche angeordnet sein. Die Bördelform kann mehrere Bördelflächen grundsätzlich aber auch in Pressrichtung übereinander aufweisen.

Der Niederhalter kann zwischen zwei am gleichen Bauteil ausgeführten Bördelschritten vom Bauteil abgehoben werden. Hierdurch geht jedoch die Fixierung am Bördelbett verloren, oder es muss anderweitig für eine Fixierung des Bauteils gesorgt werden.

In erfindungsgemäßen Ausführungen sind die Bördelform und ein Niederhalter so geformt, dass mit der gleichen Bördelform nacheinander wenigstens zwei Bördelschritte, vorzugsweise unter Einschluss eines Fertigbördelschritts ausgeführt werden können, der Niederhalter aber dennoch über beide Bördelschritte hinweg ständig in der gleichen Niederhalteposition verbleiben kann, auch zwischen den wenigstens zwei Schritten. Der Niederhalter und die Bördelform sind so geformt, dass die Bördelform bei zumindest einem der Bördelschritte den Niederhalter quer zur Pressrichtung und quer zum Flansch überlappen kann. Der Niederhalter weist einen Niederhalterand zum Kontaktieren des Bauteils und einen an den Niederhalterand grenzenden Bereich auf. Bevorzugt ist der Niederhalter in dem Bereich, der an den Niederhalterand grenzt, also vom Flansch aus gesehen hinter dem Niederhalterand gelegen ist, so geformt, dass die Bördelform den Niederhalterand überlappen, diesen also beim Bördeln übergreifen kann, während der Niederhalterand auch im überlappten Randabschnitt das Bauteil im Bördelbett niederhält.

Der Niederhalter oder die Bördelform kann oder können jeweils so geformt sein, dass sie im überlappenden Zustand ineinandergreifen oder einander durchgreifen, beispielsweise kammartig, oder die Bördelform den Niederhalter nur übergreift. Der Niederhalter kann in dem an den Niederhalterand grenzenden Bereich einen quer zur Pressrichtung und dem Flansch vorstehenden und einen quer zur Pressrichtung und dem Flansch zurückstehenden Bereich und die Bördelform ebenfalls einen quer zur Pressrichtung und dem Flansch vorstehenden und einen quer zur Pressrichtung und dem Flansch zurückstehenden Bereich aufweisen, so dass die Bördelform und der Niederhalter beim Bördeln quer zur Pressrichtung und zum Flansch ineinander greifen oder einander durchgreifen können. So kann der Niederhalter einen oder mehrere Durchgänge aufweisen und die Bördelform den Niederhalter, vorzugsweise nur in dem an den Niederhalterand grenzenden Bereich, durchgreifen, beispielsweise kammartig mit mehreren Abschnitten gleichzeitig. Der Niederhalter kann der Bördelform zugewandt stattdessen auch eine oder mehrere Taschen aufweisen, ebenfalls bevorzugt nur in dem an den Niederhalterand grenzenden Bereich, und die Bördelform in die Tasche(n) nur eingreifen. Der Niederhalter kann einen oder mehrere Durchgänge auch neben einer oder mehreren Taschen aufweisen. Um die Überlappbarkeit zu erhalten, kann der Niederhalter anstatt oder zusätzlich zu einem oder mehreren Durchgängen oder einer oder mehreren Taschen in dem an den Niederhalterand grenzenden Bereich von der Bördelform weggekröpft sein, so dass die Bördelform den Niederhalterand beim Bördeln an seiner Rückseite überlappen, also übergreifen kann.

Die Bördelformeinheit kann einen Durchgang aufweisen, der sich in Pressrichtung durch die Bördelformeinheit erstreckt und durch den das Bauteil von einer dem Bördelbett abgewandten Rückseite der Bördelformeinheit aus in das Bördelbett eingelegt werden kann, vorzugsweise mittels des Niederhalters. Von Vorteil ist solch eine Ausgestaltung insbesondere für Bauteile, die an einem äußeren Rand umlaufend oder zumindest an mehreren Seiten gebördelt werden, deren umzulegender Flansch also zusammenhängende oder voneinander separate Flanschabschnitte aufweist, die zueinander nicht parallel sind und sich in ihrer Gesamtheit insbesondere über einen Winkelbereich von wenigstens 90° oder 180° oder 270° oder mehr erstrecken, beispielsweise bogenförmig mit einem oder mehreren runden Abschnitten. Bördelformeinheit und Bördelbett können auch beim Bördeln solcher Bauteile, wie zu bevorzugten Ausführungen erläutert, relativ zueinander die Pressbewegung ausführen, in allen anderen Freiheitsgraden der Bewegung aber über eine Serie von Bauteilen gesehen unbeweglich miteinander verbunden sein. Weist die Bördelformeinheit den Durchgang auf, muss nicht jedes Mal zum Einlegen des jeweils zu bördelnden Bauteils die Bördelformeinheit so weit von dem Bördelbett oder das Bördebett so weit von der Bördelformeinheit wegbewegt, beispielsweise abgeschwenkt oder linear weggefahren werden, dass das betreffende Bauteil von der Seite der Bördelpresse her eingelegt werden kann. Bördelformeinheit und Bördelbett können relativ zueinander ihre Positionen beibehalten, die sie auch nach dem Einlegen des Bauteils, beispielsweise unmittelbar vor Ausführung eines Bördelhubs, relativ zueinander einnehmen. Es muss beispielsweise kein Führungseingriff gelöst werden, wie etwa ein Führungseingriff, in dem die Bördelformeinheit oder das Bördelbett bei der Ausübung des Presshubs geführt wird oder gegebenenfalls jeweils geführt werden. Vorteilhaft ist auch, dass das Bauteil durch den Durchgang hindurch zumindest im Wesentlichen parallel zur Pressrichtung eingelegt, d. h. bis gegen das Bördelbett bewegt werden kann.

Der Durchgang wird von einem Innenumfang der Bördelformeinheit, vorzugsweise einer Bördelform-Trägerstruktur für die eine oder mehreren Bördelformen, begrenzt. In einer Draufsicht auf das Bördelbett, in Pressrichtung, verläuft der Innenumfang radial außerhalb des Bördelbetts und erstreckt sich außen zumindest teilweise, vorzugsweise über 360° vollständig umlaufend um das Bördelbett. Die Bördelform oder mehreren Bördelformen ragen beim Bördeln in Querrichtung über den Innenumfang vor, vorzugsweise ist oder sind sie jeweils aus einer zurückgezogenen in eine vordere Position und wieder zurück querbeweglich. Die Bördelform oder mehreren Bördelformen ist oder sind beim Bördeln vorteilhafterweise am Innenumfang, d. h. nahe einer Kante, vorzugsweise unmittelbar an einer Kante des Innenumfangs abgestützt. Bevorzugt folgt der Innenumfang der Kontur des umzulegenden Flansches in der Pressrichtungs-Draufsicht in geringem Abstand und erstreckt sich in diesem Sinne konturnah. Der Abstand ist vorteilhafterweise über die Länge des umzulegenden Flansches konturnah so bemessen, dass zwar das Bauteil durch den Durchgang bewegt werden kann, bevorzugt von einem in mehreren Achsen beweglichen Roboterarm oder einem anderen im Raum beweglichen Aktor, die Bördelform oder -formen beim Bördeln wegen der entsprechend konturnahen Abstützung am Innenumfang aber dennoch nur geringen Biegekräften unterliegen.

Die Aufbringung der Presskraft mittels Druckbalg wirkt vorteilhaft mit dem konturnahen Innenumfang und somit konturnahen Durchgang zusammen. Bei entsprechender Gestaltung der Stirnfläche des Druckbalgs bzw. der wirksamen Balgfläche vom Druckbalg bis zur Abstützung der Bördelform(en) kann der Kraftfluss beim Bördeln im Vergleich zum Stand der Technik enger an die Richtung der Presskraft angenähert und die Summe der im Kraftfluss auftretenden Biegekräfte verringert werden. Die Presskraft kann auf geraderem Weg übertragen werden.

Die Bördelform oder mehrere an der Bördelformeinheit angeordnete Bördelformen kann oder können sich längs eines Rands der Bördelformeinheit erstrecken und den Durchgang seitlich begrenzen. Wenn das Bauteil positioniert im Bördelbett liegt und niedergehalten wird, kann die Bördelform oder können die mehreren Bördelformen quer zur Pressrichtung über den Flansch und anschließend in Pressrichtung gegen den Flansch bewegt werden, um diesen umzulegen. Die Bördelform oder die mehreren Bördelformen kann oder können gemeinsam vorteilhafterweise quer zur Pressrichtung relativ zu einer den Durchgang aufweisenden Trägerstruktur der Bördelformeinheit nach innen, in Richtung auf einen zentralen Bereich des Durchgangs über einen Innenumfang der Trägerstruktur vorbewegt werden. Vorteilhaft ist, insbesondere für ein Fertigbördeln, wenn bei Anordnung mehrerer Bördelformen diese soweit nach innen über den inneren Umfangsrand der Trägerstruktur vorbewegt werden können, dass sie über die Länge des umzulegenden Flansches in der Draufsicht gesehen eine geschlossene, lückenlose Kontur bilden, mit der sie beim Bördeln gegen den Flansch drücken. Eine Trägerstruktur der Bördelformeinheit, an der die Bördelform(en) abgestützt ist oder sind, kann den Durchgang vollständig umrahmen. Die Trägerstruktur kann im Ganzen als Rahmen mit im Vergleich zum Durchgang schmaler Rahmenleiste geformt sein.

Der Pressantrieb kann ein pneumatischer, hydraulischer oder elektrischer Antrieb sein. Bei elektrischem Antrieb wird dessen Kraft bzw. Drehmoment vorzugsweise mittels eines Kniehebelmechanismus auf die den Presshub ausführende Pressenkomponente, vorzugsweise die Bördelformeinheit, übertragen. Ein hydraulischer Pressantrieb kann vorteilhafterweise direkt auf die zu bewegende Pressenkomponente einwirken und daher sehr kompakt ausgeführt werden. Es können insbesondere mehrere hydraulische Linearhubeinheiten längs des Bördelbetts bzw. längs des umzulegenden Flansches verteilt angeordnet sein. Alternativ kann ein fluidischer Pressantrieb einen mit Druckfluid, vorzugsweise Druckgas, beaufschlagbaren Balg umfassen, der bei Druckbeaufschlagung in Pressrichtung auf die Bördelformeinheit oder das Bördelbett wirkt und dadurch die Presskraft erzeugt, was Schutzgegenstand der vorliegenden Anmeldung ist.

Der Bördelprozess kann in der Bördelpresse mit einem anderen Fügeprozess kombiniert werden, beispielsweise einem Schweiß- oder Lötprozess, insbesondere einem Punktschweißen. Steht ein ausreichend schlankes Fügewerkzeug für den anderen Fügeprozess zur Verfügung, wie etwa eine Schweißlanze, kann solch ein Fügewerkzeug im abgerückten bzw. eingefahrenen Zustand der Bördelform zwischen der Bördelform und dem quer zur Pressrichtung der Bördelform gegenüber liegenden Niederhalter in Richtung auf das Bördelbett bewegt und gegen den Flansch gedrückt werden, um im Druckkontakt eine beispielsweise stoffschlüssige Fügeverbindung zu schaffen. Auf diese Weise können beispielsweise geschachtelte Teile, die durch das Bördeln miteinander gefügt werden, zusätzlich zur so geschaffenen Falzverbindung auch noch stoffschlüssig relativ zueinander fixiert werden. In vielen Anwendungen drückt der Niederhalter bei einer aus mehreren Teilen geschachtelten Anordnung gegen ein Innenteil, das mit einem randseitigen Flansch in eine durch das Bördeln geschaffene Falztasche eines Außenteils ragt. Der Niederhalter kann daher vorteilhafterweise zu einer Schweißelektrode, vorzugsweise der Masseelektrode, weiterentwickelt sein, um den umgelegten Flansch mit dem in die Falztasche ragenden Innenteil zu verschweißen. Die Schweißelektrode und die Masseelektrode können jeweils von der gleichen Seite gegen das Bauteil drücken, die eine Elektrode gegen den umgelegten Flansch und die andere Elektrode gegen das in die Falztasche ragende Teil, um den Stromkreis zu schließen. Grundsätzlich kann beispielsweise auch das Bördelbett eine der beiden für das Schweißen erforderlichen Elektroden bilden, falls nicht der umgelegte Flansch verschweißt werden soll, sondern zwei im Bördelbett übereinander liegende Teile eines Bauteils. Grundsätzlich kann eine für das Schweißen erforderliche Masseelektrode aber auch zusätzlich vorgesehen sein und von außen zwischen Bördelform und Niederhalter in Pressrichtung bis in den Kontakt mit einem der durch Schweißen miteinander zu fügenden Teile bewegt wird. Eine Schweißelektrode kann alternativ zu beispielsweise einer extern zugeführten Schweißlanze auch Bestandteil der Bördelformeinheit sein. So kann die Schweißelektrode in die Bördelform integriert sein, vorzugsweise in Pressrichtung beweglich. Für beispielsweise solch ein zusätzliches stoffliches Fügen, wie etwa ein Löten oder Kleben oder insbesondere Schweißen, kann auch von Vorteil sein, wenn die Befestigungseinrichtung des Niederhalters ein Dockingport für ein automatisches An- und Abdocken an den und von dem Aktor ist. Wird der Niederhalter wie weiter oben erläutert mittels wenigstens eines Spannelements der Bördelformeinheit oder vorzugsweise der Basisstruktur und eines Spanngegenelements des Niederhalters in die Niederhalteposition gedrückt, also die zum Niederhalten erforderliche Niederhaltekraft im Spanneingriff erzeugt, kann der Aktor den im Spanneingriff befindlichen Niederhalter automatisch abdocken und ein Fügewerkzeug, wie etwa eine Schweißlanze stattdessen andocken, um den zusätzlichen Fügeprozess mit dem entsprechenden Fügewerkzeug durchzuführen. Nach Durchführung des zusätzlichen Fügeprozesses kann der Aktor oder ein anderer Aktor wieder am Niederhalter andocken, um diesen zusammen mit dem gebördelten Bauteil aus der Bördelpresse zu nehmen. Um ein Fügewerkzeug bis zum Bauteil bewegen zu können, kann der Niederhalter in einem oder mehreren Bereichen, in dem oder denen jeweils gefügt werden soll, eine Ausnehmung bzw. jeweils eine Ausnehmung aufweisen, um dem Fügewerkzeug den Zugang zur Fügestelle zu vereinfachen.

In einer Weiterentwicklung sind das Bördelbett und die Bördelformeinheit um eine zumindest im Wesentlichen horizontale Achse drehbar oder schwenkbar in einem Gestell gelagert, so dass Bördelbett und Bördelformeinheit zwischen der stehenden Position und einer liegenden Position, in der das Bördelbett nach oben weist, hin und her bewegt werden können. Vorzugsweise sind sie gemeinsam schwenkbar oder drehbar gelagert. Solch eine Lagerung kann beispielsweise in Anwendungen von Vorteil sein, in denen das Bauteil aus mehreren Teilen, etwa einem Außenteil und einem Innenteil einer Fahrzeugtür, durch Falzen und Kleben gefügt wird und im Fügebereich Kleber vorhanden ist. Der Betreiber der Bördelpresse kann bei Verwendung der schwenkbaren oder drehbaren Anordnung frei entscheiden, ob in der liegenden oder in der stehenden Ausrichtung gebördelt wird. In Zeiten der Nichtbenutzung kann er Bördelbett und Bördelformeinheit in die platzsparende stehende Ausrichtung bewegen.

Die Bördelform oder die mehreren Bördelformen kann oder können jeweils eine verschleißfeste keramische Oberfläche aufweisen, mit der sie beim Bördeln gegen den Flansch des Bauteils drückt oder drücken. An der keramischen Oberfläche setzt sich kein oder zumindest weniger Schmutz als an metallenen Oberflächen an, insbesondere tritt kein Aufschweißeffekt auf.

Die jeweilige Bördelform kann aus einem keramischen Werkstoff bestehen. In bevorzugten Ausführungen weist die jeweilige Bördelform jedoch einen metallenen Grundkörper auf, der an seiner Bördelfläche oder den mehreren Bördelflächen nur eine verschleißfeste keramische Beschichtung aufweist. Die Beschichtung kann in Dickschichttechnik oder insbesondere in Dünnschichttechnik ausgeführt sein. Bevorzugt wird eine dünne Verschleißschicht, also eine Dünnschicht, von höchstens 30 µm, bevorzugter höchstens 20 µm Dicke. Die Verschleißschicht kann in einem CVD-Verfahren (chemical vapour deposition) oder vorzugsweise in einem PVD-Verfahren (physical vapour deposition), alternativ auch galvanisch erzeugt werden. Eine geringe Schichtdicke begünstigt eine konturgetreue Veredelung des Grundkörpers mit der Verschleißschutzschicht. Die Verschleißschutzschicht kann geschlossen sein, die metallene Oberfläche des Grundkörpers also vollständig bedecken. Erforderlich ist dies jedoch nicht. Es genügt auch, wenn die keramische Verschleißschutzschicht auf dem metallenen Grundkörper keine geschlossene Deckschicht bildet, sondern der keramische Schichtwerkstoff nur die Rauheitstäler des metallenen Grundkörpers zumindest teilweise füllt.

In noch einer Weiterentwicklung umfasst die Bördelpresse ein weiteres, zweites Bördelbett und eine weitere, zweite Bördelformeinheit. Das zweite Bördelbett kann an der Basisstruktur oder einer optionalen zweiten Basisstruktur vorgesehen sein. In das zweite Bördelbett kann ein zweites Bauteil gelegt und zum Umlegen eines Flansches in eine der Pressrichtung entgegen gerichtete Pressrichtung gepresst werden. Die zweite Bördelformeinheit ist dem zweiten Bördelbett zugewandt und umfasst wenigstens eine zweite Bördelform zum Umlegen des Flansches des zweiten Bauteils. Die beiden Bördelbetten sind in Pressrichtung zwischen den Bördelformeinheiten angeordnet. Die Bördelbetten und Bördelformeinheiten bilden zusammen eine Sandwichanordnung, in der die beiden Bördelbetten Rücken-an-Rücken angeordnet sind. Die wenigstens eine zweite Bördelform und das zweite Bördelbett sind mittels des Pressantriebs relativ zueinander in die zweite Pressrichtung beweglich, um eine Presskraft auch auf das zweite Bauteil ausüben zu können. Die Bördelbetten und Bördelformeinheiten sind bezogen auf eine senkrecht zur Pressrichtung weisende Ebene vorzugsweise zumindest im Wesentlichen spiegelbildlich zueinander angeordnet. Die Bördelpresse ist in dieser doppelten Ausführung insbesondere zum zeitgleichen Bördeln von der Größe und Gestalt nach ähnlichen Bauteilen geeignet, beispielsweise einer rechten und einer linken Fahrzeugtür. Die beiden zu einer Doppelpresse zusammengefassten Einfachbördelpressen können einander exakt entsprechen.

Vorzugsweise weist die zweite Bördelpresse die hier am Beispiel der ersten Bördelpresse erläuterten und beanspruchten Merkmale ebenfalls auf. Die beiden Einfachpressen können sich allerdings hinsichtlich der Geometrie, beispielsweise des Verlaufs der Bördelbetten und entsprechend der Kontur der Bördelformen voneinander unterscheiden, um beispielsweise mit der einen Bördelpresse eine rechte Fahrzeugtür und mit der anderen Bördelpresse eine linke Fahrzeugtür oder auch gleichzeitig Fahrzeugtüren von unterschiedlichen Kraftfahrzeugtypen oder andere Bauteile, die sich voneinander unterscheiden, gleichzeitig bördeln zu können. Die gleichzeitig in der Doppelpresse bördelbaren Bauteile sollten jedoch soweit gleich sein, dass die in den beiden Einfachpressen aufzubringenden Kräfte der Größe und Verteilung nach einander in etwa entsprechen.

Der Pressantrieb kann mit den beiden Bördelformeinheiten so verbunden, insbesondere in und gegen die Pressrichtung an den Bördelformen abgestützt sein, dass die eine als Abstützung für die andere dient. Der Pressantrieb wirkt in ersten Ausführungen in und gegen die Pressrichtung nur auf die Bördelformeinheiten und bewegt diese gegenläufig auseinander und beim Presshub aufeinander und dabei auf das jeweilige Bördelbett zu. Ist der Pressantrieb als Linearhubantreib gebildet, kann die Basisstruktur ein Hubelement des Antriebs in Pressrichtung führen, muss den Antrieb aber nicht in oder gegen die Pressrichtung abstützen.

Weist der Pressantrieb den Druckbalg auf, kann in einem zentralen Bereich solch einer Doppelpresse ein Gestell angeordnet sein, an dem sich an einer der Bördelformeinheit zugewandten Vorder- und einer der zweiten Bördelformeinheit zugewandten Rückseite jeweils ein Druckbalg abstützt. Die Bördelpresse weist vorzugsweise die genannte zweite Basisstruktur auf. Der eine Druckbalg wirkt auf eine Trägerstruktur der Basisstruktur, um deren Bördelbett gegen die Bördelformeinheit zu drücken. Der andere Druckbalg wirkt auf eine Trägerstruktur der zweiten Basisstruktur, um deren Bördelbett gegen die zweite Bördelformeinheit zu drücken.

Die Doppelpresse kann auch mit nur einem einzigen Druckbalg ausgestattet sein, der beispielsweise die beiden Bördelbetten oder stattdessen die beiden Bördelformeinheiten voneinander weg drückt, falls entweder die Bördelbetten Rücken-an-Rücken oder die Bördelformeinheiten Rücken-an-Rücken und dazwischen der Druckbalg angeordnet sind. Grundsätzlich kann ein für beide Einfachpressen gemeinsamer Druckbalg auch zwischen dem Bördelbett der einen Einfachpresse und der Bördelformeinheit der anderen Einfachpresse angeordnet sein und das Bördelbett der einen Einfachpresse in Richtung auf die Bördelformeinheit der einen Einfachpresse und die Bördelformeinheit der anderen Einfachpresse in Richtung auf das Bördelbett der anderen Einfachpresse bewegen. Die Abrückbewegung zum Öffnen der Einfachpressen kann beispielsweise elektromotorisch oder mittels einer mechanischen oder pneumatischen Federeinrichtung bewirkt werden. Die Anordnung von zwei Druckbälgen erlaubt allerdings eine Entkopplung der zwei Einfachpressen hinsichtlich der Pressbewegung, so dass die eine Einfachpresse betrieben werden kann, während die andere stillsteht oder die beiden Einfachpressen mit unterschiedlichen Taktzeiten oder -intervallen betrieben werden können.

Die Erfindung betrifft auch ein Verfahren zur Herstellung der Bördelpresse, bei dem die Basisstruktur mit wenigstens einem endbearbeiteten, d. h. in den für die Presse geforderten Toleranzen gefertigten Führungselement und die Bördelformeinheit mit wenigstens einem endbearbeiteten, d. h. in den für die Presse geforderten Toleranzen gefertigten Führungsgegenelement erstellt werden und die Bördelform an der Bördelformeinheit montiert wird. Die Basisstruktur und die Bördelformeinheit werden mit der montierten Bördelform durch einen Führungseingriff des Führungselements und des Führungsgegenelements relativ zueinander ausgerichtet. Die Bördelform oder das Bördelbett wird oder werden bei bestehendem Führungseingriff endbearbeitet. Da es sich bei dem Führungselement und dem Führungsgegenelement um die Strukturen handelt, die im späteren Betrieb der Presse in dem die Pressbewegung führenden Führungseingriff sind, können mit vom Führungselement abgesehen nur roh vorgeformter, gegebenenfalls roh vorbearbeiteter Basisstruktur und vom Führungsgegenelement abgesehen nur roh vorgeformter, gegebenenfalls roh vorbearbeiteter Bördelform das Bördelbett oder die Bördelform, vorzugsweise Bördelbett und Bördelform, im Führungseingriff des späteren Pressenbetriebs und daher auch relativ zueinander hochpräzise durch Endbearbeitung fertiggestellt werden. Auf ein aufwendiges Nachbearbeiten und Nachjustieren kann verzichtet werden, zumindest wird der für solche Arbeiten zu betreibende Aufwand erheblich reduziert.

In einer Weiterentwicklung wird auch der Niederhalter mit wenigstens einem endbearbeiteten Führungselement, im Bereich des Niederhalterands aber nur roh geformt, gegebenenfalls vorbearbeitet, bereitgestellt und erst im Führungseingriff mit einem oder mehreren Führungselementen der Basisstruktur oder der Bördelformeinheit, vorzugsweise dem oder den für die Bördelformeinheit vorgesehenen Führungselement(en) der Basisstruktur, endbearbeitet.

Die Bördelpresse kann einen oder mehrere Bauteilsauger aufweisen, um das Bauteil mittels Saugkraft an das Bördelbett zu ziehen. Ein oder mehrere Bauteilsauger ist oder sind insbesondere dann von Vorteil, wenn es sich bei dem Bauteil um einen Schachtelverbund handelt mit beispielsweise einem Außenteil und einem Innenteil, die vor dem Umlegen des Flansches nur ineinander geschachtelt oder zumindest noch nicht ausreichend fest miteinander verbunden sind. Der Niederhalter kann von solch einem Bauteil in der Regel nur ein ihm unmittelbar zugewandtes Strukturteil halten, beispielsweise das Innenteil einer Fahrzeugtür oder eines anderen Fahrzeugteils, während ein von ihm abgewandtes Strukturteil, wie etwa das Außenteil einer Fahrzeugtür oder eines anderen Fahrzeugteils, nur vergleichsweise lose gehalten wird. Dieses weitere Strukturteil kann mittels des einen oder der mehreren Bauteilsauger in das Bördelbett gezogen und dadurch relativ zum Bördelbett fixiert werden.

In einer Weiterentwicklung weist die Bördelpresse einen großflächigen Bauteilsauger auf. Dieser Bauteilsauger umfasst eine Saugkammer, die seitlich von Seitenwandstrukturen der Bördelpresse, vorzugsweise von Seitenwandstrukturen des Bördelbetts, umgeben und an einer Stirnseite großflächig vom Bauteil begrenzt wird. Die Saugeinrichtung kann zumindest stets dann verwirklicht werden, wenn das Bauteil innerhalb des Bördelbetts eine geschlossene Oberfläche aufweist, so dass das Bauteil im Druckkontakt mit dem Bördelbett die Saugkammer an der besagten Stirnseite von vernachlässigbaren Verlusten abgesehen gasdicht verschließt. Das Bauteil bildet eine erste Stirnwandstruktur der Saugkammer. An der dem Bauteil gegenüberliegenden Stirnseite weist das Bördelbett eine die Saugkammer begrenzende zweite Stirnwandstruktur auf. In der umfangsseitigen Seitenwandstruktur oder vorzugsweise in der dem Bauteil zugewandt gegenüberliegenden Stirnwandstruktur ist eine oder sind mehrere Perforationen vorgesehen, durch die hindurch die Saugkammer zur Erzeugung eines Unterdrucks abgesaugt werden kann.

Die zweite Stirnwandstruktur kann eine dem Bauteil zugewandte, an die Kontur des Bauteils derart angepasste Oberfläche aufweisen, dass das Bauteil im angesaugten Zustand an der zweiten Stirnwandstruktur bereichsweise abgestützt ist. Der oder die so erhaltenen Abstützbereiche können so geformt und über die Fläche des Bauteils gesehen angeordnet sein, dass ein Verziehen des Bauteils aufgrund des in der Saugkammer herrschenden Unterdrucks verhindert wird.

Die Saugkammer ist in bevorzugten Ausführungen in Pressrichtung F nur flach, um ein kleines Saugkammervolumen zu erhalten. Die zweite Stirnwandstruktur kann insbesondere so geformt sein, dass das Innenvolumen der Saugkammer einem Volumen entspricht, das bei sonst unveränderter Geometrie der Saugkammer erhalten wird, wenn die zweite Stirnwandstruktur von dem Bauteil überall einen gleichmäßigen Abstand von höchstens 10 mm, vorzugsweise höchstens 5 mm, hat. Dieses virtuelle Vergleichsvolumen erhält man, wenn man die zweite Stirnwandstruktur der Form der zugewandten Oberfläche des Bauteils angepasst denkt und über die gesamte gegenüberliegende Fläche des Bauteils gesehen einen gleichen Abstand einhält, der vorzugsweise höchstens 10 mm, bevorzugter höchstens 5 mm und noch bevorzugter höchstens 3 mm beträgt.

Die zweite Stirnwandstruktur kann insbesondere gemeinsam mit einer Bauteilauflage des Bördelbetts gemeinsam geformt werden, beispielsweise durch spanende Bearbeitung. Die zweite Stirnwandstruktur kann insbesondere aus Kunststoff geformt sein. So kann beispielsweise ein Kunststoffhalbzeug mit dem Bördelbett fest verbunden und im verbundenen Zustand zum Erhalt der an das Bauteil angepassten Oberfläche endbearbeitet werden. Kunststoffmaterial kann stattdessen auch in das Bördelbett, dessen eine Stirnseite füllend gegossen und nach Erhärten an das Bauteil angepasst gemeinsam mit der Auflage des Bördelbetts endbearbeitet werden.

Vorteilhafte Merkmale werden auch in den Unteransprüchen und deren Kombinationen beschrieben.

Die in den einzelnen Unteransprüchen beschriebenen Merkmale werden zwar vorteilhafterweise zusammen mit dem Merkmal des wenigstens einen Druckbalgs verwirklicht, sind aber auf eine derartige Bördelpresse nicht beschränkt. Die Anmelderin behält es sich vor, auf jedes der in den Unteransprüchen und auch auf jedes der in der Beschreibung oder den Figuren offenbarten Merkmale einen eigenen Anspruch zu richten, der die Merkmale (a) bis (d) des Anspruchs 1 und anstelle der Merkmale (e) und (f) wenigstens ein anderes Merkmal, beispielsweise wenigstens eines der in den Unteransprüchen offenbarten Merkmale enthält. Besonders vorteilhafte, auch separat vom Druckbalg oder insbesondere mit diesem gemeinsam realisierbare Gegenstände sind beispielsweise die Ausbildung der Bördelformeinheit mit einem Durchgang, durch den ein zu bördelndes Bauteil zumindest im Wesentlichen parallel zur Pressrichtung eingeführt und bis in das Bördelbett bewegt werden kann, ferner die Ausgestaltungen des Niederhalters und die Querbeweglichkeit der Bördelform oder mehreren Bördelformen und auch die Ausführung einer oder mehrerer Bördelformen mit keramischer Oberfläche, um nur einige Beispiele zu nennen.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend beschriebenen Ausgestaltungen und Aspekte vorteilhaft weiter. Es zeigen:
- Figur 1: eine Bördelpresse in einem ersten Ausführungsbeispiel,
- Figur 2: die Bördelpresse in Hauptkomponenten aufgelöst,
- Figur 3: eine Basisstruktur der Bördelpresse,
- Figur 4: eine Bördelformeinheit der Bördelpresse,
- Figur 5: einen Teil der Bördelformeinheit,
- Figur 6: einen Niederhalter der Bördelpresse,
- Figur 7: die Bördelpresse mit Niederhalter, aber ohne Bördelformeinheit,
- Figur 8: eine Bördelform und einen Niederhalter einer ersten Variante,
- Figuren 9-16: einen Bördelprozess,
- Figur 17: eine Bördelform und einen Niederhalter einer zweiten Variante,
- Figur 18: die Bördelform und den Niederhalter der zweiten Variante,
- Figur 19: eine Bördelform und einen Niederhalter einer dritten Variante,
- Figur 20: die Bördelform und den Niederhalter der zweiten Variante,
- Figur 21: eine Bördelpresse in einem zweiten Ausführungsbeispiel,
- Figur 22: eine Bördelpresse in einem dritten Ausführungsbeispiel mit einem Druckbalg,
- Figur 23: den Druckbalg in einer Draufsicht,
- Figur 24: den Druckbalg in einer Seitensicht,
- Figur 25: eine Bördelpresse in einem vierten Ausführungsbeispiel,
- Figur 26: ein Gestell und einen Druckbalg des vierten Ausführungsbeispiels,
- Figur 27: das Gestell, den Druckbalg und eine Basisträgerstruktur des vierten Ausführungsbeispiels,
- Figur 28: eine Basisstruktur mit dem Druckbalg des vierten Ausführungsbeispiels,
- Figur 29: die Basisstruktur des vierten Ausführungsbeispiels mit einer zusätzlichen Bördeleinrichtung zum Bördeln eines Fensterschlitzflansches,
- Figur 30: die Basisträgerstruktur und ein Falzbett des vierten Ausführungsbeispiels mit einem eingelegten Bauteil,
- Figur 31: die Basisstruktur und eine Bördelformeinheit des vierten Ausführungsbeispiels,
- Figur 32: die Börderlformeinheit des vierten Ausführungsbeispiels,
- Figur 33: einen Niederhalter des vierten Ausführungsbeispiels,
- Figur 34: den Niederhalter im Zusammenspiel mit dem Bördelbett des vierten Ausführungsbeispiels,
- Figur 35: das Falzbett, den Nierderhalter und eine Börderformeinheit des vierten Ausführungsbeispiels in einem Detailquerschnitt,
- Figur 36: eine Bördelsequenz der Bördelpresse des vierten Ausführungsbeispiels,
- Figur 37: den Druckbalg,
- Figur 38: den Druckbalg mit abgenommener Lagerstruktur,
- Figur 39: einen nachgiebigen Balgteil des Druckbalgs,
- Figur 40: die Bördelpresse des vierten Ausführungsbeispiels in einer Draufsicht,
- Figur 41: eine Bördelpresse eines fünften Ausführungsbeispiels,
- Figur 42: eine Hubträgerstruktur der Bördelpresse des fünften Ausführungsbeispiels,
- Figur 43: in Grundposition befindliche Bestandteile der Bördelpresse des fünften Ausführungsbeispiels in einer Seitenansicht,
- Figur 44: die Bestandteile der Bördelpresse des fünften Ausführungsbeispiels im Schnitt A-A der Figur 43,
- Figur 45: die Bestandteile der Bördelpresse des fünften Ausführungsbeispiels nach Ausführung eines Zwischenhubs,
- Figur 46: die Bestandteile der Bördelpresse des fünften Ausführungsbeispiels nach Ausführung eines Bördelhubs, und
- Figur 47: die Bestandteile der Bördelpresse des fünften Ausführungsbeispiels nach Ausführung eines Rückhubs bei noch expandiertem Druckbalg.

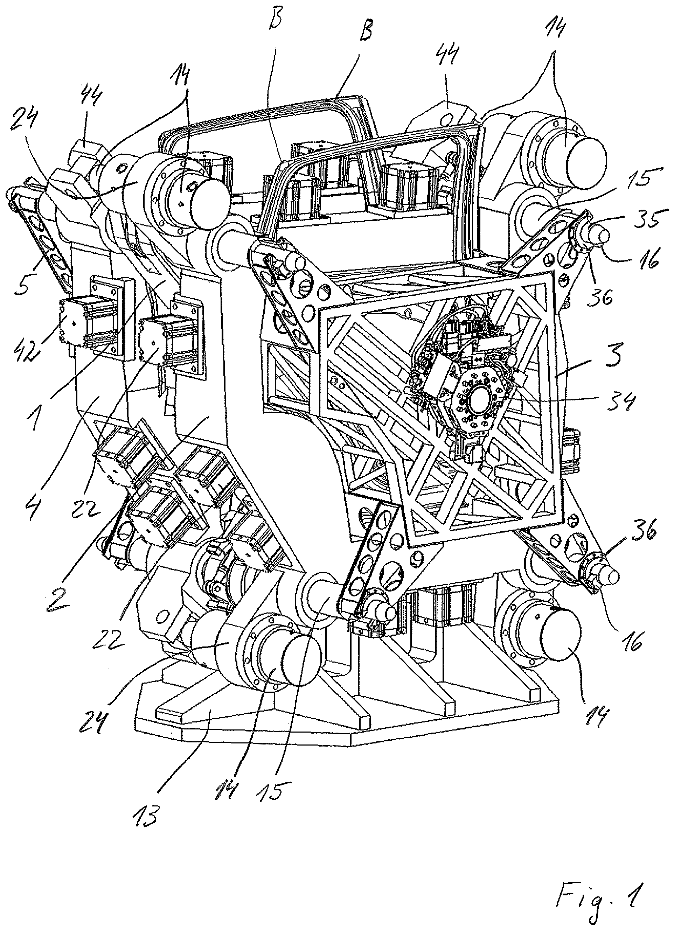

Figur 1 zeigt eine Bördelpresse eines ersten Ausführungsbeispiels. Die Bördelpresse ist als Doppelpresse ausgeführt, d. h. sie umfasst eine erste Bördelpresse und eine zweite Bördelpresse, die nebeneinander in einer Sandwichanordnung, Rücken-an-Rücken aufrecht stehend angeordnet sind. Die Presse ist in einer Produktionsanlage stationär angeordnet.

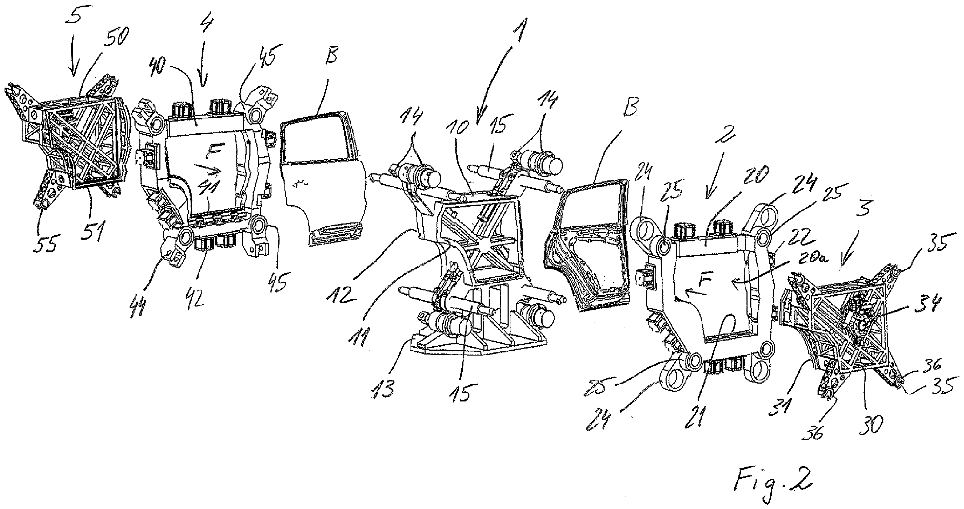

Die Bördelpresse ist in Figur 2 aufgelöst in ihre Hauptkomponenten dargestellt, wobei die Hauptkomponenten parallel zu einer Pressrichtung F aufgereiht sind. Bei diesen Hauptkomponenten handelt es sich um eine in Bezug auf die Pressrichtung F zentral angeordnete Basisstruktur 1, eine zur rechten Seite der Basisstruktur 1 angeordnete erste Bördelformeinheit 2, einen ersten Niederhalter 3, eine zur linken Seite der Basisstruktur 1 angeordnete zweite Bördelformeinheit 4 und einen zweiten Niederhalter 5. Mit der Presse können zwei Bauteile B gleichzeitig gebördelt werden. Bei den Bauteilen handelt es sich beispielhaft um die linke Tür B und die rechte Tür B eines Personenkraftwagens. Bei derartigen Bauteilen werden ein Außenteil und ein Innenteil des jeweiligen Bauteils durch das Bördeln gefügt, nämlich durch Schaffung einer Falzverbindung.

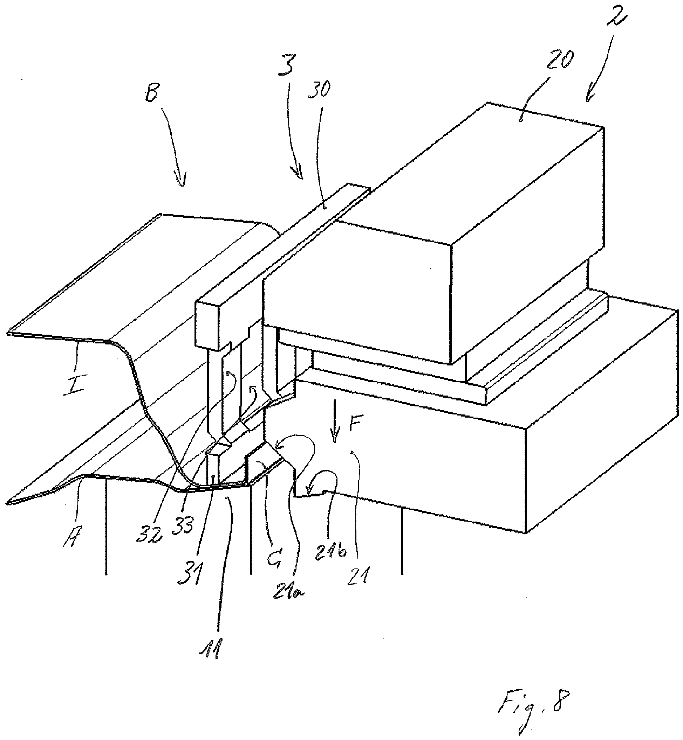

Die Basisstruktur 1 umfasst eine Trägerstruktur 10, an deren rechten Seite, der Bördelformeinheit 2 zugewandt, ein erstes Bördelbett 11 zur Aufnahme des Bauteils B und an deren linken Seite, der Bördelformeinheit 4 zugewandt, ein zweites Bördelbett 12 zur Aufnahme des anderen Bauteils B geformt oder fest montiert ist. Beim Bördeln liegt eines der Bauteile B im Bördelbett 11 und das andere Bauteil B im Bördelbett 12, wie beispielsweise in Figur 8 erkennbar ist. Beim Bördeln werden die Bauteile B vom jeweils zugeordneten Bördelbett 11 oder 12 abgestützt. Die Bördelbetten 11 und 12 nehmen die beim Bördeln auf das jeweilige Bauteil B in Pressrichtung F bzw. in die Gegenrichtung wirkende Presskraft auf. Die Basisstruktur 1 umfasst ferner ein Gestell 13, auf dem die Trägerstruktur 10 ruht und das beispielhaft als Standfuß gebildet ist. Die Basisstruktur 1 kann mit dem Gestell 13 auf einem Boden der Produktionsanlage stehend angeordnet werden.

Die Presse ist vertikal stehend ausgerichtet. Dementsprechend weisen die Bördelbetten 11 und 12 zu den Seiten, das Bördelbett 11 nach rechts und das Bördelbett 12 nach links. Die Pressrichtung F ist entsprechend eine horizontale Richtung. Durch die vertikale Aufstellung wird, wie unter anderem Figur 1 verdeutlicht, die Aufstellfläche der Presse im Vergleich zu einer Presse, die wie im Stand der Technik üblich liegend angeordnet ist, so dass die Bördelbetten 11 und 12 nach oben und unten weisen würden, deutlich verringert. Eine erfindungsgemäße Presse für beispielsweise Fahrzeugtüren üblicher Größe benötigt eine Aufstellfläche von weniger als 2 Meter x 2 Meter, vorteilhafterweise von etwa 1.5 Meter x 1.2 Meter, während heutige Pressen zum Bördeln von Fahrzeugtüren aufgrund der horizontalen, liegenden Anordnung des Bördelbetts eine Aufstellfläche von etwa 2.7 Meter x 2. 7 Meter benötigen.

Figur 8 zeigt einen Flanschbereich des Bauteils B, in dem im Zusammenwirken von Bördelbett 11 und Bördelformeinheit 2 ein Außenteil A und ein Innenteil I zu einem Bauteil B, einer Fahrzeugtür, gefügt werden, indem ein randseitiger Flansch C des Außenteils A umgelegt wird, so dass ein Rand des entsprechend positionierten Innenteils I in eine dadurch geschaffene Falztasche des Außenteils A hineinragt und die Teile A und I durch die so geschaffene Falzverbindung relativ zueinander fixiert sind. Der Niederhalter 3 drückt mit einem freien vorderen Niederhalterrand 31 die beiden Teile A und I in Pressrichtung F in das Bördelbett 11. Die Bördelformeinheit 2 umfasst eine Trägerstruktur 20 und mehrere längs des umzulegenden Flansches C an der Trägerstruktur 20 angeordnete Bördelformen 21, mit denen sie bei einem in Pressrichtung F erfolgenden Presshub gegen den Flansch C drückt und diesen dabei umlegt, wie später noch beschrieben wird.

Grundsätzlich muss zwischen einer Press- und einer Pressgegenrichtung nicht unterschieden werden. Die Gegenrichtung ist die Pressrichtung des Bördelbetts, so dass im Folgenden nur noch von "Pressrichtung" die Rede ist. Eine Unterscheidung wird allenfalls dann getroffen, wenn es auf die Bewegungsrichtung der Bördelformeinheit oder in alternativen Ausführungen des Bördelbetts ankommen soll.

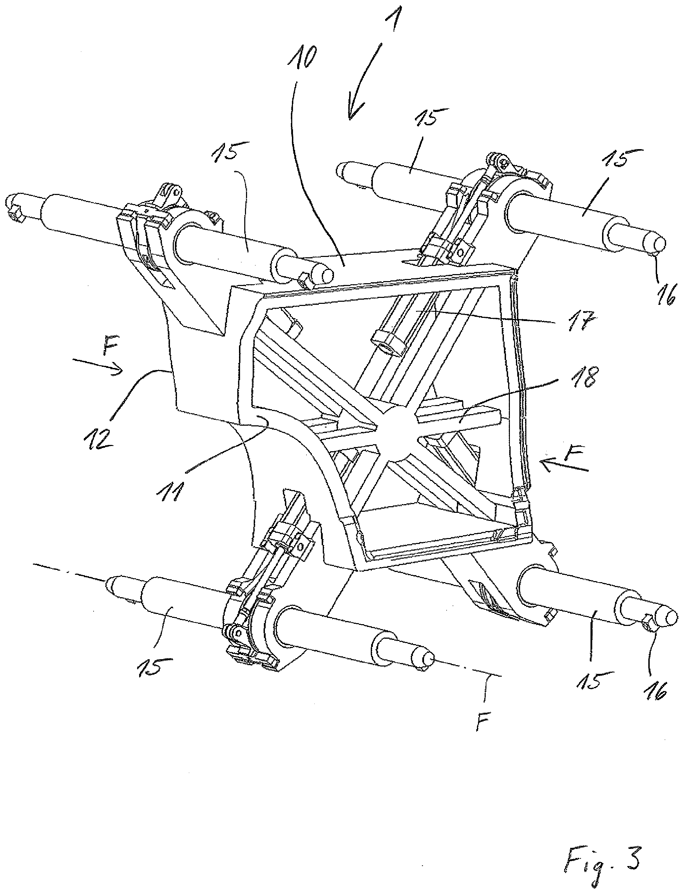

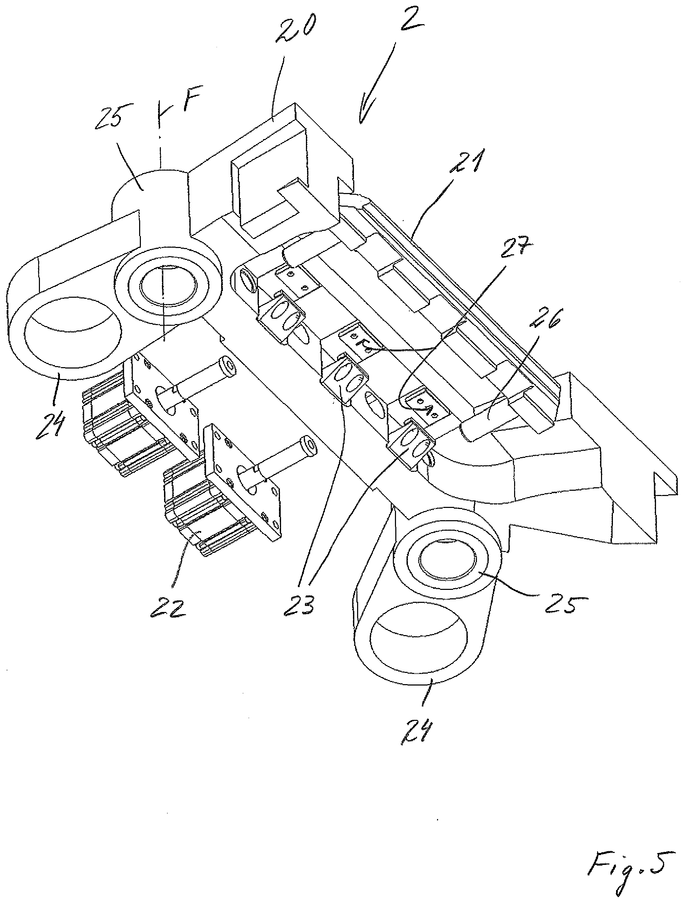

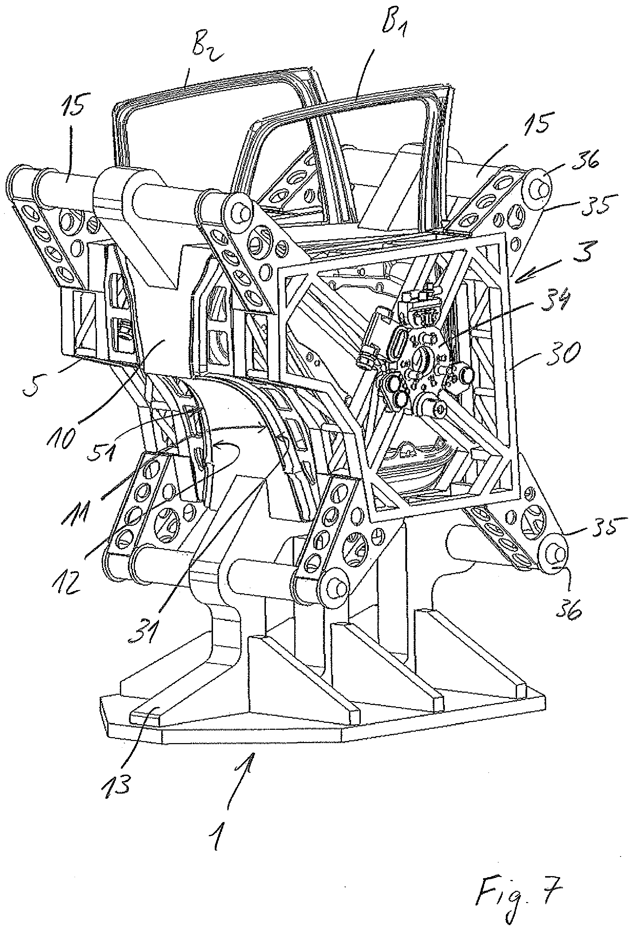

In den Figuren 3, 4 und 6 sind die Hauptkomponenten, die Basisstruktur 1 ohne Gestell 13, die Bördelformeinheit 2 und der Niederhalter 3, einzeln dargestellt. Figur 5 zeigt ferner einen Teil der Bördelformeinheit 2 in einer vergrößerten Darstellung. In Figur 7 ist die Presse wie in Figur 1 mit den aufgenommenen Bauteilen B dargestellt. Um das Zusammenspiel der Niederhalter 3 und 5 mit den Bördelbetten 11 und 12 sowie den Bördelformeinheiten 2 und 4 zu illustrieren, ist die Presse ohne die Bördelformeinheiten 2 und 4 dargestellt.

Wie in Figur 3 erkennbar weist die Basisstruktur 1 um die Bördelbetten 11 und 12 verteilt mehrere Führungselemente 15 auf, die sich jeweils in Pressrichtung F erstrecken. Die Pressbewegung ist eine Linearbewegung, entsprechend ist die Pressrichtung F in Figur 3 als Pressachse F eingezeichnet, und die Führungselemente 15 sind entsprechend Geradführungen. Die Führungselemente 15 sind zumindest über den wesentlichen Teil ihrer Länge wie bevorzugt, aber nur beispielhaft, jeweils kreiszylindrisch.

Die Bördelbetten 11 und 12 sind an den beiden voneinander abgewandten Stirnseiten der Trägerstruktur 10 geformt oder als separat geformte Bördelbetten 11 und 12 an der Trägerstruktur 10 montiert. Die Trägerstruktur 10 ist im Ganzen rahmenförmig dem Verlauf der Bördelbetten 11 und 12 nachgebildet.

Die Führungselemente 15 werden von der Trägerstruktur 1, im Beispiel an von der Trägerstruktur 10 abragenden Auslegern, jeweils um eine zur Pressrichtung F parallele Achse, die in Figur 3 ebenfalls mit F bezeichnet ist, drehbar gelagert und sind mittels Spannantrieben 17 motorisch drehantreibbar. Die Führungselemente 15 weisen jeweils nahe bei ihrem freien axialen Ende ein radial abragendes Spannelement 16 auf. Die Spannelemente 16 dienen dazu, die beiden Niederhalter 3 und 5 in Pressrichtung F relativ zum jeweils zugeordnete Bördelbett 11 bzw. 12 zu spannen.

Die Trägerstruktur 10 ist in einem von ihr umrahmten Innenbereich mittels einer Verstärkung 18 ausgesteift. Die Verstärkung 18 wird von mehreren sternförmig vom Zentrum bis zum Innenumfang der Trägerstruktur 10 erstreckten Verstärkungsstegen gebildet, von denen einige über die Trägerstruktur 10 hinaus nach außen verlängert sind, um die genannten Ausleger zu bilden, an denen die Führungselemente 15 angeordnet sind. An den Verstärkungsstegen sind auch die Spannantriebe 17 abgestützt.

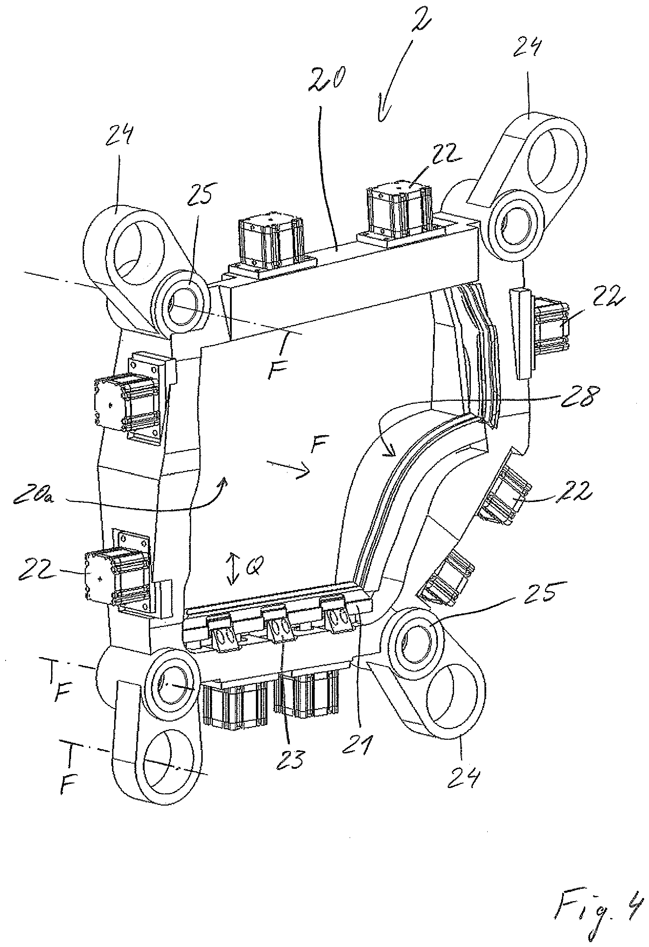

Figur 4 zeigt die Bördelformeinheit 2. Die Bördelformeinheit 2 umfasst eine Trägerstruktur 20, die dem Verlauf des zugeordneten Bördelbetts 11 folgend rahmenartig geformt ist. Die rahmenartige Trägerstruktur 20 umgibt einen zentralen, frei bleibenden Durchgang 20a. Längs des den Durchgang 20a umgebenden Innenumfangs 28 der Trägerstruktur 20 sind mehrere Bördelformen 21 nebeneinander angeordnet. Von den Bördelformen ist nur eine Bördelform 21 dargestellt. Die Bördelformen 21 sind längs des Innenumfangs an der dem Bördelbett 11 zugewandten Seite der Trägerstruktur 20 jeweils in der beispielhaft für die Bördelform 21 dargestellten Weise angeordnet.

Die Bördelformen 21 sind jeweils leistenförmig. Sie sind jeweils gegen die Pressrichtung F unbeweglich an der Trägerstruktur 20 abgestützt, nämlich in einem axialen Anschlagkontakt an einer Stirnfläche der Trägerstruktur 20. Der Anschlagkontakt ist am besten in Figur 5 erkennbar. Zur Ausbildung einer Anschlagfläche 27 sind an der Trägerstruktur 20 mehrere Anschlagstücke befestigt. An der Trägerstruktur 20 sind ferner Stützelemente 23 befestigt, die der Anschlagfläche 27 axial gegenüber liegen. Im montierten Zustand sind die Bördelformen 21 jeweils zwischen der Anschlagfläche 27 und wenigstens einer Stütze 23 axial eingefasst. Die Stützen 23 fangen das beim Bördeln auf die Bördelformen 21 wirkende Drehmoment ab, dienen also als Drehmomentstützen. Die Stützen 23 könnten beispielsweise durch eine in die Trägerstruktur 20 eingearbeitete Nut ersetzt werden.

Die Bördelformen 21 sind relativ zur Trägerstruktur 20 allerdings quer zur Pressrichtung F, in Querrichtung Q, hin und her beweglich. Die Bördelformen 21 sind aufgrund ihrer Verteilung über den Innenumfang der Trägerstruktur 10 in unterschiedliche Querrichtungen Q beweglich, eine Querrichtung Q pro Bördelform 21. Bei der Querbewegung werden sie zwischen den Anschlägen 27 und den Stützen 23 und ferner durch Führungen 26 geradgeführt. In einer Modifikation können entweder die Führungen 26 die Stützen 23 oder die Stützen 23 die Führungen 26 ersetzen. Die Bördelform 21 sind jeweils mit wenigstens einem, im Ausführungsbeispiel mit jeweils zwei Bördelformantrieben 22 gekoppelt, um die Querbewegungen der Bördelformen 21 bewirken zu können. Die Bördelformantriebe 22 sind Linearhubantriebe, beispielhaft pneumatische Antriebe. Die Kopplung ist wie bevorzugt, aber nur beispielhaft, direkt, indem die bewegliche Komponente des jeweiligen Bördelformantriebs 22, im Beispiel der Kolben, in Richtung seiner Beweglichkeit unbeweglich mit der zugeordneten Bördelform 21 verbunden ist.

Die Bördelformeinheit 2 umfasst mehrere Führungsgegenelemente 25, jeweils eines für jedes der Führungselemente 15 der Basisstruktur 1. Die Führungsgegenelemente 25 sind relativ zur Trägerstruktur 20 unbeweglich und können mit dieser in einem Stück geformt oder fest gefügt sein. Die Führungsgegenelemente 25 sind in Anpassung an die Führungselemente 15 als hohlzylindrische Führungen gebildet. In einem Führungseingriff ragen die Führungselemente 15 in Pressrichtung F durch die Führungsgegenelemente 25 und bilden mit diesen einen eng tolerierten Führungseingriff, in dem die Bördelformeinheit 2 relativ zum zugeordneten Bördelbett 11 in Pressrichtung F beim Presshub und beim Rückhub exakt geführt wird.

Die zweite Bördelformeinheit 4 entspricht der Bördelformeinheit 2 in allen hier offenbarten Merkmalen. Die Bördelformeinheiten 2 und 4 unterscheiden sich ebenso wie die Bördelbetten 11 und 12 nur soweit voneinander, als dies durch die Geometrieunterschiede zwischen den Bauteilen B erforderlich ist. Die funktionsgleichen Strukturen und Elemente der Bördelformeinheit 4 sind in Figur 2 mit den entsprechenden Bezugsziffern versehen, nämlich 40 für die Trägerstruktur, 41 für die Bördelformen, 42 für die Bördelformantriebe usw., also mit um jeweils die Zahl 20 vergrößerten Bezugszeichen für funktionsgleiche Komponenten.

Die Presse umfasst einen hydraulischen Pressantrieb 14, der in den Figuren 1 und 2 dargestellt ist. Der Pressantrieb 14 wird von mehreren, im Ausführungsbeispiel vier hydraulischen Linearhub-Antriebseinheiten gebildet. Die Antriebseinheiten 14 sind über den äußeren Umfang der Bördelbetten 11 und 12 verteilt angeordnet, so dass die zum Bördeln erforderliche Presskraft über den Verlauf der Bördelbetten 11 und 12 und somit des Flansches C (Figur 8) gleichmäßig verteilt wird. Die Antriebseinheiten 14 umfassen jeweils einen Zylinder und einen im jeweiligen Zylinder geführten Kolben. Von diesen beiden relativ zueinander linear in Pressrichtung F beweglichen Antriebselementen ist jeweils das eine axial unbeweglich mit der Bördelformeinheit 2 und das andere axial unbeweglich mit der Bördelformeinheit 4 verbunden. Bei einer Relativbewegung der Kolben und Zylinder der Antriebseinheiten 14 werden somit die Bördelformeinheiten 2 und 4 entweder in die jeweilige Pressrichtung aufeinander und auf das jeweils zugeordnete Bördelbett 11 oder 12 zu oder voneinander und dem jeweils zugeordneten Bördelbett 11 oder 12 weg bewegt und entsprechend der Presshub- und Rückhub ausgeführt. Die Bördelformeinheiten 2 und 4 können jeweils mittels einer Federeinrichtung vom jeweils zugeordneten Bördelbett 11 bzw. 12 weg in eine Endposition gespannt werden. Der Pressantrieb 14 bewirkt den Presshub der Bördelformeinheiten 2 und 4 in solch einer Antriebsvariante jeweils gegen die rückstellende Federkraft der jeweiligen Federeinrichtung. Anstatt gefedert oder zusätzlich zu einer Federung können die Bördelformeinheiten 2 und 4 auch gedämpft sein. Grundsätzlich sind aber weder eine Feder- noch eine Dämpfungseinrichtung unumgänglich erforderlich.

Die Bördelformeinheiten 2 und 4 weisen Antriebsflansche 24 und 44 auf, nämlich einen Antriebsflansch 24 bzw. 44 pro Antriebseinheit 14. Die Antriebsflansche 24 der Bördelformeinheit 2 sind axial unbeweglich mit einem der beiden Antriebselemente der jeweiligen Antriebseinheit 14 und die Antriebsflansche 44 der Bördelformeinheit 4 sind axial unbeweglich mit jeweils dem anderen Antriebselement der jeweiligen Antriebseinheit 14 verbunden.

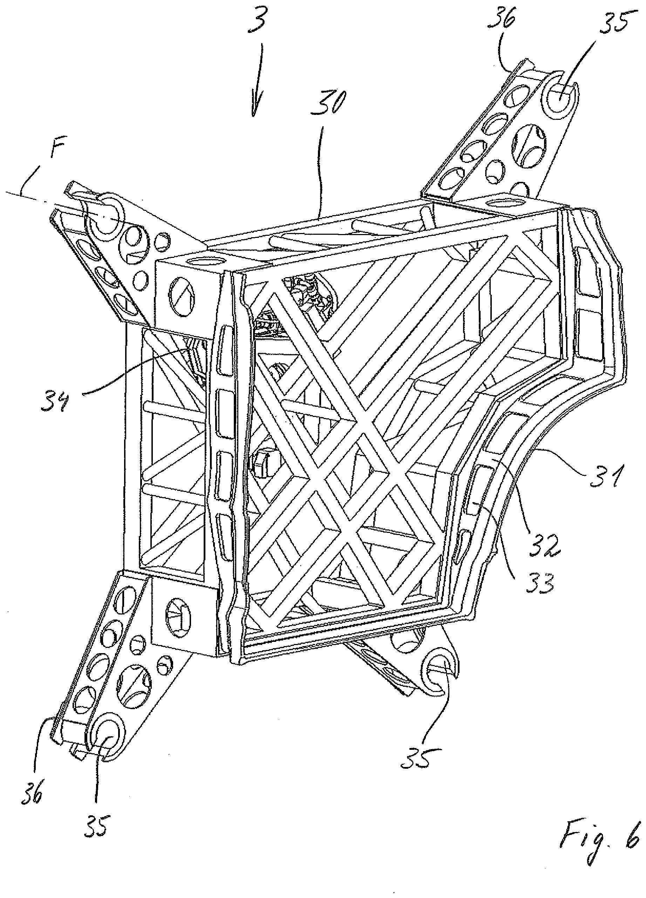

Die Bauteile B werden wie bereits kurz anhand der Figur 8 erläutert mittels der Niederhalter 3 und 5 in das jeweilige Bördelbett 11 bzw. 12 gedrückt und dadurch für das Bördeln fixiert. Figur 1 zeigt die Niederhalter 3 und 5 in Ausübung jeweils der Niederhaltefunktion an der Presse. In Figur 6 ist der Niederhalter 3 stellvertretend auch für den Niederhalter 5 alleine, d. h. losgelöst von der Presse, dargestellt. Der Niederhalter 3 umfasst eine Trägerstruktur 30, die wie bevorzugt, aber nur beispielhaft aus Profilblechen oder andersartigen Streben gefügt ist. Im Ganzen gesehen ist die Trägerstruktur 30 ein Fachwerk. Der Niederhalter 3 weist an einer dem Bördelbett 11 zugewandten Seite einen Niederhalterrand 31 auf, mit dem der Niederhalter 3 beim Bördeln gegen das Bauteil B drückt und dieses dadurch im Bördelbett 11 niederhält.

An der beim Bördeln dem Bördelbett 11 abgewandten Seite weist der Niederhalter 3 eine Befestigungseinrichtung 34 auf für eine Befestigung am Ende eines im Raum beweglichen Aktors, vorzugsweise Roboterarms beispielsweise eines Industrieroboters. Die Befestigungseinrichtung 34 kann insbesondere eine Andockeinrichtung für ein automatisches An- und Abdocken am und vom Aktor sein. Die Andockeinrichtung kann über eine Einrichtung zum Befestigen am Aktor auch einen Medienanschluss für beispielsweise die Versorgung des Niederhalters mit elektrischer Energie oder den Anschluss des Niederhalters an eine Druck- oder Saugeinrichtung aufweisen, insbesondere für den Anschluss eines oder mehrerer Sauger, falls ein derartiger Greifer Bestandteil des Niederhalters ist. Der Niederhalter 3 weist ferner eine nicht dargestellte Halteeinrichtung auf, mittels der das jeweilige Bauteil B am Niederhalter 3 gehalten werden kann. Die Halteeinrichtung kann insbesondere einen oder mehrere pneumatische Sauger oder einen oder mehrere mechanische Greifer aufweisen. Der Niederhalter 3 ist dementsprechend dafür eingerichtet, dass jeweilige Bauteil B₁ in einer für das Bördeln geeigneten Position relativ zum Niederhalterrand 31 zu halten und in diesem Zustand mittels des Niederhalters 3 in das Bördelbett 11 einzulegen. Der Niederhalter 3 kann somit die Niederhaltefunktion und eine Einlegefunktion erfüllen, d. h. als Niederhalter- und Einlegewerkzeug dienen. In der Serienproduktion dient er ferner vorzugsweise auch als Aufnahme- bzw. Greifwerkzeug, indem der Roboter mit dem am Roboterarm befestigten Niederhalter 3 das jeweilige Bauteil B aufnimmt zur Presse bewegt und durch den zentralen Durchgang der Bördelformeinheit 2 bis zum Bördelbett 11 führt und das Bauteil B auch gleich in das Bördelbett 11 legt und niederhält. Der Niederhalter 3 bleibt mit seinem Niederhalterrand 31 während des gesamten Bördelprozesses in Druckkontakt mit dem Bauteil B. Nach Abschluss des Bördelns wird das Bauteil B mittels des Niederhalters 3 aus dem Bördelbett 11 genommen und in eine Ablagestation transportiert. Der Niederhalter 3 ist anschließend wieder frei für die Aufnahme des nächsten Bauteils B.

Um den Roboter beim Einlegen des Bauteils B zu entlasten, weist der Niederhalter 3 über den äußeren Umfang der Trägerstruktur 30 verteilt mehrere Führungsgegenelemente 35 auf, die beim Einlegen des Bauteils B in einem Führungseingriff mit den Führungselementen 15 der Basisstruktur 1 sind. Der Roboter muss den Niederhalter 3 nur in den Führungseingriff mit den Führungselementen 15 bringen, den Niederhalter 3 also mit seinen Führungsgegenelementen 35 in den Führungseingriff mit den Führungselementen 15 einfädeln und anschließend im Führungseingriff in Pressrichtung F bewegen.

Um den Roboter auch von der Funktion des Niederhaltens zu entlasten, ist der Niederhalter 3 mit Spanngegenelementen 36 ausgestattet, die in einem Spanneingriff mit den Spannelementen 16 der Basisstruktur 1 (Figuren 1 und 3) den Niederhalter 3 in Richtung auf das Bördelbett 11 spannen. Die Spannelemente 16 und Spanngegenelemente 36 gelangen am Ende der geführten Einlegebewegung miteinander in den Spanneingriff. Der Spanneingriff ist einem Schraub- bzw. Spindeleingriff ähnlich ausgeführt. Die Spannelemente 16 und Spannegegenelemente 36 wirken zum axialen Spannen wie Schraube und Mutter zusammen. Die Spannelemente 16 und Spanngegenelemente 36 erzeugen im Spanneingriff durch Keilwirkung die zum Niederhalten erforderliche Niederhaltekraft. Die Spannelemente 16 und die Spanngegenelemente 36 wirken gleichzeitig als Verriegelungselemente, indem sie den Niederhalter 3 in der Niederhalteposition sichern. Die Spanngegenelemente 36 sind jeweils an der dem Bördelbett 11 abgewandten Seite des Niederhalters 3 als ein um das Führungsgegenelement 35 verlaufender Gewindegang geformt, steigen also jeweils schraubenförmig in axialer Richtung an. Die auf diese Weise gebildete Spanneinrichtung wirkt ferner wie ein Bajonettverschluss, indem die Führungsgegenelemente 35 jeweils einen axial erstreckten Schlitz aufweisen, durch den beim Einlegen des Bauteils B das jeweilige Spannelement 16 ragt und am Ende der Einlegbewegung wieder austritt, so dass dann die Führungselemente 15 mittels der Spannantriebe 17 verdreht werden können, um im Spanneingriff mit den Spanngegenelementen 36 den Niederhalter 3 axial in Richtung auf das Bördelbett 11 zu spannen.

Die Verhältnisse beim anderen Niederhalter 5 sind die gleichen. Die funktionsgleichen Komponenten des Niederhalters 5 sind im Vergleich zu den jeweils funktionsgleichen Komponenten des Niederhalters 3 um die Zahl 20 erhöht, entsprechend sind dessen Trägerstruktur mit 50, der Niederhalterrand mit 51 etc. bezeichnet.

In Figur 7 sind die Niederhalter 3 und 5 in ihrer Niederhalteposition relativ zum jeweils zugeordneten Bördelbett 11 bzw. 12 dargestellt. Die Bördelformeinheiten 2 und 4 sind lediglich zu Darstellungszwecken weggelassen worden, tatsächlich muss man sich die Bördelformeinheiten 2 und 4 wie in Figur 1 dargestellt hinzudenken.

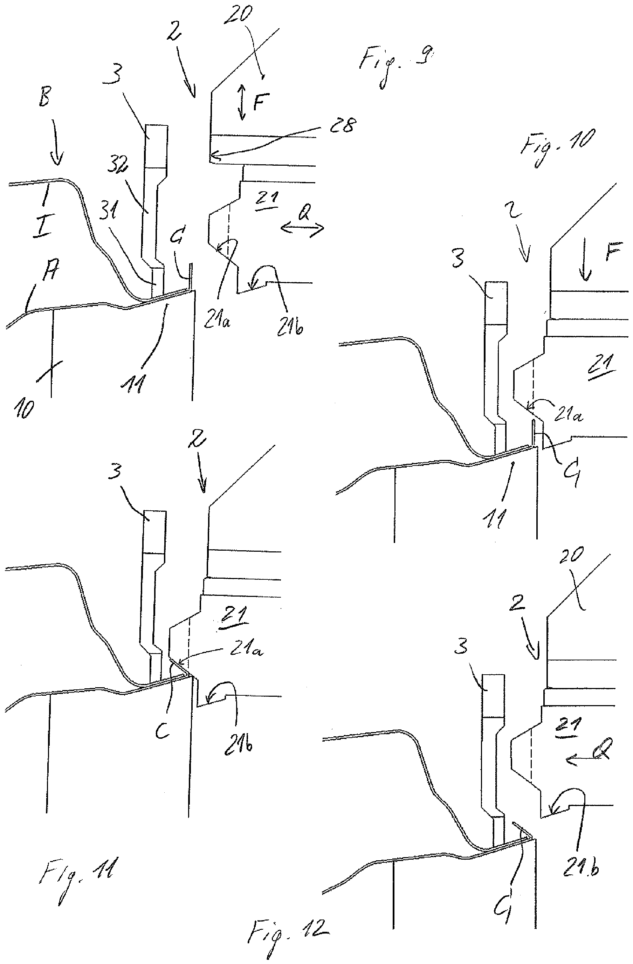

Die Figuren 9 bis 16 veranschaulichen einen zweistufigen Bördelprozess in Form einer Sequenz der Bewegungen der Bördelformeinheit 2 und der daran angeordneten Bördelformen 21.

In Figur 9 befindet sich die Bördelformeinheit 2 in ihrer vom Bördelbett 11 abgerückten Endposition. Die Bördelformeinheiten 21 befinden sich sowohl hinsichtlich der Pressrichtung F als auch der Querrichtung Q in von dem Bördelbett 11 abgerückten Positionen. Die Bördelformen 21 sind wie bereits erläutert gemeinsam mit der Trägerstruktur 20 der Bördelformeinheit 2 in und gegen die Pressrichtung F und relativ zur Trägerstruktur 20 in Querrichtung Q hin und her beweglich, wie dies in Figur 9 durch den jeweils doppelten Richtungspfeil F und Q angedeutet ist. Das Bauteil B ist mittels des Niederhalters 3 in das Bördelbett 11 eingelegt worden, und der Niederhalter 3 drückt mit seinem Niederhalterand 31 längs des Bauteilflansches C den angrenzenden Randbereich des Bauteils B, im Ausführungsbeispiel die aufeinander liegenden Randbereiche der Teile A und I aneinander und gemeinsam gegen das Bördelbett 11.

Die Bördelformen 21 sind für ein zweistufiges Bördeln, nämlich ein Vor- und ein Fertigbördeln, eingerichtet, indem sie jeweils eine erste Bördelfläche 21a zum Vorbördeln und eine zweite Bördelfläche 21b zum Fertigbördeln aufweisen. Die Bördelfläche 21a steht in Querrichtung über die Bördelfläche 21b vor.

Der erste Bördelschritt wird durch eine Querbewegung der Bördelformen 21, in Bezug auf die Pressrichtung F radial nach außen, eingeleitet. In Figur 10 ist diese Querbewegung ausgeführt, so dass die Bördelformen 21 jeweils mit ihrer ersten Bördelfläche 21a über dem Flansch C stehen. Aus dieser Position wird die gesamte Bördelformeinheit 2, d. h. die Trägerstruktur 20 gemeinsam mit den daran angeordneten Bördelformen 21, in Pressrichtung F bewegt. Dies ist in Figur 10 durch den Richtungspfeil F angedeutet. Am Ende dieses Presshubs nimmt die gesamte Bördelformeinheit 2 die in Figur 11 dargestellte Position ein. Der Flansch C wird beim Presshub um einen ersten Winkel umgelegt. Anschließend wird die Bördelformeinheit 2 gegen die Pressrichtung F vom Bördelbett 11 wegbewegt, bis sie die in Figur 12 dargestellte Position einnimmt.

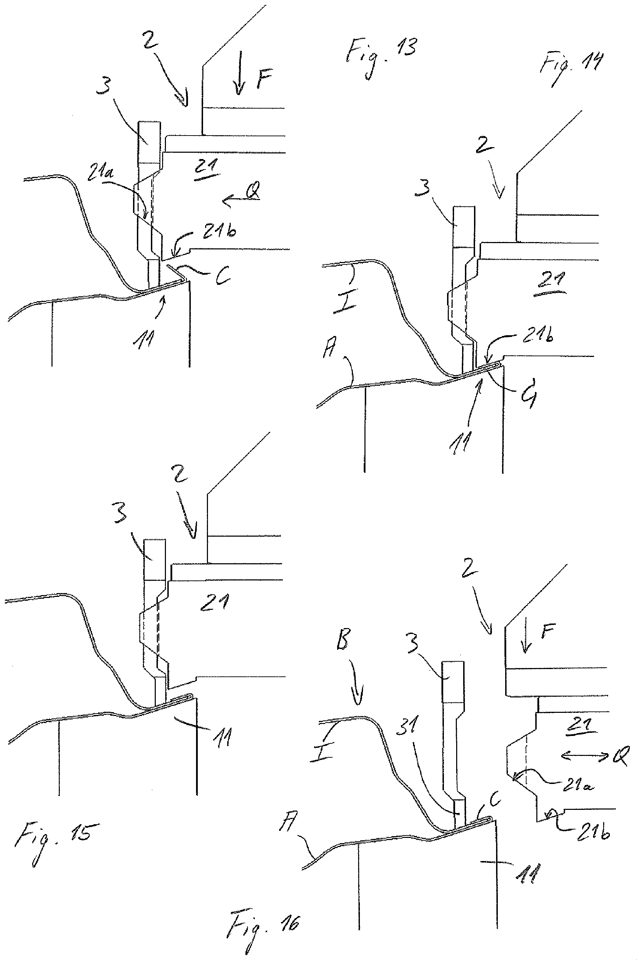

Im Rahmen des nächsten Bördelschritts werden zunächst die Bördelformen 21 aus ihren in Figur 12 eingenommenen Positionen in Querrichtung Q relativ zur Trägerstruktur 20 über das Bördelbett 11 und den teilweise umgelegten Flansch C vorbewegt. Figur 13 zeigt die Anordnung mit den bereits über dem Flansch C befindlichen Bördelformen 21, von denen stellvertretend für die weiteren in sämtlichen Figuren 9 bis 16 nur eine dargestellt ist. Nun wird mit den über dem Flansch C befindlichen Bördelformen 21 wieder die gesamte Bördelformeinheit 2 in Pressrichtung F bewegt. Am Ende dieses zweiten Presshubs nehmen die Bördelformen 21 die in Figur 14 dargestellte Position ein. Der Flansch C wurde durch den Druckkontakt mit der Bördelfläche 21b vollständig umgelegt und dadurch die Falzverbindung hergestellt. Die Bördelformeinheit 2 wird anschließend wieder gegen die Pressrichtung vom Falzbett 11 wegbewegt, bis in die in Figur 15 eingenommene Endposition. Während oder erst nach vollständiger Ausführung des Rückhubs werden die Bördelformen 21 in Querrichtung Q wieder zurückbewegt, so dass das Bauteil B von der Bördelformeinheit 2 frei ist, wie in Figur 16 dargestellt, und mittels des Niederhalters 3 aus dem Bördelbett 11 genommen werden kann.

Noch in dem in Figur 16 dargestellten Zustand, in dem der Niederhalter 3 das bereits durch Bördeln gefügte Bauteil B gegen das Falzbett 11 drückt und dadurch niederhält und ferner die Bördelform 21 oder die mehreren Bördelformen 21 jeweils in Querrichtung Q vom Niederhalter 3 abgerückt sind, kann optional ein zusätzlicher Fügeprozess durchgeführt werden. Der zusätzliche Fügeprozess kann insbesondere dazu dienen, Außenteil A und Innenteil I zusätzlich relativ zueinander zu fixieren. Bei dem zusätzlichen Fügeprozess kann es sich insbesondere um einen Schweißprozess wie etwa ein Punktschweißen bzw. Heftschweißen handeln. Der Niederhalter 3, der mit seinem Niederhalterand 31 nahe beim umgelegten Flansch C gegen das Innenteil I drückt, kann bei dem Schweißen als Masseelektrode dienen. Eine Schweißelektrode, die insbesondere an der Spitze einer schlanken Schweißlanze angeordnet sein kann, kann zwischen der Bördelformeinheit 2 und dem Niederhalter 3 bis gegen den Flansch C bewegt und gegen diesen gedrückt werden, um eine lokale Schweißverbindung herzustellen. Eine Schweißelektrode kann auch integrierter Bestandteil von einer oder mehreren Bördelformen 21 sein. Eine derart integrierte Schweißelektrode kann im Bereich der dem Vorbördeln dienenden Bördelfläche 21a vorzugsweise in Pressrichtung F beweglich angeordnet sein. Die Bördelform(en) 21 würden zum Schweißen mit der jeweiligen Bördelfläche 21a in Querrichtung Q über den Flansch C bewegt und die jeweilige integrierte Schweißelektrode gegen den Flansch C gedrückt werden. Für die Durchführung des Schweißprozesses mit integrierter Schweißelektrode muss die Bördelform 21 nach dem Bördeln auch nicht bis in die abgerückte Position bewegt werden. Es genügt vielmehr, wenn die Bördelform 21 aus der in Figur 15 eingenommenen Position nur mit der Bördelfläche 21a bis über den Flansch C querbewegt und anschließend entweder nur die bewegliche Schweißelektrode oder die Bördelformeinheit 2 und optional zusätzlich die Schweißelektrode in Pressrichtung F bewegt wird oder jeweils werden. In noch einer Modifikation kann eine Schweißelektrode im Bereich der Bördelfläche 21b für das Fertigbördeln angeordnet sein. In solch einer Modifikation kann unmittelbar im Anschluss an das Fertigbördeln oder direkt am Ende des Presshubs, in der in Figur 14 dargestellten Position, der Schweißprozess durchgeführt werden. Durch die Kontaktierung der Elektroden jeweils an der dem Bördelbett 11 abgewandten Seite der Teile A und I kann eine Fixierung dieser Teile A und I relativ zueinander verstärkt werden.

Damit der Niederhalter 3 über den gesamten Bördelprozess hinweg ständig in der Niederhalteposition verbleiben kann, um das Bauteil B bzw. dessen Teile A und I über den gesamten Bördelprozess am Bördelbett 11 zu fixieren, sind der Niederhalter 3 und die Bördelformen 21 einander angepasst geformt.

In den Figuren 8 bis 16 sind ein Niederhalter 3 und eine der Bördelformen 21 in einer ersten Variante solch einer Anpassung dargestellt. Der Niederhalter 3 der ersten Variante weist in einem an den Niederhalterand 31 angrenzenden Bereich vorstehende Bereiche 32 in Form von Stegen und zurückstehende Bereiche 33 in Form von Durchgängen auf. Die Bördelformen 21 weisen im Bereich in Querrichtung Q ihrer jeweiligen Bördelfläche 21a ebenfalls in Querrichtung Q vorstehende und zurückstehende Bereiche auf, wobei längs des Bördelbetts 11 gesehen jeweils ein vorstehender Bereich 32 des Niederhalters 3 mit einem zurückstehenden Bereich der Bördelform 21 und ein zurückstehender Bereich 33 mit einem vorstehenden Bereich der Bördelform 21 überlappt. Aufgrund dieser Anordnung von vorstehenden und zurückstehenden Bereichen sowohl beim Niederhalter 3 als auch bei den Bördelformen 21 können der Niederhalter 3 und die Bördelformen 21 wie in den Figuren 13, 14 und 15 erkennbar, in Querrichtung Q ineinander greifen, so dass die Bördelformen 21 im Bereich jeweils der ersten Bördelfläche 21a den Niederhalter 3 im Bereich der zurückstehenden Bereiche 33 durchgreifen. Die Bördelformen 21 können daher beide Bördelschritte trotz der Ausbildung beider Bördelflächen 21a und 21b an jeweils der gleichen Bördelform 21 ausführen und der Niederhalter 3 über den gesamten Bördelprozess hinweg ständig in der Niederhalteposition verbleiben.

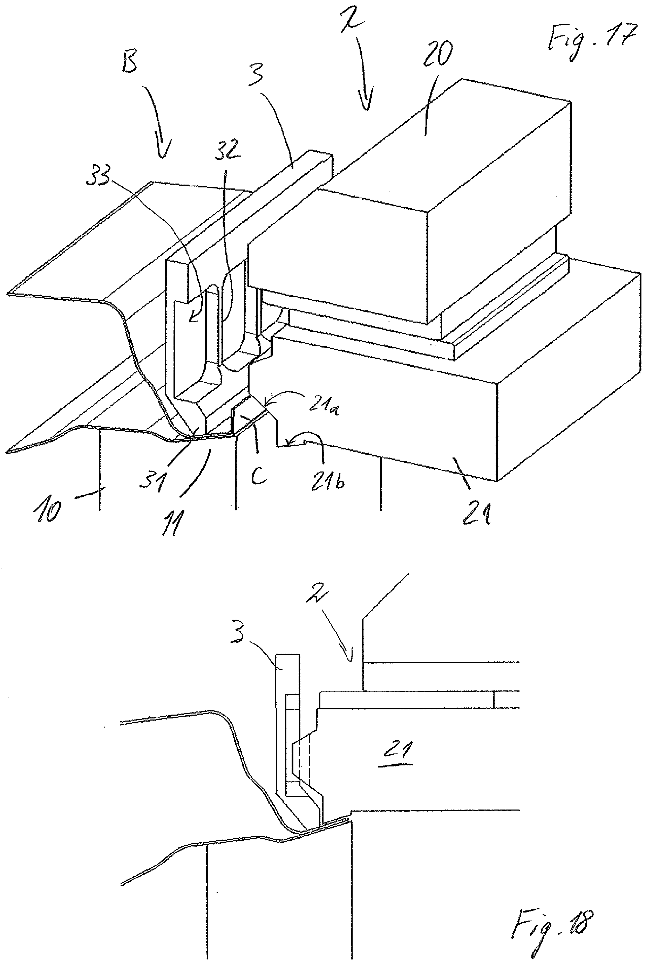

Die Figuren 17 und 18 zeigen einen Niederhalter 3 und eine Bördelformeinheit 2 mit Bördelformen 21 in einer zweiten Variante. Der Niederhalter 3 der zweiten Variante unterscheidet sich vom Niederhalter 3 der ersten Variante nur dadurch, dass die zurückstehenden Bereiche 33 nicht als Durchgänge, sondern als Taschen bzw. Vertiefungen in dem an den Niederhalterand 31 angrenzenden Bereich geformt sind. Die Bördelform 21 durchgreift den Niederhalter 3 daher nicht beim Fertigbördeln, sondern ragt mit ihren vorstehenden Bereichen wie in Figur 18 erkennbar nur in die zurückstehenden Bereiche 33 hinein. Ansonsten entspricht die zweite Variante der ersten.

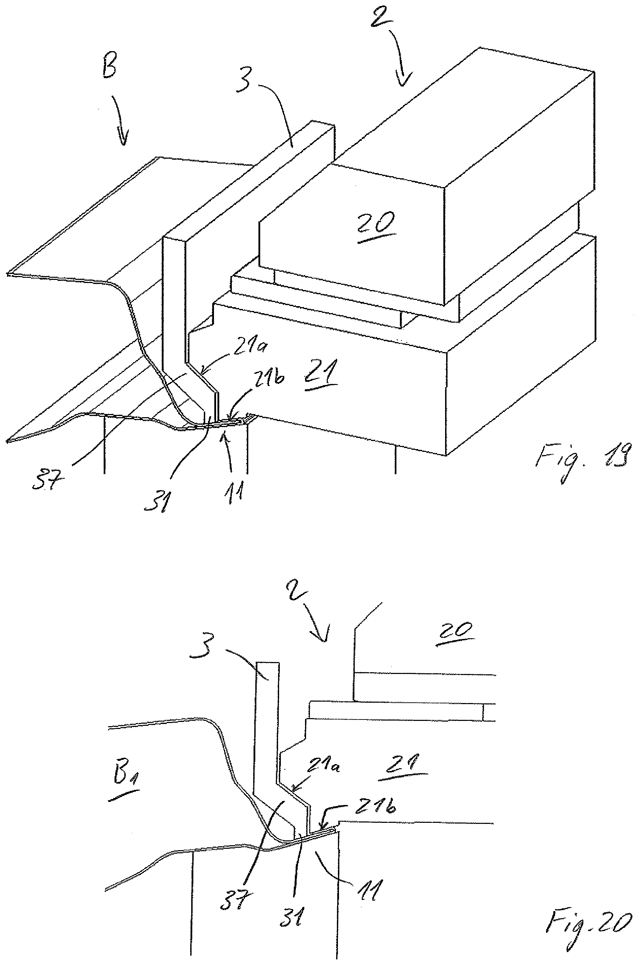

In den Figuren 19 und 20 ist eine Anordnung aus Niederhalter 3 und Bördelformeinheit 2 in einer dritten Variante dargestellt. In der dritten Variante weist der Niederhalter 3 in dem an den Niederhalterand 31 grenzenden Bereich eine Kröpfung 37 auf, die so geformt ist, dass sich der Niederhalter 3 in diesem Bereich in Querrichtung Q von der jeweils gegenüberliegenden Bördelform 21 weg kröpft. Die Bördelformen 21 können daher beim zweiten Bördelschritt mit ihren in Querrichtung vorstehenden Bereichen, in denen jeweils die erste Bördelfläche 21a gebildet ist, über den Niederhalterand 31 vorragen, den Niederhalterand 31 also vom Bördelbett 11 aus gesehen übergreifen. Auch dies ermöglicht ein Bördeln in mehreren Bördelschritten mit jeweils den gleichen Bördelformen 21 und kontinuierlich in der Niederhalteposition befindlichem Niederhalter 3.

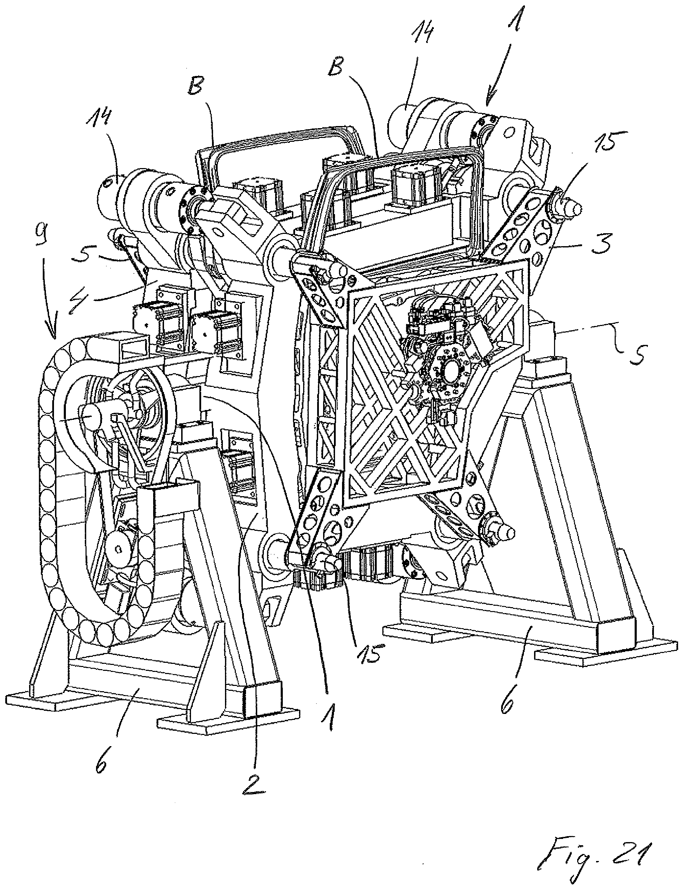

Figur 21 zeigt eine Bördelpresse in einem zweiten Ausführungsbeispiel. Die Bördelpresse ist wieder als Doppelpresse ausgeführt mit einer zentralen Basisstruktur 1, einer ersten Bördelformeinheit 2, einer zweiten Bördelformeinheit 4, einem ersten Niederhalter 3, einem zweiten Niederhalter 5 und einem Pressantrieb 14. Diese Hauptkomponenten der Bördelpresse entsprechen dem ersten Ausführungsbeispiel. Die Bördelpresse ist wie im ersten Ausführungsbeispiel als Doppelpresse in einer Sandwichanordnung gebildet, in der zwei Einfachpressen wie im ersten Ausführungsbeispiel an der zentralen, gemeinsamen Basisstruktur 1 Rücken-an-Rücken angeordnet sind.

Im Unterschied zum ersten Ausführungsbeispiel ist diese Doppelpresse um eine horizontale Achse S schwenkbar in einem stationär angeordneten Gestell 6 gelagert. Im Rahmen der Schwenkbewegung kann die gesamte Presse aus der in Figur 21 eingenommenen stehenden Ausrichtung um die Schwenkachse S in eine horizontale, liegende Ausrichtung geschwenkt werden, in der entweder das Bördelbett 11 oder das Bördelbett 12 nach oben und das andere Bördelbett nach unten weist.

Die Bördelpresse umfasst einen Schwenkantrieb 9, mit dem die Schwenkbewegung bewirkt werden kann. Zum Schwenken ist die Bördelpresse über ihre Basisstruktur 1 im Gestell 6 schwenkbar gelagert. Der Schwenkantrieb 9 umfasst einen Schwenkmotor, der am Gestell 6 abgestützt ist, und einen Zugmitteltrieb, mit dem eine Drehbewegung des Schwenkmotors auf die Basisstruktur 1 und damit auf die gesamte Presse übertragen wird.

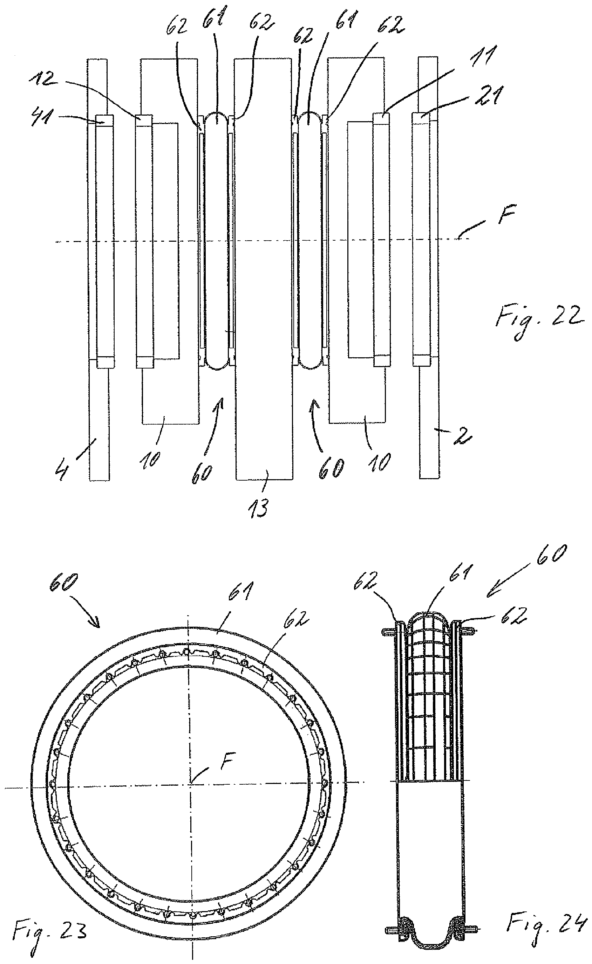

Figur 22 zeigt eine Bördelpresse in einem dritten Ausführungsbeispiel. Auch diese Bördelpresse ist als Doppelpresse gebildet, umfasst also zwei Einfachpressen. Im dritten Ausführungsbeispiel ist der hydraulische Pressantrieb 14 der beiden anderen Ausführungsbeispiele durch einen Druckbalgantrieb ersetzt, der die Pressbewegungen bewirkt. Das Gestell der bislang beschriebenen Bördelpressen ist durch eine zentrale Stützstruktur ersetzt, die ebenfalls als Gestell 13 bezeichnet wird. Im Unterschied zu den anderen Ausführungsbeispielen führen nicht die Bördelformeinheiten 2 und 4, sondern die beiden Trägerstrukturen 10 und somit deren Bördelbetten 11 und 12 die Pressbewegungen aus, während die Bördelformeinheiten 2 und 4 in ihrer jeweiligen Pressrichtung F unbeweglich angeordnet sind.

Die Bördelpresse des dritten Ausführungsbeispiels ist ebenfalls senkrecht stehend ausgerichtet. Zur rechten Seite des Gestells 13 sind eine rechte Trägerstruktur 10 und die Bördelformeinheit 2 und zur linken Seite die linke Trägerstruktur 10 und die zweite Bördelformeinheit 4 angeordnet. Zwischen dem Gestell und der rechten Trägerstruktur 10 ist ein erster Druckbalg 60 und zwischen dem Gestell 13 und der linken Trägerstruktur 10 ein zweiter Druckbalg 60 angeordnet, die jeweils den Pressantrieb bilden. Bei Druckbeaufschlagung dehnt sich der erste Druckbalg 60 und bewegt dadurch die rechte Trägerstruktur 1 in Richtung auf die Bördelformeinheit 2. Ebenso dehnt sich der zweite Druckbalg 60 bei Druckbeaufschlagung und bewegt dadurch die linke Trägerstruktur 10 in Richtung auf die zweite Bördelformeinheit 4. Von den sich aus dieser Anordnung ergebenden Unterschieden abgesehen können die Trägerstrukturen 10 denen der beiden anderen Ausführungsbeispiele entsprechen, wobei jede der Trägerstrukturen 10 des dritten Ausführungsbeispiels nur jeweils ein Bördelbett 11 bzw. 12 aufweist. Die beiden Einfachpressen 10, 2 und 10, 4 entsprechen von der Umkehr der Kinematik und dem Pressantrieb abgesehen den Einfachpressen der beiden anderen Ausführungsbeispiele.

In einer Modifikation können die beiden Druckbälge 60 durch einen einzigen Druckbalg ersetzt werden. Das zentrale Gestell 13 kann in solch einer Modifikation entfallen. Der nur eine einzige Druckbalg kann allerdings die beiden Trägerstrukturen 10 nur gleichzeitig gegenläufig in Richtung auf die jeweils zugeordnete Bördelformeinheit 2 bzw. 4 bewegen. Den Rückhub würde in solch einer Modifikation eine Rückhubeinrichtung bewirken, beispielsweise eine mechanische oder pneumatische Federeinrichtung oder auch eine elektromotorische Rückhubeinrichtung.

Zur Bördelpresse des dritten Ausführungsbeispiels sei noch nachgetragen, dass die Trägerstrukturen 10 wie in den beiden anderen Ausführungsbeispielen Führungselemente vergleichbar den Führungselementen 15 und die Bördelformeinheiten 2 und 4 entsprechend Führungsgegenelemente vergleichbar den Führungsgegenelementen 25 und 45 aufweisen können. Stab- oder lanzenförmige Führungselemente können, wie in den anderen Ausführungsbeispielen ebenfalls, stattdessen auch an den Bördelformeinheiten 2 und 4 oder dem Gestell 13 und entsprechende Führungsgegenelemente vergleichbar den Führungsgegenelementen 25 und 45 an den Trägerstrukturen 10 vorgesehen sein.

In den Figuren 23 und 24 ist einer der beiden Druckbälge 60 in einer Draufsicht und in einer Seitenansicht dargestellt. Die Druckbälge 60 umfassen jeweils einen nachgiebigen Balgteil bzw. eine nachgiebige Balgwand 61, der bzw. die mit Druck, vorzugsweise Druckluft, beaufschlagt und im Druck entlastet werden kann, und zwei Lagerstrukturen 62 und 63 für die Befestigung an dem Gestell 13 oder einer anderen Stützstruktur und der jeweils zugeordneten Trägerstruktur 10. Die Lagerstrukturen 62 und 63 können ringförmig oder auch vollflächig ausgeführt sein. Die nachgiebige Balgwand 61 kann wie im Ausführungsbeispiel auf nahezu den äußeren Umfang des jeweiligen Balgs 60 beschränkt sein. So können die Lagerstrukturen 62 und 63 beispielsweise Kreisscheiben oder an den Verlauf des Bördelbetts 11 oder 12 angepasst geformte Scheiben sein. Die nachgiebige Balgwand 61 kann sich entlang des Umfangsrands der wie in Figur 24 einander beabstandet gegenüberliegenden Lagerstrukturen 62 und 63 erstrecken und über den Umfangsrand fluiddicht mit den beiden Lagerstrukturen 62 und 63 verbunden sein. Die nachgiebige Balgwand 61 entspricht grob gesehen dem auf einer Felge angeordneten Reifen eines Kraftfahrzeugs. Sind die links und rechts der nachgiebigen Balgwand 61 angeordneten Strukturen der Bördelpresse, im Ausführungsbeispiel die Trägerstrukturen 10 und das Gestell 13, über die Fläche des jeweiligen Druckbalgs 60 gesehen fluiddicht, können anstelle scheibenförmiger Lagerstrukturen 62 und 63 auch ringförmige Lagerstrukturen 62 und 63 verwendet werden. Es muss lediglich für eine fluiddichte Verbindung derartiger Lagerstrukturen 62 und 63 mit der jeweiligen Pressenstruktur 10, 13 gesorgt werden. Dies kann wie im Ausführungsbeispiel durch eine entlang des Umfangsrands ausreichend dichte Schraubverbindung, optional unter Einschluss einer Dichtung, sichergestellt werden.

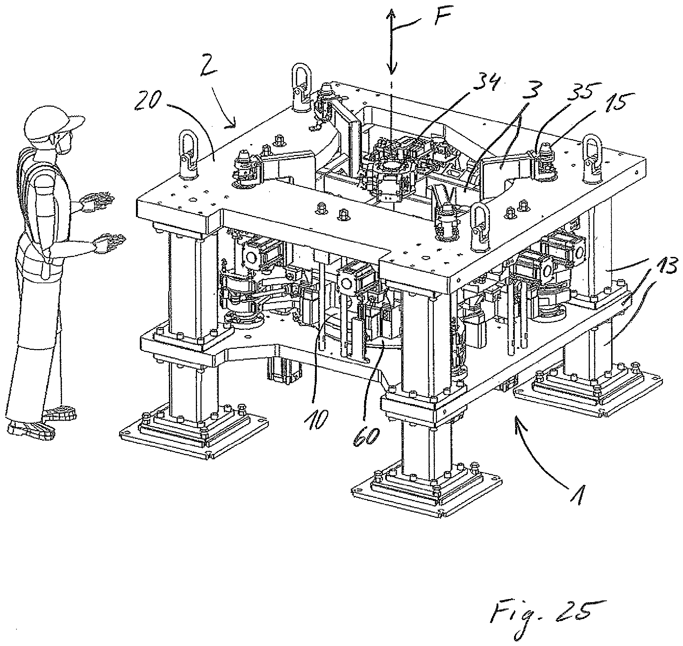

Figur 25 zeigt eine Bördelpresse eines vierten Ausführungsbeispiels, die im Unterschied zu den anderen Ausführungsbeispielen liegend angeordnet ist. Die Pressrichtung F ist entsprechend vertikal. Der grundsätzliche Aufbau entspricht jedoch dem der anderen Ausführungsbeispiele. So umfasst die Bördelpresse eine Basisstruktur 1 mit einer Trägerstruktur 10 und einem Gestell 13 und ferner eine kassettenförmige Bördelformeinheit 2 mit einer Trägerstruktur 20. Desweiteren ist ein Niederhalter 3 vorgesehen, der zum Niederhalten, vorzugsweise auch zum Einlegen und Entnehmen, eines zu bördelnden Bauteils durch den zentralen Durchgang der rahmenartigen Bördelformeinheit 2 in die in Figur 25 eingenommene Niederhalteposition bewegt werden kann. Der Niederhalter 3 weist wie in den anderen Ausführungsbeispielen an seiner Rückseite eine Befestigungseinrichtung 34 für die Befestigung an einem mehrachsigen Roboterarm auf. Die Bördelpresse weist wie in den anderen Ausführungsbeispielen axial erstreckte Führungselemente 15 auf, die den Niederhalter 3 nach dem Einfädeln seiner Führungsgegenelemente 35 axial führen, so dass der Roboter das Bauteil lediglich halten oder zum Einlegen oder Entnehmen entsprechend axial bewegen, aber nicht mehr relativ zum Falzbett in eine Richtung quer zur Pressachse F positionieren muss. Die zum Umlegen des Bauteilflansches erforderliche Presskraft wird von einem Druckbalg 60 erzeugt, der dem bereits erläuterten Druckbalg 60 entsprechen kann.

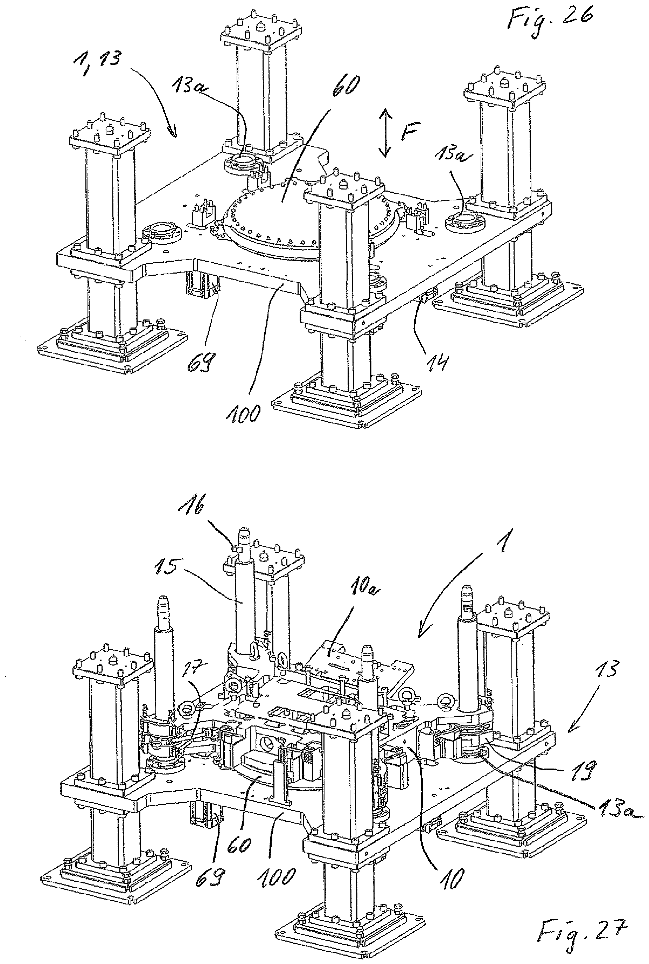

In den Figuren 26 bis 34 ist die Bördelpresse in unterschiedlichen Stadien des Zusammenbaus dargestellt, woraus sich der konstruktive Aufbau der Bördelpresse des vierten Ausführungsbeispiels leichter erschließt.

Figur 26 zeigt von der Basisstruktur 1 nur das Gestell 13 und ferner einen an dem Gestell 13 abgestützten Druckbalg 60. Das Gestell 13 umfasst eine Gestell-Trägerstruktur 100, beispielhaft wie bevorzugt eine Gestellplatte 100, die von Gestellsäulen getragen wird. Die Gestellplatte 100 kann insbesondere eine Stahlplatte von vorzugsweise wenigstens 70, bevorzugter wenigstens 80 mm Dicke sein. Der Druckbalg 60 ist in einem zentralen Bereich der Gestellplatte 100 angeordnet, wie bevorzugt auf der Oberseite der Gestellplatte 100, und fest mit dieser verbunden. Am Gestell 13 ist ferner ein Zusatzantrieb 69 abgestützt, der mehrere Antriebseinheiten umfasst, die über die Peripherie des Druckbalgs 60 verteilt angeordnet sind. Im Ausführungsbeispiel sind vier Antriebseinheiten vorgesehen. Der Zusatzantrieb 69 kann insbesondere ein Pneumatikantrieb sein. Die Antriebseinheiten weisen in Pressrichtung F hin und her bewegliche Hubelemente auf. Die Gestellplatte 10 kann durch eine nicht plattenförmige Gestell-Trägerstruktur 100 ersetzt werden, solange diese Trägerstruktur die Abstützfunktionen der Gestellplatte 100 erfüllen kann, eine Platte ist nicht zuletzt fertigungstechnisch und daher im Hinblick auf die Herstellkosten günstig.

Figur 27 zeigt die Basisstruktur 1 einschließlich der Trägerstruktur 10. Die Trägerstruktur 10 ist auf dem Druckbalg 60 angeordnet und vorzugsweise fest mit diesem verbunden, so dass die Trägerstruktur 10 sich relativ zum Druckbalg 60 zumindest in Querrichtung oder zumindest axial nicht bewegen kann. Die Trägerstruktur 10 ist relativ zum Gestell 13 in Pressrichtung F beweglich. Die Führungselemente 15 sind zwar wie in den anderen Ausführungsbeispielen Bestandteil der Basisstruktur 1, relativ zum Gestell 13 jedoch gemeinsam mit der Trägerstruktur 10 in Pressrichtung F bzw. axial beweglich. Die Führungselemente 15 werden von Führungsgegenelementen 13a des Gestells 13 axial geführt. Im Ausführungsbeispiel durchragen die Führungselemente 15 die Gestellplatte 100 im Bereich jeweils eines der Führungsgegenelemente 13a.

Die Trägerstruktur 10 weist seitlich abragende Drehführungselemente 19 auf, mittels denen die Trägerstruktur 10 axial unbeweglich mit den Führungselementen 15 verbunden ist, so dass sie bei Hubbewegungen des Druckbalgs 60 die Führungselemente 15 axial mitnimmt und dadurch relativ zum Gestell 13 geführt wird. Die Drehführungselemente 19 sind an den Außenumfang des jeweils zugeordneten Führungselements 15 angepasste Durchgänge bzw. Führungsaugen. Die Führungselemente 15 sind im Eingriff mit den Drehführungselementen 19 relativ zur Trägerstruktur 10 drehbar, um wie in den anderen Ausführungsbeispielen den Niederhalter 3 mittels der Spannelemente 16 spannen zu können.

Von der Trägerstruktur 10 ragt an einer Seite ein Ausleger 10a ab, der als Plattform für eine später noch erläuterte Zusatzbördeleinrichtung dient.

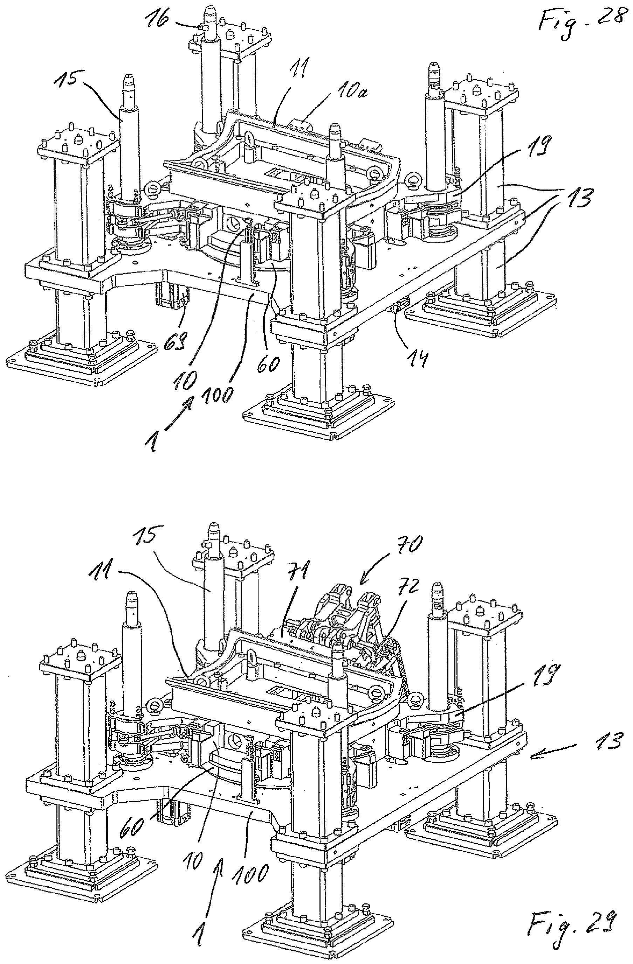

In Figur 28 ist die Basisstruktur 1 um das Bördelbett 11 komplettiert worden. Das Bördelbett 11 ist auf der Trägerstruktur 10 angeordnet und mit der Trägerstruktur 10 unbeweglich gefügt. Sind die Trägerstruktur 10 und das Bördelbett 11 wie bevorzugt lösbar miteinander verbunden, beispielsweise mittels Schraubverbindung, können mit der ansonsten unveränderten Basisstruktur 1 durch Austausch lediglich des Bördelbetts 11 Bauteile gebördelt werden, die sich in ihrer Geometrie voneinander unterscheiden. So können mit einem ersten Bördelbett 11 wie im Ausführungsbeispiel Fahrzeugtüren und mit einem austauschbaren anderen Bördelbett 11 beispielsweise Motorhauben, Heckklappen oder Fahrzeugtüren eines anderen Fahrzeugmodels oder andere Türen des gleichen Fahrzeugmodels gebördelt werden. Im Hinblick auf die Austauschbarkeit ist es vorteilhaft, wenn das Bördelbett 11 sämtlicher Funktionen, die nicht unerlässlich erforderlich sind, um dem jeweiligen Bauteil die für das Bördeln erforderliche Auflage zu bieten, entledigt ist. Es umfasst in bevorzugten Ausführungen wie im Beispiel daher lediglich eine Seitenwandstruktur, deren Verlauf an den Verlauf des zu bördelnden Flansches angepasst ist und an deren einen Stirnseite die Auflage für das Bauteil geformt ist, ferner die für eine permanente oder bevorzugt lösbare Fügeverbindung mit der Trägerstruktur 10 erforderlichen Fügeelemente sowie optional ein oder mehrere Anschläge für die Limitierung des Bördelhubs oder der mehreren Bördelhübe. Zum Bördelbett 11 müssen insbesondere nicht die Führungsgegenelemente 19 gehören, diese sind vorteilhafterweise Bestandteil der im Falle eines Bördelbettwechsels gleichbleibenden Trägerstruktur 10.

Figur 29 zeigt die Basisstruktur 1 nach der Montage einer bereits erwähnten Zusatzbördeleinrichtung 70. Die Zusatzbördeleinrichtung 70 ist auf oder an dem Ausleger 10a der Trägerstruktur 10 angeordnet. Die Zusatzbördeleinrichtung 70 umfasst einen Bördelschieber 71 und einen Schieberantrieb 72. Der Bördelschieber 71 kann mittels des Schieberantriebs 72 in eine Richtung quer zur Pressrichtung F in Überlappung mit dem Bördelbett 11 vor, und aus der Überlappung wieder zurück bewegt werden. Mittels der Zusatzbördeleinrichtung 70 kann insbesondere ein Flansch in einen Schlitz des Bauteils, beispielsweise einen Fensterschlitz einer Fahrzeugtür, umgelegt werden.

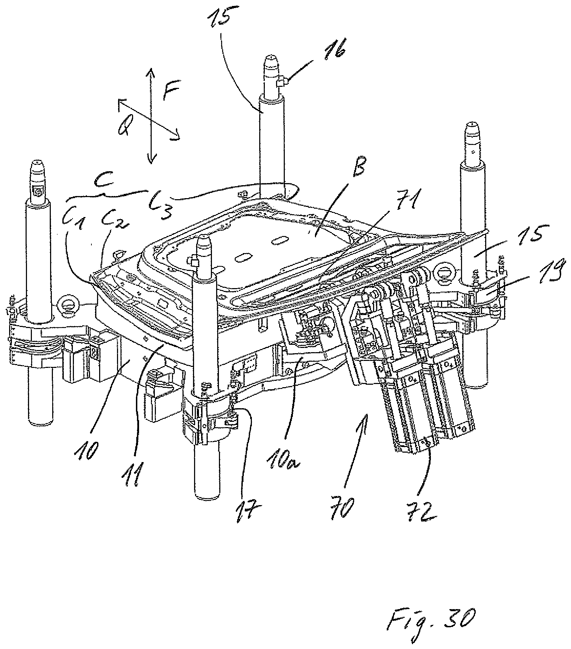

Figur 30 zeigt von der Basisstruktur 1 nur die Trägerstruktur 10 mit dem Ausleger 10a, die relativ zur Trägerstruktur 10 axial unbeweglichen, aber relativ zur Trägerstruktur 10 drehbeweglichen Führungselemente 15 und das auf der Trägerstruktur 10 montierte Bördelbett 11. Dargestellt ist ferner die Zusatzbördeleinrichtung 70, die sich am Ausleger 10a abstützt. Auf dem Bördelbett 11 ist ein Bauteil B positioniert. Bei dem Bauteil B handelt es sich wie in den anderen Ausführungsbeispielen um eine Fahrzeugtür. Der mittels der Bördelformeinheit 2 umzulegende Flansch C erstreckt sich längs des linken und des rechten sowie des unteren Rands des Bauteils B und somit, wie bei Fahrzeugtüren üblich, über einen Winkelbereich von 180° ± 20° längs des äußeren Rands des Bauteils B. Der Flansch C ist zweckmäßigerweise in eckförmigen Bereichen, wie etwa in den Bereichen, in denen die beiden Seitenränder jeweils in den unteren Rand übergehen, unterbrochen. Im gewählten Beispiel, einer Fahrzeugtür B, setzt sich der Flansch C aus mehreren Flanschabschnitten zusammen und umfasst insbesondere einen ersten Seitenrandflansch C₁, einen Bodenrandflansch C₂ und einen zweiten Seitenrandflansch C₃. In grober Näherung weist der Flansch C einen U-förmigen Verlauf auf, wobei allerdings die einander gegenüberliegenden Seitenrandflansche C₁ und C₃ im Allgemeinen nicht parallel zueinander sind und ferner einen gekrümmten Verlauf aufweisen. Der Bodenrandflansch C₂ verläuft zumindest im Wesentlichen gerade, kann grundsätzlich aber ebenfalls gekrümmt sein.

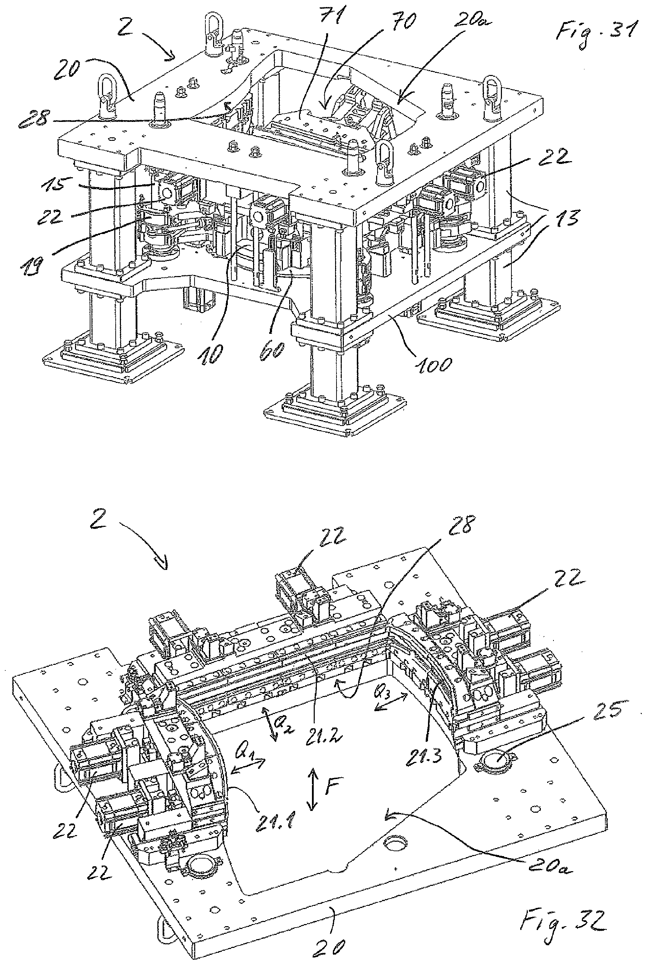

In Figur 31 ist die Bördelpresse des vierten Ausführungsbeispiels um die Bördelformeinheit 2 komplettiert. Die Trägerstruktur 20 der Bördelformeinheit 2 ist im Unterschied zu den anderen Ausführungsbeispielen mit dem Gestell 13 der Basisstruktur 1 unbeweglich verbunden. Wie bevorzugt ruht die Trägerstruktur 20 auf den Säulen des Gestells 13. Die Trägerstruktur 20 ist vergleichbar mit der Gestellplatte 100 als Platte, vorzugsweise Stahlplatte, von bevorzugt wenigstens 70, bevorzugter wenigstens 80 mm Dicke gebildet.

Figur 32 zeigt die Bördelformeinheit 2 vor der Montage in einer isometrischen Sicht auf die Unterseite, die im montierten Zustand dem Bördelbett 11 zugewandt ist. Die Trägerstruktur 20 weist wie in den anderen Ausführungsbeispielen einen zentralen Durchgang auf, der von einem an die Kontur des Bauteilflansches C angepassten Innenumfang 28 begrenzt wird. Längs des Innenumfangs 28 des Durchgangs sind mehrere Bördelformen 21 angeordnet, die in Zuordnung zum jeweils umzulegenden Flansch Cᵢ mit 21.i bezeichnet sind. Im Ausführungsbeispiel sind dem Verlauf des Flansches C entsprechend, der wie in Figur 30 dargestellt in die drei Flanschabschnitte C₁ C₂ und C₃ unterteilt werden kann, Bördelformen 21.i vorgesehen und in der Figur in der jeweiligen Zuordnung bezeichnet, nämlich eine oder mehrere Bördelformen 21.1 für den Seitenrandflansch C₁, eine oder mehrere Bördelformen 21.2 für den Bodenrandflansch C₂ und eine oder mehrere Bördelformen 21.3 für den anderen Seitenrandflansch C₃. Die Bördelformen 21.i sind relativ zur Trägerstruktur 20 in jeweils eine Querrichtung Qᵢ hin und her beweglich, wofür jeweils zugeordnete Bördelformantriebe 22 entsprechend den anderen Ausführungsbeispielen vorgesehen sind. Die Querrichtungen Qᵢ weisen jeweils quer zur Pressrichtung F und quer zum jeweils zugeordneten Flansch Cᵢ und sind der Zuordnung entsprechend mit Q₁, Q₂ und Q₃ bezeichnet.

Die Bördelformen 21.1 und 21.3, die sich über den Durchgang der Trägerstruktur 20 gegenüberliegen, können parallel zueinander querbeweglich sein, im Allgemeinen können sich die Querrichtungen Q₁ und Q₃ jedoch voneinander unterscheiden, insbesondere dann, wenn die einander gegenüberliegenden Seitenrandflansche C₁ und C₃ zumindest nicht im Wesentlichen parallel zueinander weisen. Die Winkelabweichung von der Parallelität der Querrichtungen Q₁ und Q₃ wird bei vielen der im Fahrzeugbau üblichen Bauteilen, wie etwa Türen, Hauben, Klappen und Schiebedächern, jedoch nur einige Winkelgrad, beispielsweise maximal 20° oder maximal 10°, ausmachen. Die Richtungen Q₁ und Q₃ der über den Durchgang der Trägerstruktur 20 einander zugewandt gegenüberliegenden Bördelformen 21.1 und 21.3 werden in den meisten Anwendungen zumindest im Wesentlichen orthogonal zu der oder den quer zu den Bördelformen 21.1 und 21.3 angeordneten Bördelformen 21.2 weisen. Mögliche Abweichungen von der Orthogonalität betragen in den meisten Fällen höchstens 20° oder höchstens 10°. Hinsichtlich der Beweglichkeit, den Antrieben 22 und deren Kopplung mit der jeweils zugeordneten Bördelform 21.i und der Lagerung der Bördelformen 21.i an der Trägerstruktur 20 kann die Bördelformeinheit 2 des vierten Ausführungsbeispiels den Bördelformeinheiten 2 der anderen Ausführungsbeispielen entsprechen. So sind beispielsweise auch die Führungsgegenelemente 25 axiale Durchgänge durch die Trägerstruktur 20.

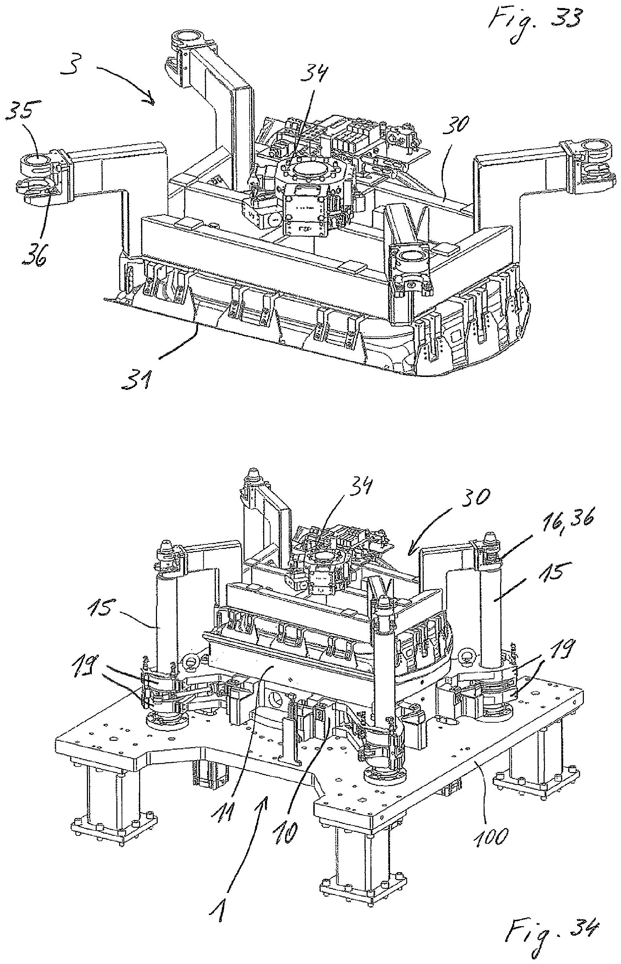

Figur 33 zeigt den Niederhalter 3 des vierten Ausführungsbeispiels. Der Niederhalter 3 weist wie in den anderen Ausführungsbeispielen insbesondere einen dem Verlauf nach an die Kontur des umzulegenden Flansches C angepassten freien Niederhalterrand 31, Führungsgegenelemente 35 für die Führungselemente 15 und Spanngegenelemente 36 für die Spannelemente 16 auf. Er entspricht hinsichtlich seiner Funktionalität dem Niederhalter 3 der anderen Ausführungsbeispiele. Er unterscheidet sich von den anderen Ausführungsbeispielen lediglich in der Bauweise seiner Trägerstruktur 30. Die Trägerstruktur 30 weist weniger, dafür im Querschnitt größere Strukturelemente als in den anderen Ausführungsbeispielen auf, die aber ebenfalls querverstrebt sind. Im zentralen Bereich ist an der Rückseite des Niederhalters 3 die Befestigungseinrichtung 34 für den Roboter angeordnet.

Figur 34 zeigt der Figur 7 entsprechend die Bördelpresse mit der Basisstruktur 1 und dem Niederhalter 3, aber ohne die Bördelformeinheit 2, die lediglich zur Illustration der vom Niederhalter 3 beim Bördeln relativ zum Bördelbett 11 eingenommenen Position weggelassen wurde.

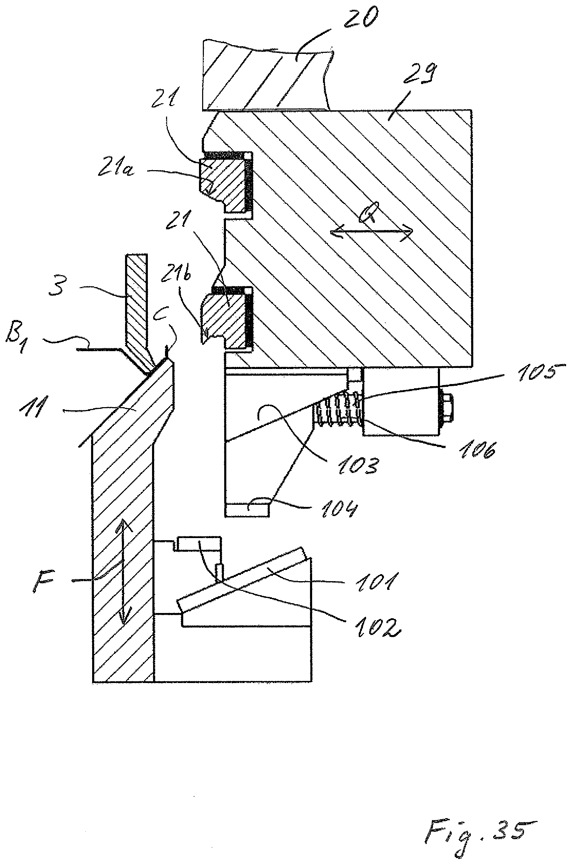

In Figur 35 sind die unmittelbar beim Bördeln zusammenwirkenden Komponenten des vierten Ausführungsbeispiels relativ zueinander in einer Grundstellung dargestellt. In dieser Grundstellung wird das Bauteil B mittels des Niederhalters 3 und im Zusammenwirken der Führungselemente 15 und Führungsgegenelemente 35 eingelegt, d.h. auf der Auflage des Bördelbetts 11 positioniert und mit einem für das Bördeln geeigneten, durch das Zusammenwirken der Spannelemente 16 und Spanngegenelemente 36 erzeugten Niederhaltedruck längs des Flansches C niedergehalten. Optional hält der Niederhalter 3 das Bauteil B auch längs des Fensterschlitzes nieder, bevorzugt mit geringerer Kraft.

Wie in den anderen Ausführungsbeispielen wird auch im vierten Ausführungsbeispiel der Flansch C in zwei nacheinander durchzuführenden Bördelschritten vollständig umgelegt. Im Unterschied zu den anderen Ausführungsbeispielen sind die Bördelflächen 21a und 21b jedoch nicht in Querrichtung Q nebeneinander, sondern in Pressrichtung F übereinander angeordnet. Ferner sind die Bördelflächen 21a und 21b an unterschiedlichen Bördelformen 21 geformt, die Bördelfläche 21a für das Vorbördeln an einer in der Grundstellung vom Bördelbett 11 weiter entfernten, wegen der liegenden Anordnung oberen Bördelform 21 und die Bördelfläche 21b für das Fertigbördeln an einer in der Grundstellung dem Bördelbett 11 näheren, wegen der liegenden Anordnung unteren Bördelform 21. Die Bördelformen 21 sind an einem Bördelformträger 29 angeordnet, der mittels des zugeordneten Antriebs 22 in die Querrichtung Q hin und her beweglich an der Trägerstruktur 20 angeordnet ist.

In Figur 32, in der die Bördelformeinheit 2 im Ganzen dargestellt ist, sind jeweils die Einheiten aus Bördelformträger 29 und Bördelformen 21 in Kombination als Bördelformen 21.i bezeichnet. Jede der Bördelformen 21.i weist im Querschnitt den aus Figur 35 ersichtlichen Aufbau auf. In Abwandlungen könnten auch die übereinander angeordneten Bördelflächen 21a und 21b an der gleichen Bördelform 21 geformt sein. Die Formung an jeweils einer eigenen Bördelform 21 und deren Anordnung in einem Bördelformträger 29 aus einem duktileren Material geht jedoch mit einer Verringerung der Fertigungskosten einher. Die jeweils als Gesamtheit bzw. Einheit bewegbaren Bördelformen 21.i können, wie im Übrigen auch die Bördelformen 21 der anderen Ausführungsbeispiele, als Bördelformbänke angesehen werden. So können in jeweils einer Bördelformbank 21.i nicht nur wie im vierten Ausführungsbeispiel mehrere Bördelformen 21 übereinander, sondern auch mehrere Bördelformen 21 nebeneinander angeordnet sein, um erst gemeinsam, in der Gesamtheit als jeweils eine Bördelformbank 21.i, einen der Abschnitte des jeweiligen Flansches C, zum Beispiel einen der Flanschabschnitte C₁ bis C₃, umzulegen.

Beim Bördeln werden die Bördelhübe durch zusammenwirkende Anschläge mechanisch begrenzt. Mit dem Bördelbett 11 sind ein erster Anschlag 101 und ein zweiter Anschlag 102 zumindest in Pressrichtung F, vorzugsweise absolut unbeweglich verbunden. Mit der Bördelformeinheit 2 (Figur 32) sind in Pressrichtung F unbeweglich ein dritter Anschlag 103 und ein vierter Anschlag 104 unbeweglich verbunden. Beide Anschläge 103 und 104 sind mit dem Bördelformträger 29 und somit den Bördelformen 21 verbunden, so dass sie deren Querbewegungen mitmachen. Der Anschlag 103 ist relativ zu den Bördelformen 21 auch in Querrichtung Q unbeweglich und kann am Bördelformträger 29 insbesondere absolut unbeweglich angeordnet sein. Der Anschlag 104 ist hingegen relativ zu den Bördelformen 21 in Querrichtung Q hin und her längs einer Führung 105 beweglich und wird von einer Feder 106 in eine dem Bördelbett 11 nahe vordere Position gespannt.

Die Anschläge 101 und 103 wirken beim Vorbördeln und die Anschläge 102 und 104 beim Fertigbördeln zusammen, eine Besonderheit besteht noch darin, dass die beim Vorbördeln in Anschlagkontakt gelangenden Anschlagflächen der Anschläge 101 und 103 in Pressrichtung F und Querrichtung Q der Querbeweglichkeit der Bördelformen 21 geneigt sind, im Ausführungsbeispiel einfach schräg. Die Neigung ist allerdings so bemessen, dass die Anschlagfunktion in Pressrichtung F gewährleistet ist.

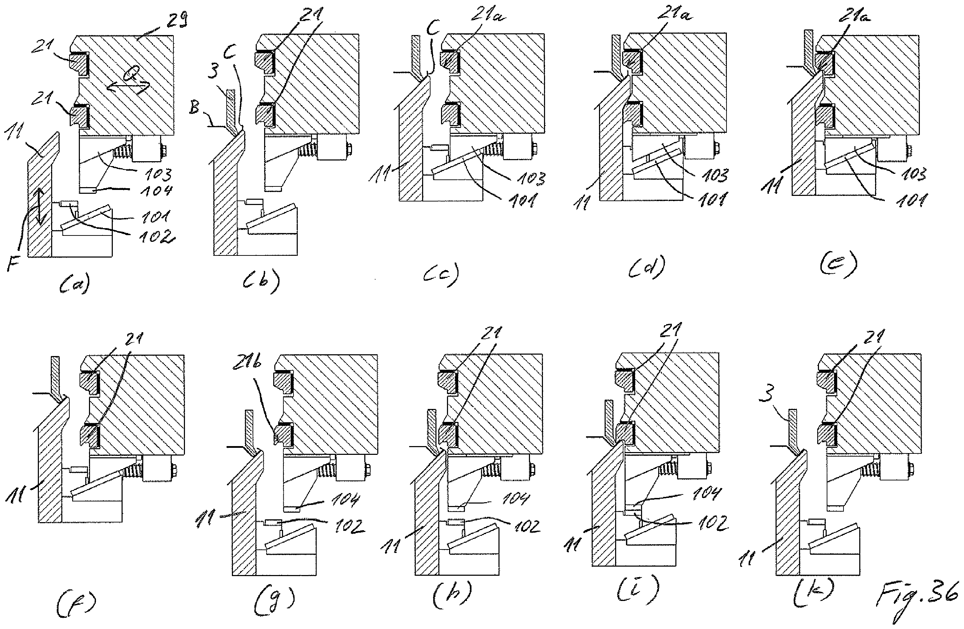

Figur 36 illustriert den Ablauf des Bördelns in einer Sequenz von Bördelschritten (a) bis (k). In (a) nehmen das Bördelbett 11 und die Bördelformeinheiten 21 relativ zueinander die Grundstellung wie in Figur 35 ein. In der Grundstellung wird das Bauteil eingelegt. Figur 36(b) entspricht der Figur 35. Die Bördelpresse befindet sich dementsprechend noch immer in der Grundstellung, allerdings wurde das Bauteil B mittels des Niederhalters 3 eingelegt und wird mittels der Spannelemente 16 und Spannungselemente 36 (Figur 34) in das Bördelbett 11 gedrückt, also niedergehalten.

Aus der Grundstellung werden die Trägerstruktur 10 und damit gemeinsam das Bördelbett 11 mittels des Zusatzantriebs 69 (Figuren 28 und 29) in Pressrichtung F bewegt - im vierten Ausführungsbeispiel der vertikalen Pressrichtung F entsprechend angehoben - bis der Anschlag 101 in Anschlagkontakt mit dem Anschlag 103 gelangt. Die Bördelformen 21 sind bei diesem Zwischenhub noch vom Bördelbett 11 in Querrichtung Q abgerückt bzw. frei.

Figur 36(c) zeigt das Falzbett 11 nach Ausführung des Zwischenhubs in der durch die Anschläge 101 und 103 vorgegebenen Zwischenposition. Der Flansch C liegt der Bördelfläche 21a mit einem gewissen Versatz in Pressrichtung F und in Querrichtung Q beabstandet gegenüber. Der Versatz bezüglich der Pressrichtung F ist so gewählt, dass der Bördelformträger 29 in Querrichtung Q bis in eine vordere Position vorgefahren werden kann, aus der heraus der Vorbördelhub ausgeführt wird.

In Figur 36(d) sind die Bördelformen 21 für das Vorbördeln vorgefahren. Die Anschlagflächen sind in solch einer Richtung geneigt, dass die Anschläge 101 und 102 die Querbewegung erlauben. Ferner erstreckt sich die geneigte Anschlagfläche des Anschlags 101 in Querrichtung Q auf das Bördelbett 11 so weit, dass sich die Anschläge 101 und 103 nach dem Vorfahren der Bördelformen 21 wieder mit einem Abstand in Pressrichtung F gegenüberstehen. Der axiale Abstand der Anschläge 101 und 103 in der neuen Querposition entspricht der Länge des Vorbördelhubs. Das Bördelbett 11 ist in der immer noch eingenommenen Zwischenposition über die Trägerstruktur 10 auf dem Zusatzantrieb 69 (Fig. 26) abgestützt. Der eigentliche Bördelhub, im nächsten Schritt der Vorbördelhub, wird durch den Druckbalg 60 bewirkt, vorzugsweise ausschließlich durch den Druckbalg 60. Dieser wird mit einem Druckfluid, vorzugsweise Druckluft, beaufschlagt und drückt dadurch über die Trägerstruktur 10 das Bördelbett 11 in Pressrichtung F vor. Der Flansch C gelangt im Verlauf des Vorbördelhubs in Presskontakt mit der geneigten Bördelfläche 21a und wird dadurch entsprechend der Neigung der Bördelfläche 21a umgelegt, beispielsweise um etwa 45°.

Figur 36(e) zeigt die Bördelpresse nach Ausführung des Vorbördelhubs. Dieser Bördelhub wird durch einen erneuten Anschlagkontakt der Anschläge 101 und 103 begrenzt.

Zu dem anderen Paar von Anschlägen 102 und 104 ist noch anzumerken, dass dieses Anschlagpaar 102, 104 beim Vorbördeln keine Funktion hat. Damit andererseits die Anschläge 102 und 104 das Vorbördeln nicht behindern können, ist der Anschlag 104 gegen Federkraft in Querrichtung Q beweglich. Bei der Bewegung des Bördelbetts 11 in die Zwischenposition gelangt der Anschlag 104 zunächst in seitliche Überlappung mit dem Anschlag 102, wie sich aus dem Vergleich der Figuren 36(b) und (c) erschließt. Beim anschließenden Vorfahren der Bördelform 21 gibt der Anschlag 104 in Querrichtung Q gegen die Kraft der Feder 106 nach und behindert somit diese Vorfahrbewegung bzw. das Einrücken der Bördelformen 21 in die in Figur (d) eingenommene Position nicht.

Nach dem Vorbördeln wird der Druckbalg 60 entlastet, was im vierten Ausführungsbeispiel durch die Schwerkraft bewirkt werden kann, indem ein Druckfluidauslass des Druckbalgs 60 geöffnet und das Druckfluid durch die auf dem Druckbalg 60 ruhende Last aus dem Druckbalg 60 gedrückt wird. Die Länge dieses Rückhubs entspricht der Länge des Vorbördelhubs. Der Rückhub wird durch den Zusatzantrieb 69 und optional einen oder mehrere interne Anschläge des Druckbalgs 60 begrenzt. Unmittelbar vor dem Entlasten des Druckbalgs 60 werden vorzugsweise die Bördelformantriebe 22 (Figuren 31 und 32) zum Zurückbewegen der Bördelformen 21 gespannt, was insbesondere dann von Vorteil ist, wenn die Bördelformantriebe 22 wie bevorzugt Pneumatikantriebe sind. Wird nach dem Spannen des jeweiligen Bördelformantriebs 22 erst der Druckbalg 60 entlastet, können die Bördelformen 21 rascher vom Bördelbett 11 in Querrichtung Q wegbewegt werden. Das Vorspannen des Bördelformantriebs 22 wird über die schrägen Anschlagflächen der Anschläge 101 und 103 bewirkt, die vor dem Einsetzen der Rückhubbewegung des Bördelbetts 11 keine Querbewegung zulassen. Andererseits wird das Einrücken der Bördelformen 21 durch die schrägen Anschlagflächen gesteuert, so dass die Bördelformen 21 nicht ruckartig und entsprechend mit Stoßbelastung bewegt werden können. Somit werden die Bördelformen 21 vom Bördelbett 11 weg in Querrichtung Q gesteuert zurückgefahren, bis das Bördelbett 11 und die Bördelformen 21 die in Figur 36(f) dargestellte Position relativ zueinander einnehmen.

Vor dem Fertigbördeln wird in einem Zwischenschritt, der in Figur 36(g) dargestellt ist, das Bördelbett 11 aus der Zwischenposition zurück in seine Grundposition bewegt, im Beispiel mittels des Zusatzantriebs 69.

Mit noch in der Grundposition befindlichem Bördelbett 11 werden zum Fertigbördeln die Bördelformen 21 wieder vorgefahren, so dass nun die Bördelfläche 21b in Pressrichtung F dem bereits teilumgelegten Flansch C zugewandt gegenüber steht. Figur 36(h) zeigt das Bördelbett 11 und die Bördelformen 21 in dieser Relativposition. Aus diesem Zustand wird im nächsten Schritt unmittelbar der Fertigbördelhub ausgeführt, indem der Druckbalg 60 erneut mit dem Druckfluid beaufschlagt wird. Die mit der Druckbeaufschlagung einhergehende axiale Expansion des Druckbalgs 60 drückt das Bördelbett 11 in Pressrichtung F in die in Figur 36(i) eingenommene Position. Dieser Bördelhub wird vorzugsweise ausschließlich durch den Druckbalg 60 bewirkt. Bei der Hubbewegung gelangen die Anschläge 102 und 104 in Pressrichtung F gegeneinander in Anschlagkontakt und begrenzen dadurch den Fertigbördelhub. Der Flansch C ist nun vollständig umgelegt.

Nach dem Fertigbördeln wird der Druckbalg 60 im Druck entlastet, vorzugsweise entlüftet, was wieder sehr einfach durch Öffnen seines Druckfluidauslasses wegen der auf ihm ruhenden Strukturen, insbesondere die Trägerstruktur 10 und das Bördelbett 11, aufgrund Schwerkraft erfolgen kann. Nach Absenken des Bördelbetts 11 werden die Bördelformen 21 vom Bördelbett 11 in Querrichtung Q weg zurück in ihre Grundposition bewegt. Die Bördelpresse nimmt wieder ihre Grundstellung ein, wie aus Figur 36(k) ersichtlich ist. Das fertig gebördelte Bauteil B kann mittels des Niederhalters 3 entnommen und das nächste Bauteil B eingelegt werden.

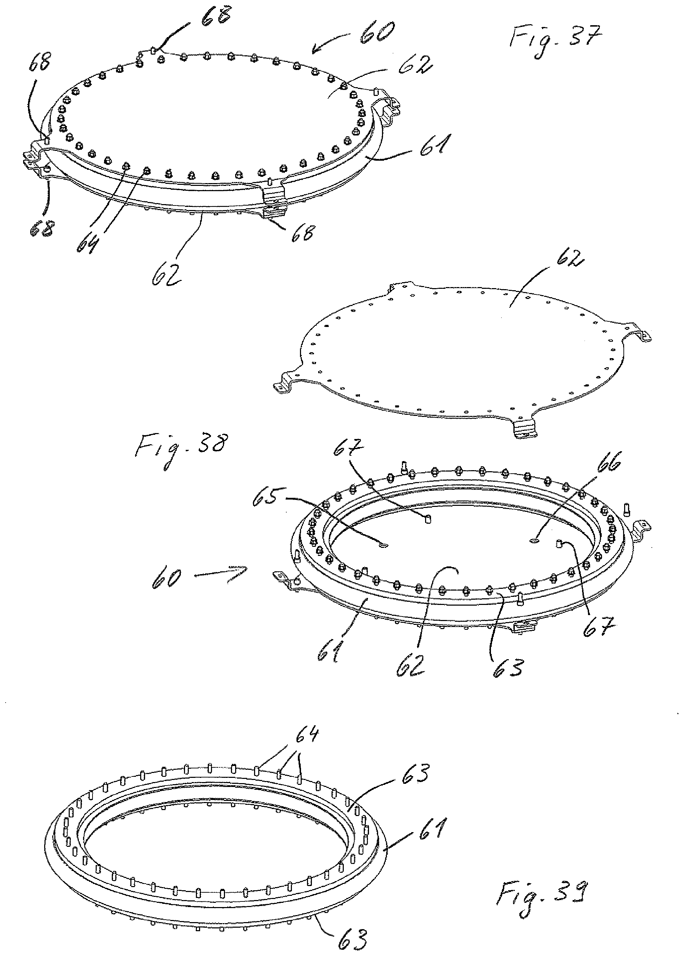

Die Figuren 37 bis 39 zeigen den Druckbalg 60 als solchen, herausgelöst aus der Bördelpresse. Der Druckbalg 60 ist scheiben- oder plattenförmig und weist einen kreisrunden Umfang auf. Ein kreisrunder Querschnitt ist nicht zuletzt im Hinblick auf eine einfache Herstellbarkeit zweckmäßig. Die Lagerstrukturen 62 sind um die Pressachse F umlaufend mittels eng beabstandeter Verbindungselemente 64, die beispielhaft als Schraubbolzen ausgeführt sind, mit der nachgiebigen Balgwand 61 verbunden. Der Druckbalg 60 kann beispielsweise mit der einen Lagerstruktur 62 an der Gestellplatte 100 und mit der axial gegenüberliegenden Lagerstruktur 62 an der Trägerstruktur 10 befestigt sein.

Figur 38 gibt durch Abnahme einer der Lagerstrukturen 62 den Blick in das Innere des Druckbalgs 60 frei. In einer der Lagerstrukturen 62, vorzugsweise in derjenigen, die mit dem Gestell 13 gefügt ist, sind ein Einlass 65 und ein Auslass 66 für das Druckfluid vorgesehen, die wie bevorzugt, aber nur beispielhaft jeweils als ein Durchlass in der Lagerstruktur 62 geformt sind. Ferner ragen von einer der Lagerstrukturen 62 in Richtung auf die andere Lagerstruktur 62 Abstandshalter 67 vor, welche die axiale Kompression des Druckbalgs 60 bei geöffnetem Auslass 66 begrenzen.

Figur 39 zeigt vom Druckbalg 60 nur die ringförmig um die Pressachse F umlaufende Balgwand 61 sowie Anschlussringe 63. Die Anschlussringe 63 sind an den axialen Stirnenden der Balgwand 61 angeordnet und mit der Balgwand 61 fest und fluiddicht gefügt, beispielsweise bei einem Vulkanisieren der Balgwand 61 oder durch Ein- oder Umgießen von Verbindungsstrukturen der Anschlussringe 63 mit einem polymeren, vorzugsweise elastomeren Balgwandmaterial. Die Anschlussringe 63 sind verwindungssteife Ringstrukturen, die sich insbesondere im montierten Zustand praktisch nicht verformen und eine feste, fluiddichte Verbindung der Balgwand 61 mit den Lagerstrukturen 62 oder alternativ mit den relativ zueinander axial zu bewegenden Strukturen, im vierten Ausführungsbeispiel die Gestellplatte 100 und die Trägerstruktur 10, ermöglichen. Von den Anschlussringen 63 ragen hierfür die Verbindungselemente 64, beispielsweise Schraubbolzen, in ausreichender Anzahl und dementsprechend in Umfangrichtung eng voneinander beabstandet axial ab und im montierten Zustand in entsprechende Bohrungen der jeweiligen Struktur ein.

Der Druckbalg 60 wird mittels Positionierelementen 68 der einen Lagerstruktur 62 relativ zum Gestell 13 und mit Positionierelementen 68 der anderen Lagerstruktur 62 relativ zur Trägerstruktur 10 positioniert. Für die Positionierung genügt es, wenn die Positionierelemente 68 mit Positioniergegenelementen des Gestells 13 und Positioniergegenelementen der Trägerstruktur 10 nur formschlüssig zusammenwirken, eine kraftschlüssige Verbindung kann zusätzlich vorgesehen sein, ist jedoch nicht erforderlich. Ein nur formschlüssiger Positioniereingriff erleichtert den Austausch des Druckbalgs im Falle eines Defekts oder einer vorbeugenden Wartungsmaßnahme. Andererseits kann der Druckbalg mit dem Gestell 13 und der Trägerstruktur 10 auch axial fest verbunden sein, um bei einem Hub der Trägerstruktur 10, den der Zusatzantrieb 69 bewirkt, zwangsweise aufzuweiten.

Der Druckbalg 60 ist von dem Einlass 65 und dem Auslass 66 abgesehen in sich geschlossen, bildet also als solcher bereits den Druckraum zur Erzeugung der Presskraft. In Abwandlungen kann eine der Lagerstrukturen 62 oder können beide Lagerstrukturen 62 entfallen und der Druckraum dementsprechend erst durch die Befestigung der Balgwand 61 an einer die betreffende Stirnseite abschließenden Struktur, wie etwa der Gestellplatte 100 oder der Trägerstruktur 10, geschlossen werden. Dies setzt eine entsprechend geschlossene Fläche bei der jeweiligen Struktur voraus. So kann beispielsweise die Gestellplatte 100 ohne Weiteres im Bereich des Druckbalgs 60 eine geschlossene Fläche mit lediglich einem Einlass und einen Auslass für das Druckfluid aufweisen, entsprechend dem Einlass 65 und dem Auslass 66 in der Lagerstruktur 62. Des Weiteren können Abstandshalter entsprechend den Abstandshaltern 67 vorgesehen sein. In derartigen Abwandlungen kann die Balgwand 61 wie in Figur 39 illustriert mittels eines der Anschlussringe 63 mit der jeweiligen Struktur, beispielsweise der Trägerstruktur 10 oder der Gestellplatte 100, fest und fluiddicht gefügt sein, um den abgewandelten Druckbalg 60 zu bilden. In derartigen Abwandlungen bildet einer oder bilden beiden Anschlussringe 63 jeweils eine Lagerstruktur des abgewandelten Druckbalgs 60, der entsprechend erst durch die fluiddichte Befestigung an einer den Druckbalg an der jeweiligen Stirnseite verschließenden Struktur vervollständigt wird.

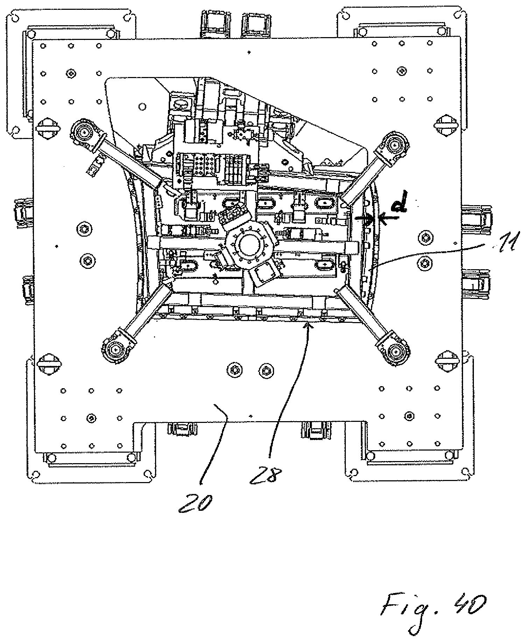

Figur 40 zeigt die Bördelpresse des vierten Ausführungsbeispiels in einer axialen Draufsicht auf die Bördelformeinheit 2. Die Draufsicht zeigt sehr deutlich, wie konturnah der Innenumfang 28 der Trägerstruktur 20 der Kontur des Flansches C bzw. der Auflage des Falzbetts 11 über den gesamten Verlauf des umzulegenden Bauteilflansches folgt. Mit "d" ist der lokale Abstand bezeichnet, den der Innenumfang 28 in axialer Projektion vom äußeren Rand des Bauteils B bzw. der Auflage des Bördelbetts 11 aufweist. Der Hebelarm, über den die im Bereich der jeweiligen Bördelfläche 21a oder 21b wirkende Presskraft in die Trägerstruktur 20 eingeleitet wird, ist dem Abstand d entsprechend klein. Die Presskraft F wird im Kraftfluss ausgehend vom Druckbalg 60 bis zur Trägerstruktur 20 zum weit überwiegenden Teil nur axial und somit nur als Kraft übertragen und nur in einem vernachlässigbaren Ausmaß über Biegemomente. Der lokale Abstand d zwischen dem Flansch C und dem Innenumfang 28, an dem die jeweilige Bördelform 21 beim Umlegen des Flansches C noch axial abgestützt wird, entweder wie im vierten Ausführungsbeispiel über einen Bördelformträger 29 oder wie in den anderen Ausführungsbeispielen direkt, beträgt über die Länge des Flansches C überall vorteilhafterweise weniger als 8 cm, bevorzugter weniger als 5 cm.

Soweit im Vorstehenden zum vierten Ausführungsbeispiel keine Unterschiede im Vergleich zum ersten Ausführungsbeispiel erläutert werden, gelten hinsichtlich der Merkmale der Komponenten der Bördelpresse, einschließlich des Niederhalters, und deren Zusammenwirken die Ausführungen zum ersten Ausführungsbeispiel. Es können grundsätzlich auch Komponenten der Bördelpresse des ersten Ausführungsbeispiels und der Bördelpresse des zweiten Ausführungsbeispiels ausgetauscht werden, wobei auf damit einhergehende Detailanpassungen nicht eingegangen werden muss. So kann beispielsweise auch im vierten Ausführungsbeispiel eine Bördelform 21 mit quer zur Pressrichtung nebeneinander angeordneten Bördelflächen 21a und 21b anstelle der übereinander angeordneten Bördelformen 21 verwendet werden. In solch einer Abwandlung kann beispielsweise auf den Zusatzantrieb 69 verzichtet werden. Umgekehrt können übereinander angeordnete Bördelformen 21 entsprechend des vierten Ausführungsbeispiels die Bördelform des ersten Ausführungsbeispiels ersetzen. Im vierten Ausführungsbeispiel kann in noch einer Abwandlung der Druckbalg 60 alleine sämtliche Bewegungen in Pressrichtung F bewirken, der Zusatzantrieb 69 also entfallen. Andererseits ist es vorteilhaft, wenn der Druckbalg 60 nur für einen kurzen axialen Hub ausgelegt werden muss.

Die Bördelformeinheit 2 kann mittels einer Hubeinrichtung, etwa eines Deckenkrans, nach Lösen der festen Verbindung mit dem Gestell 13 von diesem abgehoben, gewendet und im gewendeten Zustand wieder auf dem Gestell 13, im Ausführungsbeispiel auf Säulen des Gestells 13, abgelegt werden. Dies erleichtert eine eventuell erforderliche Endbearbeitung oder spätere Nachbearbeitung der Bördelformen 21, wie etwa ein Einschleifen oder Nachschleifen. In einer Weiterentwicklung kann die Bördelpresse einen Hubmechanismus aufweisen, mittels dem die Bördelformeinheit 2 in Pressrichtung F vom Bördelbett 11 weg bewegt werden kann, um nach dem Wegbewegen ausreichend Freiraum für eine derartige End- oder Nachbearbeitung der Bördelformen 21 oder sonstige Arbeiten an der Bördelformeinheit 2 oder einer anderen Komponente der Bördelpresse zu erhalten. So können in Ausführungen mit äußeren Stützsäulen, wie im vierten Ausführungsbeispiel, diese Stützsäulen axial teleskopierbar ausgeführt sein und mittels eines entsprechenden Antriebs aus- und eingefahren werden. Bei dem Antrieb kann es sich um einen elektrischen, pneumatischen oder hydraulischen Antrieb handeln. Ist die Pressrichtung F wie im vierten Ausführungsbeispiel vertikal, werden beispielsweise die Bördelformen 21 im ausgefahrenen Zustand der Bördelformeinheit 2 "von unten" bearbeitet. Ist die Pressrichtung horizontal, wie in den anderen Ausführungsbeispielen, kann von der Seite her gearbeitet werden.

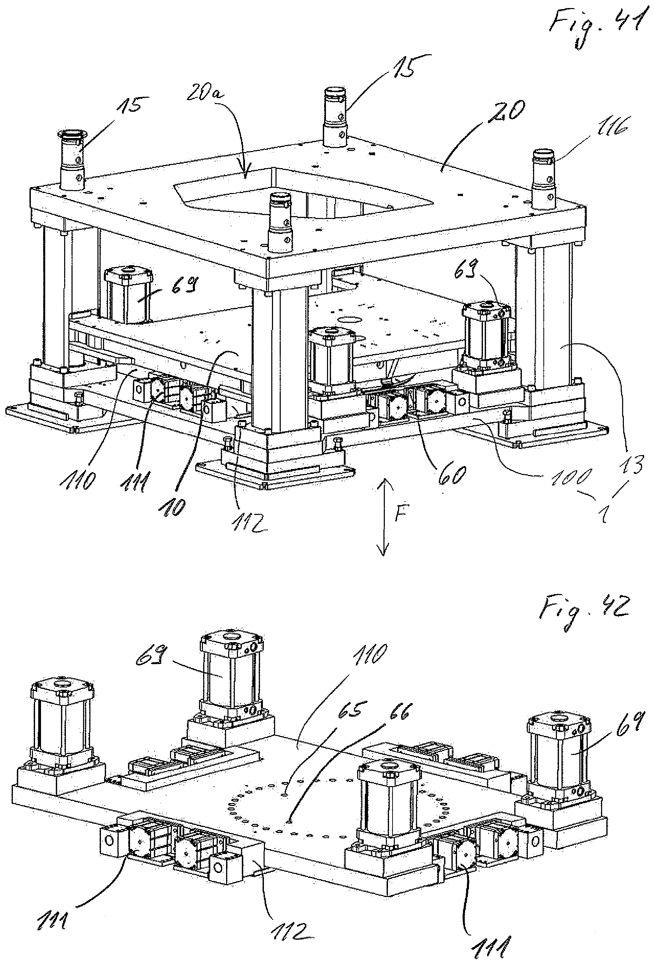

Figur 41 zeigt Bestandteile einer Bördelpresse eines fünften Ausführungsbeispiels in einer perspektivischen Sicht. Die Bördelpresse des fünften Ausführungsbeispiels ist eine Weiterentwicklung der Bördelpresse des vierten Ausführungsbeispiels. Funktionsgleiche Bestandteile sind mit den gleichen Bezugsziffern wie im vierten Ausführungsbeispiel bezeichnet. Soweit keine Ausführungen gemacht werden, entspricht die Bördelpresse des fünften Ausführungsbeispiels derjenigen des vierten Ausführungsbeispiels, so dass die Beschreibung des vierten Ausführungsbeispiels zu allen nicht beschriebenen Aspekten des fünften Ausführungsbeispiels in Bezug genommen wird.

Die Bördelpresse des fünften Ausführungsbeispiels weist zusätzlich zur Bördelpresse des vierten Ausführungsbeispiels eine Hubträgerstruktur 110 auf, die relativ zur Basisstruktur 1 und relativ zur Bördelformeinheit 2, von der nur die Trägerstruktur 20 dargestellt ist, beweglich ist. Die Hubträgerstruktur 110 ist an der Basisstruktur 1, beispielhaft an der Gestell-Trägerstruktur 100, in Bezug auf ihre axiale Beweglichkeit abgestützt. Im Beispiel ist sie zwischen der wie im vierten Ausführungsbeispiel als Gestellplatte gebildeten Gestell-Trägerstruktur 100 und der Trägerstruktur 10 angeordnet. Der Druckbalg 60 ist axial, wobei die axiale Richtung der Pressrichtung F entspricht, zwischen der Trägerstruktur 10 und der Hubträgerstruktur 110 angeordnet. Eine Expansion des Druckbalgs 60 bewirkt dementsprechend, dass sich der axiale Abstand zwischen der Hubträgerstruktur 110 und der Trägerstruktur 10 vergrößert. Im Ausführungsbeispiel ist der Druckbalg 60 wie bevorzugt, aber nur beispielhaft, axial an einer Seite unmittelbar an der Hubträgerstruktur 110 und an der axial gegenüberliegenden Seite unmittelbar an der Trägerstruktur 10 befestigt.

Die Hubträgerstruktur 110 ist wie bevorzugt, aber nur beispielhaft plattenförmig. Die Hubträgerstruktur 110 führt den zum vierten Ausführungsbeispiel beschriebenen Zwischenhub vollständig oder zumindest einen Teil des Zwischenhubs aus. In Bezug auf den Zwischenhub wird auf die vorstehende Beschreibung insbesondere der anhand der Figur 36 beschriebenen Bördelsequenz verwiesen. Im vierten Ausführungsbeispiel verändert sich die axiale Höhe und somit das Volumen des Innenraums des Druckbalgs 60 bei sämtlichen Hubbewegungen, die das Bördelbett 11 und die Bördelformen 21 axial relativ zueinander ausführen. Im vierten und auch im fünften Ausführungsbeispiel sind dies der Zwischenhub und die eigentlichen Bördelhübe, nämlich der Vorbördelhub und der Fertigbördelhub. Der Druckbalg 60 expandiert im vierten Ausführungsbeispiel daher wenigstens einmal proportional zur Summe der Längen des Zwischenhubs und des eigentlichen Bördelhubs. Entsprechend groß ist die unter Arbeitsdruck im Innenraum des Druckbalgs 60 befindliche Druckfluidmenge. Indem der Druckbalg 60 im fünften Ausführungsbeispiel aufgrund der Bewegung der Hubträgerstruktur 110 bei Ausführung des Zwischenhubs nicht mehr expandiert wird, verringert sich der Durchsatz der Druckfluidmenge.

Die Hubträgerstruktur 110 wird mittels des Zusatzantriebs 69 axial bewegt, im Ausführungsbeispiel aufgrund der liegenden Anordnung angehoben. Der Rückhub kann durch Schwerkraft bewirkt oder unterstützt werden. Die vorzugsweise mehreren Antriebseinheiten des Zusatzantriebs 69 können wie im vierten Ausführungsbeispiel elektrische, hydraulische oder insbesondere pneumatische Antriebseinheiten sein.

Um den Zusatzantrieb 69 zu unterstützen, umfasst die Bördelpresse des fünften Ausführungsbeispiels ferner eine Stützeinrichtung mit mehreren Stützantrieben 111 und damit gekoppelten Stützkörpern 112. Die Stützantriebe 111 bewegen die Stützkörper 112 unter die Hubträgerstruktur 110, wenn diese den Zwischenhub ausgeführt hat, um die Hubträgerstruktur 110 im ausgefahrenen Zustand mechanisch abzustützen. Hierdurch wird der Zusatzantrieb 69 vom Gewicht und der vom Druckbalg 60 aufzubringenden Presskraft entlastet. Anderenfalls müsste der Zusatzantrieb 69 ausreichend stark dimensioniert oder in bevorzugt pneumatischer Ausführung intern mechanisch blockiert bzw. verriegelt werden.

Figur 42 zeigt die Hubträgerstruktur 110 und die Stützantriebe 111 und Stützkörper 112 herausgelöst aus der Bördelpresse und relativ zueinander in den in Figur 41 eingenommenen Grundpositionen. Erkennbar sind auch die Befestigungselemente, im Beispiel Sack- oder Durchgangsbohrungen, gegebenenfalls mit Innengewinde, zur Befestigung des Druckbalgs 60. Der Druckbalg 60 kann insbesondere wie zu den anderen Ausführungsbeispielen erläutert, etwa wie in den Figuren 37 bis 39 illustriert, ausgebildet sein. Die Hubträgerstruktur 110 weist entsprechend einen Einlass 65 und einen Auslass 66 für das Druckfluid auf.

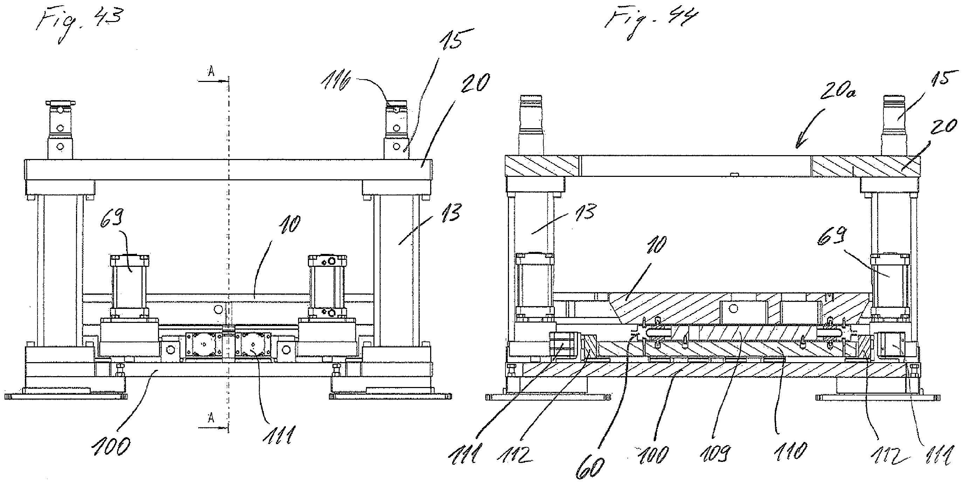

Figur 43 zeigt die in Figur 41 dargestellten Bestandteile der Bördelpresse des fünften Ausführungsbeispiels in einer Seitenansicht und Figur 44 in dem Schnitt A-A der Figur 43. Die Bördelpresse, soweit dargestellt, befindet sich im Grundzustand. Die Trägerstruktur 10 und die Hubträgerstruktur 110 nehmen jeweils eine Grundposition ein, der Druckbalg 60 ist im Druck entlastet. Für die Ausführung des Zwischenhubs, der vorstehend anhand der in Figur 36 dargestellten Sequenz beschrieben wird, bewegt der Zusatzantrieb 69 die Hubträgerstruktur 110 und damit gemeinsam den Druckbalg 60 und die Trägerstruktur 10 mit dem Bördelbett 11, etwa des vierten Ausführungsbeispiels (Figuren 26 bis 40), in Richtung auf die Bördelformeinheit 2, von der lediglich die Trägerstruktur 20 dargestellt ist.

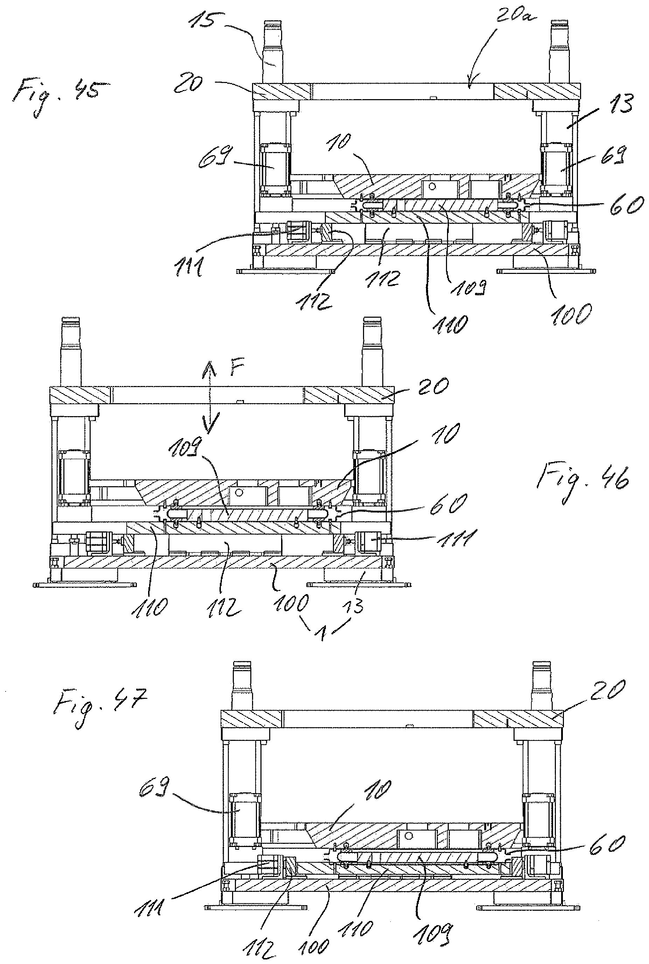

Figur 45 zeigt die Hubträgerstruktur 110, den Druckbalg 60 und die Trägerstruktur 10 nach Ausführung des gemeinsamen Zwischenhubs. Die Stützkörper 112 wurden bereits durch die Stützantriebe 111 unter die Hubträgerstruktur 110 bewegt und stützen diese an der Gestell-Trägerstruktur 100 ab, um den Zusatzantrieb 69 zu entlasten.

Figur 46 zeigt die Bördelpresse nach Ausführung eines Bördelhubs, im Ausführungsbeispiel des Vorbördelhubs. Für die Ausführung des Bördelhubs wird der Druckbalg 60 mit dem Druckfluid beaufschlagt, so dass der Druckbalg 60 axial expandiert. Bei der Expansion stützt sich der Druckbalg 60 zur einen Seite an der Hubträgerstruktur 110 ab, und ist über diese sowie die Stützkörper 112 an der Basisstruktur 1 abgestützt. Die Expansion des Druckbalgs 60 bewirkt somit eine Hubbewegung der Trägerstruktur 10 und damit gemeinsam des nicht dargestellten Bördelbetts 11 relativ zur Bördelformeinheit 2, von der wie bereits erwähnt stellvertretend nur die Trägerstruktur 20 dargestellt ist. Nach Ausführung des Bördelhubs, hier des Vorbördelhubs, werden die Stützkörper 112 aus dem Bereich der Hubträgerstruktur 110 bewegt, so dass sich diese unter Schwerkraft oder unter dem Einfluss des Zusatzantriebs 69, der den Rückhub zweckmäßigerweise dämpft, zurück in ihre Grundposition bewegen kann. Der Druckbalg 60 wird im Druck entlastet, und die Bördelformen werden zurückbewegt.

In Figur 47 ist der Druckbalg 60 bereits wieder mit dem Druckfluid beaufschlagt. Der betreffende Bördelhub, im Beispiel der Fertigbördelhub, wurde somit bereits ausgeführt. Dies entspricht dem Zustand, der in Figur 36 (i) dargestellt ist. Die Bördelpresse des fünften Ausführungsbeispiels kann die gleiche Bördelsequenz wie die Bördelpresse des vierten Ausführungsbeispiels ausführen, so dass auf die Ausführungen zur Figur 36 verwiesen wird. Es muss im Unterschied zum vierten Ausführungsbeispiel allerdings der Druckbalg 60 axial nicht so weit expandiert werden wie im vierten Ausführungsbeispiel, da der Zwischenhub von der Hubträgerstruktur 110 und dem Druckbalg 60 gemeinsam ausgeführt werden und der Druckbalg 60 dementsprechend im Ganzen axial bewegt und vorzugsweise hierbei nicht aufgeweitet wird.

Die Hubträgerstruktur 110 bewirkt im vierten Ausführungsbeispiel den Zwischenhub. Die Aufteilung der Hubbewegung des Bördelbetts 11 in eine gemeinsame Hubbewegung von Hubträgerstruktur 110 und Druckbalg 60 und eine Aufweitbewegung des Druckbalgs 60 ist auch in Ausführungen vorteilhaft, in denen ein Zwischenhub nicht erforderlich ist. Grundsätzlich könnte auch der eigentliche Bördelhub in der gleichen Weise aufgeteilt werden, um den Druckfluiddurchsatz bzw. -verbrauch zu reduzieren. In Serienfertigungen und einer entsprechend großen Zahl auszuführender Hubbewegungen ist die Ersparnis beträchtlich.

Die Druckfluidmenge kann weiter oder alternativ auch mit Hilfe eines oder mehrerer Füllkörper gesenkt werden, die im Innenraum des Druckbalgs 60 angeordnet sein können. Anhand des fünften Ausführungsbeispiels ist dies in den Figuren 44 bis 47 illustriert. Im Innenraum des Druckbalgs 60 ist ein relativ großer Füllkörper 109 angeordnet, der mehr als 50 % des Volumens des Innenraums des Druckbalgs 60 ausfüllt, bezogen auf den Zustand der im Pressenbetrieb maximalen Expansion des Druckbalgs 60. Der Verbrauch an Druckfluid kann dem Volumenanteil des Füllkörpers 109 oder der gegebenenfalls mehreren Füllkörper entsprechend reduziert werden. Der Füllkörper 109 kann ferner die Funktion eines Abstandshalters für den druckentlasteten Zustand des Druckbalgs 60 erfüllen. In den Figuren 44 und 45 ist dies illustriert.

Im fünften Ausführungsbeispiel sind im Unterschied zum vierten die Führungselemente 15 innerhalb der als Hohlstrukturen ausgeführten Säulen des Gestells 13 angeordnet. Hierdurch kann Bauraum quer zur Pressrichtung F und somit Stellfläche eingespart werden. Ferner können die Säulen des Gestells 13 die Trägerstruktur 10 oder die Hubträgerstruktur 110 axial führen. Die axiale Abstützung erfolgt vorzugsweise an der Gestell-Trägerstruktur 100, kann alternativ oder zusätzlich aber ebenfalls an den Säulen des Gestells 13 vorgenommen werden.

Abgewandelt sind ferner auch die Spannelemente, die für den Eingriff mit Spanngegenelementen des Niederhalters keiner Drehbewegung mehr bedürfen. Die mit 116 bezeichneten Spannelemente sind vielmehr als umfangsseitige, quer zur Pressrichtung F erstreckte Vertiefungen oder Durchgänge gebildet, in die Spanngegenelemente des Niederhalters einfahren können. Der Niederhalter ist nur in dieser Hinsicht vom Niederhalter der vorher erläuterten Beispiele abgewandelt.

Im Übrigen entspricht die Bördelpresse des fünften Ausführungsbeispiels derjenigen des vierten Ausführungsbeispiels, insbesondere hinsichtlich der nicht dargestellten Bestandteile der Bördelpresse.

### Bezugszeichen:

- 1: Basisstruktur
- 2: Bördelformeinheit
- 3: Niederhalter
- 4: Bördelformeinheit
- 5: Niederhalter
- 6: Gestell
- 7: Stützstruktur
- 8: Basisstruktur
- 9: Schwenkantrieb
- 10: Trägerstruktur
- 10a: Ausleger
- 11: Bördelbett
- 12: Bördelbett
- 13: Gestell
- 13a: Führungsgegenelement
- 14: Pressantrieb
- 15: Führungselement
- 16: Spannelement
- 17: Spannantrieb
- 18: Verstärkung
- 19: Drehführungselement
- 20: Trägerstruktur
- 20a: Durchgang
- 21: Bördelform
- 21a: Bördelfläche
- 21b: Bördelfläche
- 22: Bördelformantrieb
- 23: Stütze
- 24: Antriebsflansch
- 25: Führungsgegenelement
- 26: Führung
- 27: Anschlagfläche
- 28: Innenumfang
- 29: Bördelformträger
- 30: Trägerstruktur
- 31: Niederhalterand
- 32: vorstehender Bereich
- 33: zurückstehender Bereich
- 34: Befestigungseinrichtung
- 35: Führungsgegenelement
- 36: Spanngegenelement
- 37: Kröpfung
- 38: -
- 39: -
- 40: Trägerstruktur
- 41: Bördelform
- 42: Bördelformantrieb
- 44: Antriebsflansch
- 45: Führungsgegenelement
- 50: Trägerstruktur
- 51: Niederhalterand
- 55: Führungsgegenelement
- 60: Balg
- 61: Balgwand
- 62: Lagerstruktur
- 63: Anschlussring, Lagerstruktur
- 64: Verbindungselement
- 65: Einlass
- 66: Auslass
- 67: Abstandshalter
- 68: Positionierelement
- 69: Zusatzantrieb
- 70: Zusatzbördeleinrichtung
- 71: Bördelschieber
- 72: Schieberantrieb
- 100: Gestell-Trägerstruktur, Gestellplatte
- 101: Anschlag
- 102: Anschlag
- 103: Gegenanschlag
- 104: Gegenanschlag
- 105: Führung
- 106: Feder
- 107: -
- 108: -
- 109: Füllkörper
- 110: Hubträgerstruktur
- 111: Stützantrieb
- 112: Stützkörper
- 114: -
- 115: -
- 116: Spannelement

- B: Bauteil
- C: Flansch
- C₁: Seitenrandflansch
- C₂: Unterseitenrandflansch
- C₃: Seitenrandflansch
- F: Pressrichtung, Pressachse
- Q: Querrichtung
- S: Schwenkachse

## Patentansprüche

1. Bördelpresse zum Umlegen eines Flansches eines Bauteils, vorzugsweise eines Fahrzeugteils, die stationär angeordnet ist und wenigstens Folgendes umfasst:
(a) eine Basisstruktur (1) mit einem Bördelbett (11), an welches das Bauteil (B) zum Umlegen des Flansches (C) in eine Pressrichtung (F) gepresst werden kann,
(b) eine Bördelformeinheit (2) mit einer Bördelform (21) zum Umlegen des Flansches (C)
(c) und einen Pressantrieb (60) zur Erzeugung einer zum Umlegen auf das Bauteil (B) wirkenden Presskraft,
(d) wobei die Bördelform (21) und das Bördelbett (11) mittels des Pressantriebs (60) relativ zueinander in Pressrichtung (F) beweglich sind, um die Presskraft auszuüben,
(e) wobei der Pressantrieb (60) einen mit Druckfluid, vorzugsweise Druckgas, beaufschlagbaren Balg (60) umfasst, der bei Druckbeaufschlagung in Pressrichtung (F) auf die Bördelformeinheit (2) oder das Bördelbett (11) wirkt und dadurch zumindest einen Teil der Presskraft erzeugt,
(f) und der Druckbalg (60) eine quer zur Pressrichtung (F) erstreckte, mit dem Druckfluid beaufschlagbare Balgfläche (62) aufweist,
**dadurch gekennzeichnet, dass**
(h) ein Niederhalter (3) zum Niederhalten des Bauteils (B) beim Bördeln vorgesehen ist,
der Niederhalter (3) einen Niederhalterand (31) zum Kontaktieren des Bauteils (B) und einen an den Niederhalterand (31) grenzenden Bereich aufweist und
der an den Niederhalterand grenzende Bereich des Niederhalters (3) und die wenigstens eine Bördelform (21) so geformt sind, dass die wenigstens eine Bördelform (21) beim Bördeln den Niederhalterand (31) des Niederhalters (3) quer zur Pressrichtung (F) und zum Flansch überlappen kann.

2. Bördelpresse nach dem vorhergehenden Anspruch, **dadurch gekennzeichnet, dass** die Balgfläche (62) so groß ist, dass die zum Bördeln erforderliche Presskraft bei Anschluss des Druckbalgs (60) an eine Druckluftquelle, die Druckluft mit einem Druck von 20 bar oder weniger liefert, vorzugsweise 6 bar oder weniger liefert, durch den Druckbalg (60) aufbringbar ist.

3. Bördelpresse nach einem der vorhergehenden Ansprüche, **dadurch gekennzeichnet, dass** der Druckbalg (60) eine nachgiebige Balgwand (61), eine erste Balglagerstruktur (62; 63) und eine zweite Balglagerstruktur (62; 63) aufweist, von denen eine die mit dem Druckfluid beaufschlagbare Balgfläche (62) bilden kann, die nachgiebige Balgwand (61) um eine Pressachse (F) umläuft, die erste Balglagerstruktur (62; 63) an einer der Stirnseiten der nachgiebigen Balgwand (61) und die zweite Balglagerstruktur (62; 63) an der anderen Stirnseite der nachgiebigen Balgwand (61) angeordnet ist und die Balglagerstrukturen (62, 63) jeweils fest, vorzugsweise fluiddicht, mit der nachgiebigen Balgwand (61) verbunden sind.

4. Bördelpresse nach dem vorhergehenden Anspruch, **dadurch gekennzeichnet, dass** wenigstens eine der Balglagerstrukturen (62, 63) dem Verlauf eines stirnseitigen Rands der Balgwand (61) um die Pressachse (F) umlaufend folgt, in einer Stirnansicht auf die jeweilige Balglagerstruktur (62; 63) entweder nur längs eines äußeren Umfangs oder in Form eines schlanken Streifens, wobei vorzugsweise wenigstens eine (62) der Balglagerstrukturen (62, 63) den Druckbalg (60) an einer Stirnseite fluiddicht abschließt.

5. Bördelpresse gemäß einem der vorhergehenden Ansprüche, **dadurch gekennzeichnet, dass** in einem mit dem Druckfluid beaufschlagbaren Innenraum des Druckbalgs (60) ein oder mehrere Füllkörper (109) angeordnet sind und der oder die Füllkörper (109) das Volumen des Innenraums im Vergleich zum ansonsten gleichen Innenraum ohne Füllkörper bezogen auf den im Betrieb der Bördelpresse maximal expandierten Druckbalg (60) um wenigstens 20%, vorzugsweise wenigstens 30%, noch bevorzugter wenigstens 40% oder mehr, verringern, um die Menge des benötigten Druckfluids zu reduzieren.

6. Bördelpresse nach einem der vorhergehenden Ansprüche, **dadurch gekennzeichnet, dass** das Bördelbett (11) oder die Bördelformeinheit (2) über dem Druckbalg (60) angeordnet und mittels des Druckbalgs (60) zum Umlegen des Flansches (C) anhebbar ist, wobei der Druckbalg (60) unter Schwerkraft oder mittels eines Zusatzantriebs (69) zum Wiederabsenken des Bördelbetts (11) oder der Bördelformeinheit (2) im Druck entlastet werden kann.

7. Bördelpresse nach einem der vorhergehenden Ansprüche, **dadurch gekennzeichnet, dass** die Bördelformeinheit (2) einen Durchgang (20a) aufweist, durch den das Bauteil (B) von einer dem Bördelbett (11) abgewandten Rückseite der Bördelformeinheit (2) aus in das Bördelbett (11) eingelegt werden kann, und die Bördelform (21) an einem den Durchgang (20a) teilweise oder über 360° vollständig umgebenden Innenumfang (28) der Bördeformeinheit (2) angeordnet ist, wobei vorzugsweise mehrere Bördelformen (21) längs des Innenumfangs (28) nebeneinander angeordnet sind, wobei die Bördelformeinheit (2) vorzugsweise eine rahmenartige Trägerstruktur (20) umfasst, die den Durchgang (20a) wie ein Rahmen zumindest teilweise umgibt.

8. Bördelpresse nach dem vorhergehenden Anspruch, **dadurch gekennzeichnet, dass** der Innenumfang (28) der Kontur des Flansches (C) konturnah folgt und in axialer Projektion auf das Bördelbett (11) von der Kontur des Flansches (C) einen Abstand (d) aufweist, der über die gesamte Länge des Flansches (C) jeweils höchstens 8 cm, vorzugsweise höchstens 6 cm beträgt.

9. Bördelpresse nach dem vorhergehenden Anspruch, **dadurch gekennzeichnet, dass** die Bördelformen (21) beim Umlegen des Flansches (C) auf den Flansch (C) jeweils eine Presskraft ausüben und am Innenumfang (28) der Trägerstruktur (20) in Pressrichtung (F) abgestützt sind und dass der Abstand zwischen der Presskraft der jeweiligen Bördelform (21) und dem Innenumfang (28) und somit der jeweils pro Bördelform (21) wirksame Hebelarm eine in Querrichtung (Qᵢ) gemessene Länge von höchstens 8 cm, vorzugsweise höchstens 5 cm, hat.

10. Bördelpresse nach einem der vorhergehenden Ansprüche, **dadurch gekennzeichnet, dass** die Bördelpresse einen Bördelschieber (71) umfasst, der quer zur Pressrichtung (F) in Überlappung mit dem Falzbett (11) bewegbar ist, um einen Flansch (C) in einen Schlitz des Bauteils (B) umlegen zu können.

11. Bördelpresse nach einem der vorhergehenden Ansprüche, **dadurch gekennzeichnet, dass** die Bördelpresse einen Bauteilsauger umfasst, mittels dem das Bauteil (B) im Bördelbett (11) durch Saugkraft in Position gehalten werden kann, und der Bauteilsauger eine Saugkammer aufweist, die seitlich von einer Seitenwandstruktur, an deren Stirnseite das Bördelbett (11) angeordnet oder geformt ist, und an einer Stirnseite von dem Bauteil (B) begrenzt wird.

12. Bördelpresse nach einem der vorhergehenden Ansprüche, **dadurch gekennzeichnet, dass** an der Basisstruktur (1) ein in Pressrichtung (F) erstrecktes Führungselement (15) und an der Bördelformeinheit (2) ein in Pressrichtung (F) erstrecktes Führungsgegenelement (25) vorgesehen ist und die Basisstruktur (1) und die Bördelformeinheit (2) mittels eines Führungseingriffs von Führungs- und Führungsgegenelement (15, 25) in Pressrichtung (F) relativ zueinander geführt werden, vorzugsweise linear.

13. Bördelpresse nach einem der vorhergehenden Ansprüche, **dadurch gekennzeichnet, dass** die Basisstruktur (1) oder die Bördelformeinheit (2) ein erstes Spannelement (16; 116) und der Niederhalter (3) ein zweites Spannelement (36) aufweist, die miteinander in einen Spanneingriff bringbar sind, um den Niederhalter (3) zum Niederhalten des Bauteils (B) im Spanneingriff relativ zum Bördelbett (11) in Pressrichtung (F) zu spannen.

14. Bördelpresse nach Anspruch 13, **dadurch gekennzeichnet, dass** eines der Spannelemente (16) an dem Führungselement (15) in Pressrichtung (F) abgestützt ist oder unmittelbar vom Führungselement (15) gebildet wird.

15. Bördelpresse nach einem der vorhergehenden Ansprüche, wobei der Niederhalter (3) eine Befestigungseinrichtung (34) für die Befestigung an einem im Raum beweglichen Aktor und eine Halteeinrichtung zum Halten des Bauteils (B) aufweist, so dass das Bauteil (B) mittels des Niederhalters (3) zur Bördelpresse bewegt und in das Bördelbett (11) gelegt werden kann.

16. Bördelpresse nach dem vorhergehenden Anspruch, **dadurch gekennzeichnet, dass** die Basisstruktur (1) oder die Bördelformeinheit (2) ein Führungselement (15) und der Niederhalter (3) ein Führungsgegenelement (35) aufweist, um den Niederhalter (3) beim Einlegen des Bauteils (B) mittels Führungseingriff des Führungselements (15) und des Führungsgegenelements (35) des Niederhalters (3) relativ zu dem Bördelbett (11) zu führen, vorzugsweise in Pressrichtung (F), wobei das Führungselement (15) für den Niederhalter (3) vorzugsweise auch das Führungselement (15) des Anspruchs 12 für die Bördelformeinheit (2) ist.

17. Verfahren zum Umlegen eines Flansches eines Bauteils, vorzugsweise eines Fahrzeugteils, mittels einer Bördelpresse nach einem der Ansprüche 7 bis 16, bei dem
(a) das Bauteil (B) mittels eines im Raum beweglichen Aktors durch den Durchgang (20a) in Richtung auf das Bördelbett (11), vorzugsweise bis gegen das Bördelbett (11) bewegt
(b) und mittels des Aktors oder einer Spanneinrichtung (16, 36; 116) in das Bördelbett (11) gelegt, vorzugsweise gedrückt wird
(c) und der Flansch (C) durch einen Presshub, den die Bördelformeinheit (2) gemeinsam mit der Bördelform (21) ausführt, umgelegt wird.

18. Verfahren nach dem vorhergehenden Anspruch, bei dem
(d) der Niederhalter (3) am Aktor befestigt ist und das Bauteil (B) bei der Bewegung durch den Durchgang (20a) und dem Einlegen in das Bördelbett (11) hält
(e) und beim Bördeln im Bördelbett (11) niederhält.

## Claims

1. A flanging press for folding over a flange of a component, preferably a vehicle part, wherein the flanging press is arranged in a stationary manner and comprises at least:
(a) a base structure (1) featuring a flanging bed (11) onto which the component (B) can be pressed in a pressing direction (F) in order to fold over the flange (C);
(b) a flanging die unit (2) featuring a flanging die (21) for folding over the flange (C);
(c) and a pressing drive (60) for generating a pressing force which acts on the component (B) for the purpose of folding over;
(d) wherein the flanging die (21) and the flanging bed (11) can be moved relative to each other in the pressing direction (F) by means of the pressing drive (60) in order to exert the pressing force;
(e) wherein the pressing drive (60) comprises a bellows (60) which can be charged with pressure fluid, preferably pressurised gas, and acts on the flanging die unit (2) or flanging bed (11) in the pressing direction (F) when charged with pressure, thus generating at least some of the pressing force,
(f) and the pressure bellows (60) comprises a bellows area (62) which extends transverse to the pressing direction (F) and which can be charged with the pressure fluid,
**characterised in that**
(g) a suppressor (3) is provided for holding down the component (B) during flanging, the suppressor (3) comprises a holding-down edge (31) for contacting the component (B), and a region which borders the holding-down edge (31), and the region of the suppressor (3) which borders the holding-down edge, and the at least one flanging die (21), are shaped such that the at least one flanging die (21) can overlap the holding-down edge (31) of the suppressor (3) transverse to the pressing direction (F) and transverse to the flange during flanging.

2. The flanging press according to the preceding claim, **characterised in that** the bellows area (62) is large enough that the pressing force necessary for flanging can be applied through the pressure bellows (60) when the pressure bellows (60) is connected to a pressurised air source which delivers pressurised air at a pressure of 20 bars or less, preferably 6 bars or less.

3. The flanging press according to any one of the preceding claims, **characterised in that**: the pressure bellows (60) comprises a flexible bellows wall (61), a first bellows mounting structure (62; 63) and a second bellows mounting structure (62; 63), one of which can form the bellows area (62) which can be charged with the pressure fluid; the flexible bellows wall (61) encircles a pressing axis (F); the first bellows mounting structure (62; 63) is arranged on one of the end-facing sides of the flexible bellows wall (61), and the second bellows mounting structure (62; 63) is arranged on the other end-facing side of the flexible bellows wall (61); and the bellows mounting structures (62, 63) are each fixedly connected, preferably in a fluidic seal, to the flexible bellows wall (61).

4. The flanging press according to the preceding claim, **characterised in that** at least one of the bellows mounting structures (62, 63) follows the profile of an end-facing side edge of the bellows wall (61), circumferentially around the pressing axis (F), in an end-facing view onto the respective bellows mounting structure (62; 63) either along an outer circumference only or in the form of a thin strip, wherein at least one (62) of the bellows mounting structures (62, 63) preferably closes off the pressure bellows (60) in a fluidic seal on one end-facing side.

5. The flanging press according to any one of the preceding claims, **characterised in that** one or more filler bodies (109) are arranged in an interior space of the pressure bellows (60) which can be charged with the pressure fluid, and the filler body or bodies (109) reduce the volume of the interior space, as compared to an otherwise identical interior space with no filler bodies, by at least 20%, preferably at least 30%, even more preferably at least 40% or more in relation to the maximally expanded pressure bellows (60) when the flanging press is in operation, in order to reduce the amount of pressure fluid required.

6. The flanging press according to any one of the preceding claims, **characterised in that** the flanging bed (11) or the flanging die unit (2) is arranged over the pressure bellows (60) and can be raised by means of the pressure bellows (60) in order to fold over the flange (C), wherein the pressure bellows (60) can be relieved of pressure by gravity or by means of an additional drive (69) in order to lower the flanging bed (11) or the flanging die unit (2) again.

7. The flanging press according to any one of the preceding claims, **characterised in that** the flanging die unit (2) comprises a passage (20a) through which the component (B) can be inserted into the flanging bed (11) from a rear side of the flanging die unit (2) which faces away from the flanging bed (11), and the flanging die (21) is arranged on an inner circumference (28) of the flanging die unit (2) which surrounds the passage (20a) partially or completely over 360°, wherein multiple flanging dies (21) are preferably arranged next to each other along the inner circumference (28), wherein the flanging die unit (2) preferably comprises a frame-like bearing structure (20) which surrounds the passage (20a) at least partially, in the manner of a frame.

8. The flanging press according to the preceding claim, **characterised in that** the inner circumference (28) follows the contour of the flange (C) close-to-contour, and in an axial projection onto the flanging bed (11) exhibits a distance (d) from the contour of the flange (C) of at most 8 cm, preferably at most 6 cm, over the entire length of the flange (C) respectively.

9. The flanging press according to the preceding claim, **characterised in that** the flanging dies (21) each exert a pressing force on the flange (C) when the flange (C) is being folded over and are supported in the pressing direction (F) on the inner circumference (28) of the bearing structure (20), and **in that** the distance between the pressing force of the respective flanging die (21) and the inner circumference (28) and therefore the respectively effective lever arm per flanging die (21) has a length, as measured in the transverse direction (Qᵢ), of at most 8 cm, preferably at most 5 cm.

10. The flanging press according to any one of the preceding claims, **characterised in that** the flanging press comprises a flanging slider (71) which can be moved transverse to the pressing direction (F) in an overlap with the hemming bed (11), in order to be able to fold over a flange (C) into a slot of the component (B).

11. The flanging press according to any one of the preceding claims, **characterised in that** the flanging press comprises a component sucker, by means of which the component (B) can be held in position in the flanging bed (11) by a suction force, and the component sucker comprises a suction chamber which is laterally defined by a side wall structure, on the end-facing side of which the flanging bed (11) is arranged or formed, and on an end-facing side by the component (B).

12. The flanging press according to any one of the preceding claims, **characterised in that** a guiding element (15) which extends in the pressing direction (F) is provided on the base structure (1), and a guiding counter element (25) which extends in the pressing direction (F) is provided on the flanging die unit (2), and the base structure (1) and the flanging die unit (2) are guided relative to each other in the pressing direction (F), preferably linearly, by means of a guiding engagement between the guiding element (15) and guiding counter element (25).

13. The flanging press according to any one of the preceding claims, **characterised in that** the base structure (1) or the flanging die unit (2) comprises a first tensing element (16; 116), and the suppressor (3) comprises a second tensing element (36), which can be brought into tensing engagement with each other in order to tense the suppressor (3) in the pressing direction (F) relative to the flanging bed (11), for holding down the component (B) in the tensing engagement.

14. The flanging press according to Claim 13, **characterised in that** one of the tensing elements (16) is supported in the pressing direction (F) on the guiding element (15) or is formed directly by the guiding element (15).

15. The flanging press according to any one of the preceding claims, wherein the suppressor (3) comprises a fastening device (34) for fastening to an actuator which can be spatially moved, and a holding device for holding the component (B), such that the component (B) can be moved to the flanging press and placed into the flanging bed (11) by means of the suppressor (3).

16. The flanging press according to the preceding claim, **characterised in that** the base structure (1) or the flanging die unit (2) comprises a guiding element (15) and the suppressor (3) comprises a guiding counter element (35) in order to guide the suppressor (3), preferably in the pressing direction (F), relative to the flanging bed (11) by means of a guiding engagement between the guiding element (15) and the guiding counter element (35) of the suppressor (3) while it is inserting the component (B), wherein the guiding element (15) for the suppressor (3) is preferably also the guiding element (15) of Claim 12 for the flanging die unit (2).

17. A method for folding over a flange of a component, preferably a vehicle part, by means of a flanging press according to any one of Claims 7 to 16, wherein
(a) the component (B) is moved through the passage (20a) towards the flanging bed (11), preferably up to and against the flanging bed (11), by means of an actuator which can be spatially moved
(b) and placed, preferably pressed, into the flanging bed (11) by means of the actuator or a tensing device (16, 36; 116),
(c) and the flange (C) is folded over by a pressing stroke which the flanging die unit (2) performs together with the flanging die (21).

18. The method according to the preceding claim, wherein
(d) the suppressor (3) is fastened to the actuator and holds the component (B) while it is moved through the passage (20a) and inserted into the flanging bed (11)
(e) and holds it down in the flanging bed (11) during flanging.

## Revendications

1. Presse de bordage pour replier une bride d'une pièce, de préférence d'une partie de véhicule, qui est disposée de manière stationnaire et qui comprend au moins ce qui suit :
(a) une structure de base (1) avec un lit de bordage (11) contre lequel la pièce (B) peut être comprimée dans une direction de pressage (F) pour replier la bride (C),
(b) une unité à forme de bordage (2) avec une forme de bordage (21) pour replier la bride (C),
(c) et un entraînement de presse (60) pour la production d'une force de pressage agissant, pour replier, sur la pièce (B),
(d) dans laquelle la forme de bordage (21) et le lit de bordage (11) peuvent être déplacés au moyen de l'entraînement de la presse (60) l'un par rapport à l'autre dans la direction de pressage (F), afin d'exercer la force de pressage,
(e) dans laquelle l'entraînement de la presse (60) comprend un soufflet (60), pouvant être alimenté en fluide sous pression, de préférence en gaz sous pression, qui agit, lors d'une alimentation en pression dans la direction de pressage (F), sur l'unité à forme de bordage (2) ou sur le lit de bordage (11) et génère ainsi au moins une partie de force de pressage,
(f) et le soufflet à pression (60) comprend une surface de soufflet (62) s'étendant transversalement par rapport à la direction de pressage (F), pouvant être alimentée en fluide sous pression,
**caractérisée en ce que**
(h) un serre-flan (3) est prévu pour le maintien de la pièce (B) lors du bordage, le serre-flan (3) comprend un bord de serre-flan (31) pour la mise en contact de la pièce (B) et une partie adjacente au bord de serre-flan et
la partie adjacente au bord de serre-flan du serre-flan (3) et l'au moins une forme de bordage (21) sont formées de façon à ce que l'au moins une forme de bordage (21) puisse, lors du bordage, se superposer avec le bord de serre-flan(31) du serre-flan (3) transversalement par rapport à la direction de pressage (F) et à la bride.

2. Presse de bordage selon la revendication précédente, **caractérisée en ce que** la surface du soufflet (62) est assez grande pour appliquer, à l'aide du soufflet de pression (60), la force de pressage nécessaire au bordage lors du raccordement du soufflet de pression (60) à une source d'air comprimé, qui délivre un air comprimé avec une pression de 20 bar ou moins, de préférence de 6 bar ou moins.

3. Presse de bordage selon l'une des revendications précédentes, **caractérisée en ce que** le soufflet de pression (60) comprend une paroi de soufflet flexible (61), une première structure de palier de soufflet (62 ; 63) et une deuxième structure de palier de soufflet (62 ; 63), dont une peut former la surface de soufflet (62) pouvant être alimentée en fluide sous pression, la paroi de soufflet flexible (61) tournant autour d'un axe de presse (F), la première structure de palier de soufflet (62 ; 63) étant disposée au niveau d'une des faces frontales de la paroi de soufflet flexible (61) et la deuxième structure de palier de soufflet (62 ; 63) étant disposée au niveau de l'autre face frontale de la paroi de soufflet flexible (61) et les structures de paliers de soufflets (62, 63) étant reliées chacune, de préférence de manière étanche aux fluides, avec la paroi de soufflet flexible (61).

4. Presse de bordage selon la revendication précédente, **caractérisée en ce qu'**au moins une des structures de paliers de soufflets (62, 63) suit l'extension d'un bord frontal de la paroi de soufflet (61) en tournant autour de l'axe de presse (F), en vue frontale sur la structure de palier de soufflet (62 ; 63) soit uniquement le long d'une circonférence externe ou sous la forme d'une bande étroite, de préférence au moins une (62) des structures de paliers de soufflets (62, 63) terminant de manière étanche aux fluides le soufflet de pression (60) au niveau d'une face frontale.

5. Presse de bordage selon l'une des revendications précédentes, **caractérisée en ce que**, dans un espace interne, pouvant être alimenté en fluide sous pression, du soufflet de pression (60), sont disposés un ou plusieurs matériaux de remplissage (109) et le ou les matériaux de remplissage (109) réduisent le volume de l'espace interne par rapport au même espace interne sans matériaux de remplissage, en référence au soufflet de pression (60) dilaté au maximum lors du fonctionnement de la presse de bordage, d'au moins 20 %, de préférence d'au moins 30 %, de préférence d'au moins 40 %, afin de réduire la quantité de fluide sous pression nécessaire.

6. Presse de bordage selon l'une des revendications précédentes, **caractérisée en ce que** le lit de bordage (11) ou l'unité à forme de bordage (2) est disposé(e) au-dessus du soufflet de pression (60) et peut être soulevé (e) au moyen du soufflet de pression (60) pour replier la bride (C), le soufflet de pression (60) pouvant être déchargé en pression sous l'effet de la gravité ou au moyen d'un entraînement supplémentaire (69) pour rabaisser le lit de bordage (11) ou l'unité à forme de bordage (2).

7. Presse de bordage selon l'une des revendications précédentes, **caractérisée en ce que** l'unité à forme de bordage (2) comprend un passage (20a) à travers lequel la pièce (B) peut être insérée dans le lit de bordage (11), à partir d'un côté arrière de l'unité à forme de bordage (2), opposé au lit de bordage (11), et la forme de bordage (21) est disposée sur une circonférence interne (28) de l'unité à forme de bordage (2) entourant partiellement ou entièrement sur 360° le passage (20a), dans laquelle de préférence plusieurs formes de bordage (21) sont juxtaposées le long de la circonférence interne (28), dans laquelle l'unité à forme de bordage (2) comprend de préférence une structure porteuse (20) de type cadre, qui entoure au moins partiellement le passage (20a) à la manière d'un cadre.

8. Presse de bordage selon la revendication précédente, **caractérisée en ce que** la circonférence interne (28) suit étroitement le contour de la bride (C) et présente, en projection axiale sur le lit de bordage (11), par rapport au contour de la bride (C), une distance (d) qui est, sur toute la longueur de la bride (C) de 8 cm maximum, de préférence de 6 cm maximum.

9. Presse de bordage selon la revendication précédente, **caractérisée en ce que** les formes de bordage (21) exercent chacune, lors du repliage de la bride (C), sur la bride (C), une force de pressage et sont appuyées contre la circonférence interne (28) de la structure porteuse (20) dans la direction de pressage (F) et **en ce que** la distance entre la force de pressage de la forme de bordage (21) correspondante et la circonférence interne (28) et donc le bras de levier agissant pour chaque forme de bordage (21) présente une longueur, mesurée dans la direction transversale (Qᵢ), de 8 cm maximum, de préférence de 5 cm maximum.

10. Presse de bordage selon l'une des revendications précédentes, **caractérisée en ce que** la presse de bordage comprend un curseur de bordage (71) qui est mobile transversalement par rapport à la direction de pressage (F) en superposition avec le lit de sertissage (11), afin de pouvoir replier une bride (C) dans une fente de la pièce (B).

11. Presse de bordage selon l'une des revendications précédentes, **caractérisée en ce que** la presse de bordage comprend un aspirateur de pièce au moyen duquel la pièce (B) peut être maintenue en position dans le lit de bordage (11) à l'aide d'une force d'aspiration, et l'aspirateur de pièce comprend une chambre d'aspiration qui est délimitée latéralement par une structure de paroi latérale, au niveau de la face frontale de laquelle le lit de bordage (11) est disposé ou formé, et, au niveau d'une face frontale, par la pièce (B).

12. Presse de bordage selon l'une des revendications précédentes, **caractérisée en ce que**, sur la structure de base (1), est prévu un élément de guidage (15) s'étendant dans la direction de pressage (F) et, au niveau de l'unité à forme de bordage (2), est prévu un contre-élément de guidage (25) s'étendant dans la direction de pressage (F) et la structure de base (1) et l'unité à forme de bordage (2) étant guidées l'une par rapport à l'autre dans la direction de pressage (F), de préférence de manière linéaire, au moyen d'un emboîtement de guidage de l'élément et du contre-élément de guidage (15, 25).

13. Presse de bordage selon l'une des revendications précédentes, **caractérisée en ce que** la structure de base (1) ou l'unité à forme de bordage (2) comprend un premier élément de serrage (16 ; 116) et le serre-flan (3) comprend un deuxième élément de serrage (36), qui peuvent être mis en emboîtement de serrage entre eux, afin de serrer le serre-flan (3) pour retenir la pièce (B) en emboîtement de serrage par rapport au lit de bordage (11) dans la direction de pressage (F).

14. Presse de bordage selon la revendication 13, **caractérisée en ce qu'**un des éléments de serrage (16) est appuyé contre l'élément de guidage (15) dans la direction de pressage (F) ou est constitué directement par l'élément de guidage (15).

15. Presse de bordage selon l'une des revendications précédentes, dans lequel le serre-flan (3) comprend un dispositif de fixation (34) pour la fixation à un actionneur mobile dans l'espace et un dispositif de maintien pour le maintien de la pièce (B) de façon à ce que la pièce (B) se déplace au moyen du serre-flan (3) vers la presse de bordage et puisse être posée dans le lit de bordage (11).

16. Presse de bordage selon la revendication précédente, **caractérisée en ce que** la structure de base (1) ou l'unité à forme de bordage (2) comprend un élément de guidage (15) et le serre-flan (3) comprend un contre-élément de guidage (35), afin de guider le serre-flan (3) lors de l'insertion de la pièce (B) au moyen d'un emboîtement de guidage de l'élément de guidage (15) et du contre-élément de guidage (35) du serre-flan (3) par rapport au lit de bordage (11), de préférence dans la direction de pressage (F), dans laquelle l'élément de guidage (15) pour le serre-flan (3) est de préférence également l'élément de guidage (15) de la revendication 12 pour l'unité à forme de bordage (2).

17. Procédé pour replier une bride d'une pièce, de préférence d'une partie de véhicule, au moyen d'une presse de bordage selon l'une des revendications 7 à 16, dans lequel
(a) la pièce (B) se déplace, au moyen d'un actionneur mobile dans l'espace, à travers le passage (20a) en direction du lit de bordage (11), de préférence jusque contre le lit de bordage (11),
(b) et posé, de préférence comprimé, au moyen de l'actionneur ou d'un dispositif de serrage (16, 36 ; 116), dans le lit de bordage (11),
(c) et la bride (C) est repliée à l'aide d'une course de pressage que l'unité à forme de bordage (2) effectue conjointement avec la forme de bordage (21).

18. Procédé selon la revendication précédente, dans lequel
(d) le serre-flan (3) est fixé à l'actionneur et maintient la pièce (B) lors du déplacement à travers le passage (20a) et de l'insertion dans le lit de bordage (11)
(e) et la maintient vers le bas dans le lit de bordage (11) lors du bordage.
